(19) Europäisches Patentamt
European Patent Office
Office européen des brevets

(11) EP 2 148 926 B1

(12) **EUROPÄISCHE PATENTSCHRIFT**

(45) Veröffentlichungstag und Bekanntmachung des Hinweises auf die Patenterteilung:
**11.03.2015 Patentblatt 2015/11**

(21) Anmeldenummer: **08735309.0**

(22) Anmeldetag: **14.04.2008**

(51) Int Cl.:
***C12N 15/82*** (2006.01) ***A01N 43/56*** (2006.01)

(86) Internationale Anmeldenummer:
**PCT/EP2008/003104**

(87) Internationale Veröffentlichungsnummer:
**WO 2008/125362 (23.10.2008 Gazette 2008/43)**

(54) **BEKÄMPFUNG VON SCHÄDLINGEN DURCH KOMBINATION VON INSEKTIZIDEN UND TRANSGENEN PFLANZEN MITTELS BLATT- UND DRENCHANWENDUNG**

CONTROLLING PESTS BY COMBINING INSECTICIDES AND TRANSGENIC PLANTS BY APPLYING DIRECTLY TO LEAVES AND ROOTS

LUTTE CONTRE DES PARASITES PAR COMBINAISON D'INSECTICIDES ET DE PLANTES TRANSGÉNIQUES PAR ARROSAGE DES FEUILLES ET DU PIED

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **17.04.2007 DE 102007018452**

(43) Veröffentlichungstag der Anmeldung:
**03.02.2010 Patentblatt 2010/05**

(60) Teilanmeldung:
**12178000.1 / 2 534 951**

(73) Patentinhaber: **Bayer Intellectual Property GmbH**
**40789 Monheim am Rhein (DE)**

(72) Erfinder:
- **ANDERSCH, Wolfram**
  **51469 Bergisch Gladbach (DE)**
- **FUNKE, Christian**
  **42799 Leichlingen (DE)**
- **HUNGENBERG, Heike**
  **40764 Langenfeld (DE)**
- **THIELERT, Wolfgang**
  **51519 Odenthal (DE)**

(74) Vertreter: **BIP Patents**
**c/o Bayer Intellectual Property GmbH**
**Alfred-Nobel-Straße 10**
**40789 Monheim am Rhein (DE)**

(56) Entgegenhaltungen:
**WO-A-2005/048711**
**WO-A-2005/107468**
**WO-A-2006/007595**
**WO-A-2006/068669**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Bekämpfung von Schädlingen durch Kombination von Insektiziden und transgenen Pflanzen und dadurch eine Verbesserung der Nutzung des Produktionspotentials transgener Pflanzen

Der Anteil transgener Pflanzen in der Landwirtschaft ist in den letzten Jahren deutlich gestiegen, wenn auch regionale Unterschiede derzeit noch erkennbar sind. So hat sich beispielsweise der Anteil an transgenem Mais in den USA seit 2001 von 26% auf 52% verdoppelt, während transgener Mais in Deutschland bisher kaum eine praktische Rolle spielt. In anderen europäischen Ländern, beispielsweise in Spanien, liegt der Anteil an transgenem Mais aber bereits bei etwa 12%.

Transgene Pflanzen werden vor allem eingesetzt, um das Produktionspotential der jeweiligen Pflanzensorte bei möglichst geringem Einsatz von Produktionsmitteln möglichst günstig zu nutzen. Die genetische Veränderung der Pflanzen zielt dazu vor allem darauf ab, in den Pflanzen eine Resistenz gegen bestimmte Schädlinge oder Schadorganismen oder aber auch Herbizide sowie gegen abiotischen Stress (beispielsweise Dürre, Hitze oder erhöhte Salzgehalte) zu erzeugen. Ebenso kann eine Pflanze genetisch modifiziert werden, um bestimmte Qualitäts- oder Produktmerkmale, wie z.B. den Gehalt an ausgewählten Vitaminen oder Ölen, zu erhöhen oder bestimmte Fasereigenschaften zu verbessern.

Eine Herbizidresistenz bzw. -toleranz kann beispielsweise durch den Einbau von Genen in die Nutzpflanze zur Expression von Enzymen zur Detoxifikation bestimmter Herbizide erreicht werden, die somit selbst in Gegenwart dieser Herbizide zur Bekämpfung von Unkräutern und Ungräsern möglichst ungehindert wachsen können. Als Beispiele seien Baumwoll-Sorten bzw. Mais-Sorten genannt, die den herbiziden Wirkstoff Glyphosate (Roundup®), (Roundup Ready®, Monsanto) oder die Herbizide Glufosinate oder Oxynil tolerieren.

In jüngerer Zeit wurden zudem Nutzpflanzen entwickelt, die zwei oder mehrere genetische Veränderungen enthalten ("stacked transgenic plants" oder mehrfach-transgene Kulturen). So hat beispielsweise die Firma Monsanto mehrfach-transgene Maissorten entwickelt, die gegen den Maiszünsler (*Ostrinia nubilalis*) und den Maiswurzelbohrer (*Diabrotica virgifera)* resistent sind. Ebenso sind Mais- oder Baumwollkulturen bekannt, die sowohl gegen den Maiswurzelbohrer bzw. den Baumwollkapselwurm resistent sind als auch das Herbizid Roundup® tolerieren.

Es hat sich nunmehr gezeigt, dass sich die Nutzung des Produktionspotentials transgener Nutzpflanzen nochmals verbessern läßt, wenn die Pflanzen mit einer Mischung aus einem Wirkstoff der Formel (I) und einem Wirkstoff aus der Gruppe II behandelt werden. Dabei schließt der Begriff "Behandlung" alle Maßnahmen ein, die zu einem Kontakt zwischen diesen Wirkstoffmischungen und mindestens einem Pflanzenteil führen. Unter "Pflanzenteilen" sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Saatgut.

Es ist bereits bekannt, dass Verbindungen der Formel (I) eine insektizide Wirkung aufweisen (z.B. aus WO 03/015519 und WO 04/067528) und in Mischungen eingesetzt werden können (z.B. aus WO 05/048711, WO 05/107468, WO 06/007595, WO 06/068669). Auf diese Dokumente wird hiermit ausdrücklich Bezug genommen.

Die erfindungsgemäß einsetzbaren Mischungen weisen einen Wirkstoff der Formel (I) wie folgt auf:

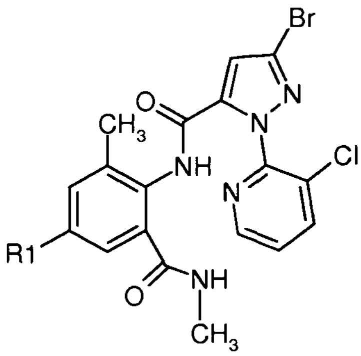

(I)

wobei

R1 für Cl oder Cyano steht

und mindestens einen der folgenden Wirkstoffe aus der Gruppe (II).

Die in dieser Beschreibung mit ihrem "common name" genannten Wirkstoffe sind beispielsweise aus "The Pesticide Manual" 13th Ed., British Crop Protection Council 2003, und der Webseite http://www.alanwood.net/pesticides bekannt.

Bevorzugt sind Mischungen, welche den Wirkstoff der Formel (I-1) aufweisen

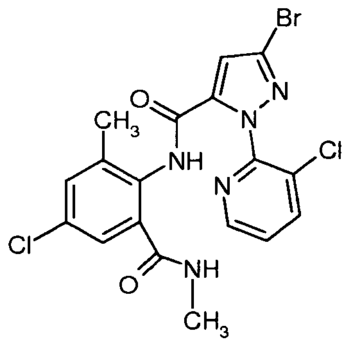

(I-1)

und mindestens einen der folgenden Wirkstoffe aus der Gruppe II.

Ebenso bevorzugt sind Mischungen, welche den Wirkstoff der Formel (I-2) aufweisen

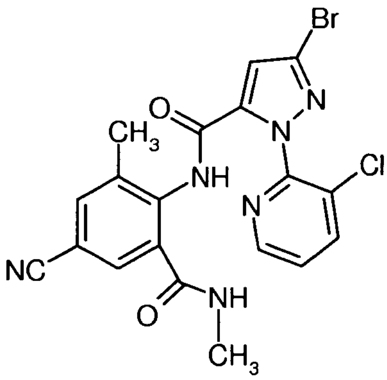

(I-2)

und mindestens einen der folgendenWirkstoffe aus der Gruppe II.

Die Wirkstoffe der Gruppe II sind , ausgewählt aus der Gruppe bestehend ausImidacloprid, Thiodicarb, Clothianidin, Methiocarb, Thiacloprid, Thiamethoxam, Fipronil, Tefluthrin, BetaCyfluthrin, Abamectin oder Spinosad.

Insbesondere bevorzugt sind die folgenden Mischungen, welche
den Wirkstoff der Formel I-1 und Imidacloprid;
den Wirkstoff der Formel 1-1 und Clothianidin;
den Wirkstoff der Formel I-2 und Imidacloprid;
den Wirkstoff der Formel I-2 und Clothianidin
enthalten.

Die Wirkstoffkombinationen können darüber hinaus auch weitere fungizid, akarizid oder insektizid wirksame Zumischpartner enthalten.

Im Allgemeinen enthalten die erfindungsgemäßen Mischungen einen Wirkstoff der Formel (I) und einen Wirkstoff aus der Gruppe (II) in den angegebenen bevorzugten und besonders bevorzugten Mischungsverhältnissen:

Das bevorzugte Mischungsverhältnis beträgt 250:1 bis 1:50.

Das besonders bevorzugte Mischungsverhältnis beträgt 125:1 bis 1:50.

Das ganz besonders bevorzugte Mischungsverhältnis beträgt 25:1 bis 1:25.

Das insbesonders bevorzugte Mischungsverhältis beträgt 5:1 bis 5:1.

Die Mischungsververhältnisse basieren auf Gewichtsverhältnissen. Das Verhältnis ist zu verstehen als Wirkstoff der Formel (I): Mischpartner aus der Gruppe (II) bis Wirkstoff der Formel (I): Mischpartner aus der Gruppe (II).

| | Mischpartner | besonders bevorzugtes Mischungsverhältnis | ganz besonders bevorzugtes Mischungsverhältnis | insbesonders bevorzugtes Mischungsverhältnis |
|---|---|---|---|---|
| 1. | Betacyfluthrin | 125:1 bis 1:50 | 25:1 bis 1:25 | 5:1 bis 1:5 |
| 2. | Imidacloprid | 125:1 bis 1:50 | 25:1 bis 1:25 | 5:1 bis 1:5 |
| 3. | Thiamethoxam | 125:1 bis 1:50 | 25:1 bis 1:25 | 5:1 bis 1:5 |
| 4. | Thiacloprid | 125:1 bis 1:50 | 25:1 bis 1:25 | 5:1 bis 1:5 |
| 5. | Clothianidin | 125:1 bis 1:50 | 25:1 bis 1:25 | 5:1 bis 1:5 |
| 6. | Fipronil | 125:1 bis 1:50 | 25:1 bis 1:25 | 5:1 bis 1:5 |
| 7. | Abamectin | 125:1 bis 1:50 | 25:1 bis 1:25 | 5:1 bis 1:5 |
| 8. | Spinosad | 125:1 bis 1:50 | 25:1 bis 1:25 | 5:1 bis 1:5 |

Gemäß dem erfindungsgemäß vorgeschlagenen Verfahren werden transgene Pflanzen, insbesondere Nutzpflanzen mit den erfindungsgemäßen Mischungen behandelt, um die landwirtschaftliche Produktivität zu steigern. Bei transgenen Pflanzen im Sinne der Erfindung handelt es sich um Pflanzen, die mindestens ein "Fremdgen" enthalten. Der Begriff "Fremdgen" bedeutet in diesem Zusammenhang ein Gen oder Genfragment, das von einer anderen Pflanze derselben Spezies, von Pflanzen unterschiedlicher Spezies, aber auch von Organismen aus dem Reich der Tiere oder Mikroorganismen (einschließlich Viren) stammt oder abgeleitet ist ("Fremdgen") und/oder ggf. bereits im Vergleich zu einem natürlich vorkommenden Gen oder Genfragment Mutationen aufweist. Auch die Verwendung synthetischer Gene oder Genfragmente ist erfindungsgemäß möglich und wird hier ebenso unter den Terminus "Fremdgen" subsumiert. Es ist auch möglich, dass eine transgene Pflanze zwei oder mehr Fremdgene unterschiedlicher Herkunft enthält.

Das "Fremdgen" im Sinne der Erfindung ist des weiteren dadurch gekennzeichnet, dass es eine Nukleinsäuresequenz umfasst, die in der transgenen Pflanze eine bestimmte biologische oder chemische Funktion bzw. Aktivität ausübt. In der Regel codieren diese Gene Biokatalysatoren, wie z.B. Enzyme oder Ribozyme, oder aber umfassen regulatorische Sequenzen, wie beispielsweise Promotoren oder Terminatoren zur Beeinflussung der Expression endogener Proteine. Dazu können sie aber auch regulatorische Proteine codieren wie beispielsweise Repressoren oder Induktoren. Das Fremdgen kann des weiteren ebenso der gezielten Lokalisation eines Genprodukts der transgenen Pflanze dienen und dazu beispielsweise ein Signalpeptid codieren. Auch Inhibitoren, wie beispielsweise antisense-RNA können durch das Fremdgen codiert werden.

Vielfältige Verfahren zur Herstellung transgener Pflanzen sowie Verfahren zur gezielten Mutagenese, zur Gentransformation und Klonierung sind dem Fachmann ohne weiteres bekannt, so beispielsweise aus: Willmitzer, 1993, Transgenic plants, In: Biotechnology, A Multivolume Comprehensive Treatise, Rehm et al. (eds.), Vol.2, 627-659, VCH Weinheim, Germany; McCormick et al., 1986, Plant Cell Reports 5 : 81-84; EP-A 0221044; EP-A 0131624, oder Sambrook et al., 1989, "Molecular Cloning: A Laboratory Manual", 3rd Ed., Cold Spring Harbor Laboratory Press, Cold Spring Harbor, NY; Winnacker, 1996, "Gene und Klone", 2. Aufl., VCH Weinheim oder Christou, 1996, Trends in Plant Science 1 : 423-431. Beispiele für Transit- oder Signalpeptide oder zeit- oder ortspezifische Promotoren sind z.B. in Braun et al., 1992, EMBO J. 11 : 3219-3227; Wolter et al., 1988, Proc. Natl. Acad. Sci. USA 85 : 846-850; Sonnewald et al., 1991, Plant J. 1 : 95-106 offenbart.

Ein Beispiel für eine komplexe genetische Manipulation einer Nutzpflanze ist die so genannte GURT-Technologie ("Genetic Use Restriction Technologies"), die der technischen Kontrolle der Vermehrung der jeweiligen transgenen Pflanzensorte dient. Dazu werden in der Regel zwei oder drei Fremdgene in die Nutzpflanze einkloniert, die in einem komplexen Wechselspiel nach der Gabe eines externen Stimulus eine Kaskade auslösen, die zum Absterben des sich anderenfalls entwickelnden Embryos führt. Der externe Stimulus (beispielsweise ein Wirkstoff oder ein anderer chemischer oder abiotischer Reiz) kann dazu beispielsweise mit einem Repressor interagieren, der damit nicht mehr die Expression einer Rekombinase unterdrückt, so dass die Rekombinase einen Inhibitor spalten kann und damit die Expression eines Toxins erlaubt, das das Absterben des Embryos bewirkt. Beispiele für diese Art der transgenen Pflanzen sind in US 5,723,765 oder US 5,808,034 offenbart.

Dem Fachmann sind demnach Verfahren zur Generierung transgener Pflanzen bekannt, die aufgrund der Integration regulatorischer Fremdgene und der damit ggf. vermittelten Überexpression, Suppression oder Inhibierung endogener Gene oder Gensequenzen oder der Existenz oder Expression von Fremdgenen oder deren Fragmente veränderte Eigenschaften aufweisen.

Wie bereits oben ausgeführt, ermöglicht das erfindungsgemäße Verfahren eine Verbesserung der Ausnutzung des Produktionspotentials transgener Pflanzen. Dies kann einerseits ggf. darauf zurückzuführen sein, dass die Aufwandmenge der erfindungsgemäß einsetzbaren Wirkstoffe reduziert werden kann; beispielsweise durch eine Verminderung der eingesetzten Dosis oder aber durch eine Reduktion der Anzahl der Applikationen. Andererseits kann ggf. der Ertrag der Nutzpflanzen quantitativ und/oder qualitativ gesteigert werden. Dies gilt vor allem bei einer transgen erzeugten Resistenz gegen biotischen oder abiotischen Streß.

Diese synergistischen Wirkungen können je nach Pflanzenarten bzw. Pflanzensorten, deren Standort und Wachstumsbedingungen (Böden, Klima, Vegetationsperiode, Ernährung) variieren und können vielfältig sein. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Diese Vorteile sind auf eine erfindungsgemäß erreichte synergistische Wirkung zwischen den einsetzbaren erfindungsgemäßen Mischungen und dem jeweiligen Wirkprinzip der genetischen Veränderung der transgenen Pflanze zurückzuführen. Mit dieser durch den Synergismus bedingten Reduzierung der Produktionsmittel bei gleichzeitiger Ertrags- oder Qualitätserhöhung sind erhebliche ökonomische und ökologische Vorteile verbunden.

Eine Liste mit dem Fachmann bekannten Beispielen transgener Pflanzen unter Nennung der jeweils betroffenen Struktur in der Pflanze bzw. dem durch die genetische Veränderung exprimierten Protein in der Pflanze ist in Tabelle 1 zusammengestellt. Darin ist der betroffenen Struktur bzw. dem exprimierten Prinzip jeweils eine bestimmte Merkmalsausprägung im Sinne einer Toleranz gegenüber einem bestimmten Streßfaktor zugeordnet. Eine ähnliche Liste (Tabelle 3) stellt - in etwas geänderter Anordnung - ebenso Beispiele von Wirkprinzipien, damit induzierten Toleranzen und möglichen Nutzpflanzen zusammen. Weitere Beispiele von transgenen Pflanzen, die für die erfindungsgemäße Behandlung geeignet sind, sind in der **Tabelle 4** zusammengestellt.

In einer vorteilhaften Ausführungsform werden die erfindungsgemäßen Mischungen zur Behandlung transgener Pflanzen enthaltend mindestens ein Fremdgen, welches ein Bt-Toxin codiert, eingesetzt. Bei einem Bt-Toxin handelt es sich um ein ursprünglich aus dem Bodenbakterium *Bacillus thuringiensis* stammendes oder abgeleitetes Protein, das entweder der Gruppe der *crystal toxins (Cry)* oder der *cytolytic toxins (Cyt)* zugehörig ist. Sie werden in dem Bakterium ursprünglich als Protoxine gebildet und werden erst im alkalischen Milieu - beispielsweise im Verdauungstrakt bestimmter Fraßinsekten - zu ihrer aktiven Form metabolisiert. Dort bindet das dann aktive Toxin an bestimmte Kohlenwasserstoffstrukturen an Zelloberflächen und verursacht eine Porenbildung, die das osmotische Potential der Zelle zerstören und damit Zelllysis bewirken kann. Der Tod der Insekten ist die Folge. Bt-Toxine sind vor allem wirksam gegen bestimmte Schädlingsarten aus den Ordnungen der Lepidoptera (Schmetterlinge), Homoptera (Gleichflügler), Diptera (Zweiflügler) und Coleoptera (Käfer) in all ihren Entwicklungsstadien; also von der Eilarve über ihre juvenilen bis hin zu ihren adulten Formen.

Es ist seit langem bekannt, Gensequenzen codierend Bt-Toxine, Teile davon oder aber von Bt-Toxin abgeleitete Proteine oder Peptide mit Hilfe gentechnologischer Verfahren in landwirtschaftliche Nutzpflanzen einzuklonieren und somit transgene Pflanzen mit endogenen Resistenzen gegen Bt-Toxin empfindlichen Schädlinge zu erzeugen. Die mindestens ein Bt-Toxin oder daraus abgeleitete Proteine codierenden transgenen Pflanzen werden im Sinne der Erfindung als "Bt-Pflanzen" definiert.

Die "erste Generation" solcher Bt-Pflanzen enthielt in der Regel nur die Gene, die die Bildung eines bestimmten Toxins ermöglichten und somit nur gegen eine Gruppe von Schaderregern resistent machten. Beispiele für eine kommerziell erhältliche Mais-Sorte mit dem Gen zur Bildung des CrylAb Toxins ist "YieldGard®" von Monsanto, die gegen den Maiszünsler resistent ist. Die Resistenz gegen andere Schaderreger aus der Familie der Lepidopteren wird dagegen in der Bt-Baumwoll-Sorte (Bollgard®) durch Einklonieren der Gene zur Bildung des CrylAc Toxins erzeugt. Wiederum andere transgene Kulturpflanzen exprimieren Gene zur Bildung von Bt-Toxinen mit Wirkung gegen Schaderreger aus der Ordnung der Coleopteren. Als Beispiele dafür sei die Bt-Kartoffel-Sorte "NewLeaf®" (Monsanto) genannt, die das Cry3A Toxin bilden kann und somit gegen den Kartoffelkäfer ("Colorado Potatoe Beetle") resistent ist, bzw. die transgene Mais-Sorte "YieldGard®" (Monsanto), die das Cry 3Bb1 Toxin bilden und somit gegen verschiedene Arten des Maiswurzelbohrers geschützt ist.

In einer "zweiten Generation" wurden die oben bereits beschriebenen mehrfach-transgenen Pflanzen generiert, die mindestens zwei Fremdgene enthalten oder exprimieren.

Erfindungsgemäß bevorzugt sind transgene Pflanzen mit Bt-Toxinen aus der Gruppe der *Cry*-Familie (siehe z.B. Crickmore et al., 1998, Microbiol. Mol. Biol. Rev. 62 : 807-812), die insbesondere wirksam sind gegen Lepidopteren, Coleopteren oder Dipteren. Beispiele für Gene codierend die Proteine sind (Tabelle A-1 bis A-197):

(A-1) cry1Aa1; (A-2) cry1Aa2, (A-3) cry1Aa3; (A-4) cry1Aa4; (A-5) cry1Aa5; (A-6) cry1Aa6; (A-7) cry1Aa7; (A-8) cry1Aa8; (A-9) cry1Aa9; (A-10) cry1Aa10; (A-11)crylAa11, (A-12)cry1Ab1; (A-13) cry1Ab2; (A-14) cry1Ab3; (A-15) cry1Ab4; (A-16) cry1Ab5; (A-17) cry1Ab6; (A-18) cry1Ab7; (A-19) cry1Ab8; (A-20) cry1Ab9; (A-21) cry1Ab10; (A-22) cry1Ab11; (A-23) cry1Ab12; (A-24) cry1Ab13; (A-25) cry1Ab14; (A-26) cry1Ac1; (A-27) cry1Ac2; (A-28) cry1Ac3; (A-29) cry1Ac4; (A-30) cry1Ac5; (A-31) cry1Ac6; (A-32) cry1Ac7; (A-33) cry1Ac8; (A-34) cry1Ac9; (A-35) cry1Ac10; (A-36) cry1Ac11; (A-37) cry1Ac12; (A-38) cry1Ac13; (A-39) cry1Ad1; (A-40) cry1Ad2; (A-41) cry1Ae1; (A-42) cry1Af1; (A-43) cry1Ag1; (A-44) cry1Ba1; (A-45) cry1Ba2; (A-46) cry1Bb1; (A-47) cry1Bc1; (A-48) cry1Bd1 (A-49) cry1Be1; (A-50) cry1Ca1; (A-51) cry1Ca2; (A-52) cry1Ca3; (A-53) cry1Ca4; (A-54) cry1Ca5; (A-55) crylCa6; (A-56) crylCa7; (A-57) cry1Cb1; (A-58) cry1Cb2; (A-59) cry1Da1; (A-60) cry1Da2; (A-61) cry1Db1; (A-62) cry1Ea1; (A-63) cry1Ea2; (A-64) crylEa3; (A-65) cry1Ea4; (A-66) cry1Ea5; (A-67) cry1Ea6; (A-68) cry1Eb1; (A-69) cry1Fa1; (A-70) cry1Fa2; (A-71) cry1Fb1; (A-72) cry1Fb2; (A-73) cry1Fb3; (A-74) cry1Fb4; (A-75) cry1Ga1 (A-76) cry1Ga2; (A-77) cry1Gb1; (A-78) cry1Gb2; (A-79) cry1Ha1 (A-80) cry1Hb1; (A-81) cry1Ia1; (A-82) cry1Ia2; (A-83) cry1Ia3; (A-84) cry1Ia4; (A-85) cry1Ia5; (A-86) cry1Ia6; (A-87) cry1Ib1; (A-88) cry1Ic1; (A-89) cry1Id1; (A-90) cry1Ie1; (A-91) cry1I-like; (A-92) cry1Ja1; (A-93) cry1Jb1; (A-94) cry1Jc1; (A-95) cry1Ka1; (A-96) cry1-like; (A-97) cry2Aa1; (A-98) cry2Aa2; (A-99) cry2Aa3; (A-100) cry2Aa4; (A-101) cry2Aa5; (A-102) cry2Aa6; (A-103) cry2Aa7; (A-104) cry2Aa8; (A-105) cry2Aa9; (A-106) cry2Ab1; (A-107) cry2Ab2; (A-108) cry2Ab3; (A-109) cry2Ac1; (A-110) cry2Ac2; (A-111) cry2Ad1; (A-112) cry3Aa1; (A-113) cry3Aa2; (A-114) cry3Aa3; (A-115) cry3Aa4; (A-116) cry3Aa5; (A-117) cry3Aa6; (A-118) cry3Aa7; (A-119) cry3Ba1; (A-120) cry3Ba2; (A-121) cry3Bb1; (A-122) cry3Bb2; (A-123) cry3Bb3; (A-124) cry3Ca1; (A-125) cry4Aa1; (A-126) cry4Aa2; (A-127) cry4Ba1; (A-128) cry4Ba2; (A-129) cry4Ba3; (A-130) cry4Ba4; (A-131) cry5Aa1; (A-132) cry5Ab1; (A-133) cry5Ac1; (A-134) cry5Ba1; (A-135) cry6Aa1; (A-136) cry6Ba1; (A-137) cry7Aa1; (A-138) cry7Ab1; (A-139) cry7Ab2; (A-140) cry8Aa1; (A-141) cry8Ba1; (A-142) cry8Ca1; (A-143) cry9Aa1; (A-144) cry9Aa2; (A-145) cry9Ba1; (A-146) cry9Ca1; (A-147) cry9Da1; (A-148) cry9Da2; (A-149) cry9Ea1; (A-150) cry9 like; (A-151) cry10Aa1; (A-152) cry10Aa2; (A-153) cry11Aa1; (A-154) cry11Aa2; (A-155) cry11Ba1; (A-156) cry11Bb1; (A-157) cry12Aa1; (A-158) cry13Aa1; (A-159) cry14Aa1; (A-160) cry15Aa1; (A-161) cry16Aa1; (A-162) cry17Aa1; (A-163) cry18Aa1; (A-164) cry18Ba1; (A-165) cry18Ca1; (A-166) cry19Aa1; (A-167) cry19Ba1; (A-168) cry20Aa1; (A-169) cry21Aa1; (A-170) cry21Aa2; (A-171) cry22Aa1; (A-172) cry23Aa1; (A-173) cry24Aa1; (A-174) cry25Aa1; (A-175) cry26Aa1; (A-176) cry27Aa1; (A-177) cry28Aa1; (A-178) cry28Aa2; (A-179) cry29Aa1; (A-180) cry30Aa1; (A-181) cry31Aa1; (A-182) cyt1Aa1 (A-183) cyt1Aa2; (A-184) cyt1Aa3; (A-185) cyt1Aa4; (A-186) cyt1Ab1; (A-187) cyt1Ba1; (A-188) cyt2Aa1; (A-189) cyt2Ba1; (A-190) cyt2Ba2; (A-191) cyt2Ba3; (A-192) cyt2Ba4; (A-193) cyt2Ba5; (A-194) cyt2Ba6; (A-195) cyt2Ba7; (A-196) cyt2Ba8; (A-197) cyt2Bb1.

Besonders bevorzugt sind die Gene oder Genabschnitte der Subfamilien cryl, cry2, cry3, cry5 und cry9, insbesondere bevorzugt sind cry1Ab, cry1Ac, cry3A, cry3B und cry9C.

Weiterhin bevorzugt ist es, Pflanzen einzusetzen, die neben den Genen für ein oder mehrere Bt-Toxine ggf. auch Gene zur Expression beispielsweise eines Protease- bzw. Peptidase-Inhibitors (wie in WO-A 95/35031), von Herbizidresistenzen (z.B. gegen Glufosinate oder Glyphosate durch Expression des pat- oder bar-Gens) oder zur Ausbildung von Nematoden-, Pilz- oder Virusresistenzen (z.B. durch Expression einer Glucanase, Chitinase) enthalten oder exprimieren. Sie können aber auch in ihren metabolischen Eigenschaften genetisch modifiziert sein, so dass eine qualitative und/oder quantitative Änderung von Inhaltsstoffen (z.B. durch Modifikationen des Energie-, Kohlenhydrat-, Fettsäure- oder Stickstoffwechsels oder diese beeinflussende Metabolitflüsse) zeigen (siehe oben).

Eine Liste mit Beispielen von Wirkprinzipien, die durch eine genetische Modifikation in eine Nutzpflanze eingebracht werden können, und die sich für die erfindungsgemäße Behandlung allein oder in Kombination eignen, ist in **Tabelle 2** zusammengestellt. Diese Tabelle enthält unter der Angabe "AP" (aktives Prinzip) das jeweils betroffene Wirkprinzip und dem zugeordnet den damit zu kontrollierenden Schädling.

In einer besonders bevorzugten Variante wird das erfindungsgemäße Verfahren zur Behandlung transgener Gemüse-, Mais-, Soja-, Baumwoll-, Tabak-, Reis-, Kartoffel-, Sonnenblumen- Raps- und Zuckerrübensorten eingesetzt. Dabei handelt es sich vorzugsweise um Bt-Pflanzen.

Bei den Gemüsepflanzen bzw. -sorten handelt es sich beispielsweise um folgende Nutzpflanzen:

- ◦ Kartoffeln: vorzugsweise Stärkekartoffeln, Süßkartoffeln und Speisekartoffeln;
- ◦ Wurzelgemüse: vorzugsweise Möhren (Karotten), Kohlrüben (Speiserüben, Stoppelrüben, Mairüben, Herbstrüben, Teltower Rübchen), Schwarzwurzeln, Topinambur, Wurzelpetersilie, Pastinake, Rettich und Meerrettich;
- ◦ Knollengemüse: vorzugsweise Kohlrabi, Rote Bete (Rote Rübe), Sellerie (Knollensellerie), Radies und Radieschen;
- ◦ Zwiebelgemüse: vorzugsweise Porree, Lauch und Zwiebeln (Steck- und Samenzwiebel);
- ◦ Kohlgemüse: vorzugsweise Kopfkohl (Weißkohl, Rotkohl, Blattkohl, Wirsingkohl), Blumenkohl, Sprossenkohl, Brokkoli, Grünkohl, Markstammkohl, Meerkohl und Rosenkohl;

◦ Fruchtgemüse: vorzugsweise Tomaten (Freiland- ,Strauch-, Fleisch-, Gewächshaus-, Cocktail-, Industrie- und Frischmarkt-Tomaten), Melonen, Eierfrucht, Auberginen, Paprika (Gemüse- und Gewürzpaprika, Spanischer Pfeffer), Peperoni, Kürbis, Zucchini und Gurken (Freiland-, Gewächshaus-, Schlangen- und Einlegegurken);

◦ Gemüsehülsenfrüchte: vorzugsweise Buschbohnen (als Schwertbohnen, Perlbohnen, Flageoletbohnen, Wachsbohnen, Trockenkochbohnen mit grün- und gelbhülsigen Sorten), Stangenbohnen (als Schwertbohnen, Perlbohnen, Flageoletbohnen, Wachsbohnen mit grün-, blau- und gelbhülsigen Sorten), Dicke Bohnen (Ackerbohnen, Puffbohnen, Sorten mit weiß und schwarz gefleckten Blüten), Erbsen (Platterbsen, Kichererbsen, Markerbsen, Schalerbsen, Zuckererbsen, Palerbsen, Sorten mit hell- und dunkelgrünem Frischkorn) und Linsen;

◦ Blatt- und Stielgemüse: vorzugsweise Chinakohl, Kopfsalat, Pflücksalat, Feldsalat, Eisbergsalat, Romanasalat, Eichblattsalat, Endivien, Radicchio, Lollo rosso-Salat, Ruccola-Salat, Chicoree, Spinat, Mangold (Blatt- und Stielmangold) und Petersilie;

◦ Sonstige Gemüse: vorzugsweise Spargel, Rhabarber, Schnittlauch, Artischocken, Minzen, Sonnenblumen, Knollenfenchel, Dill, Gartenkresse, Senf, Mohn, Erdnuß, Sesam und Salatzichorien.

Bt-Gemüse einschließlich beispielhafter Methoden zu ihrer Herstellung sind ausführlich beschrieben beispielsweise in Barton et al., 1987, Plant Physiol. 85 : 1103-1109 ; Vaeck et al., 1987, Nature 328 : 33-37 ; Fischhoff et al., 1987, Bio/Technology 5 : 807-813. Bt-Gemüsepflanzen sind darüber hinaus bereits bekannt als kommerziell erhältliche Varianten, beispielsweise die Kartoffelsorte NewLeaf® (Monsanto). Ebenso beschreibt die US 6,072,105 die Herstellung von Bt-Gemüse.

Ebenso ist auch bereits Bt-Baumwolle dem Grunde nach bekannt, beispielsweise aus der US-A-5,322,938 oder aus Prietro-Samsonór et al., J. Ind. Microbiol. & Biotechn. 1997, 19, 202, und H. Agaisse und D. Lereclus, J. Bacteriol. 1996, 177, 6027. Auch Bt-Baumwolle ist bereits in verschiedenen Variationen kommerziell erhältlich, beispielsweise unter den Namen NuCOTN® (Deltapine (USA)). Im Rahmen der vorliegenden Erfindung ist die Bt-Baumwolle NuCOTN33® und NuCOTN33B® besonders bevorzugt.

Auch die Verwendung und Herstellung von Bt-Mais ist bereits lange bekannt, beispielsweise aus Ishida, Y., Saito, H., Ohta, S., Hiei, Y., Komari, T., and Kumashiro, T. (1996). High efficiency transformation of maize (Zea mayz L.) mediated by Agrobacterium tumefaciens. Nature Biotechnology 4: 745-750. Auch die EP-B-0485506 beschreibt die Herstellung von Bt-Maispflanzen. Bt-Mais ist weiterhin in verschiedenen Variationen kommerziell erhältlich, beispielsweise unter folgenden Namen (Firma/Firmen jeweils in Klammern): KnockOut® (Novartis Seeds), NaturGard® (Mycogen Seeds), Yieldgard® (Novartis Seeds, Monsanto, Cargill, Golden Harvest, Pioneer, DeKalb u. a.), Bt-Xtra® (DeKalb) und StarLink® (Aventis CropScience, Garst u. a.). Im Sinne der vorliegenden Erfindung sind vor allem die folgenden Maissorten besonders bevorzugt: KnockOut®, NaturGard®, Yieldgard®, Bt-Xtra® und StarLink®.

Für Raps sind InVigor®Sorten mit einer Resistenz gegen das Herbizid Glufosinate erhältlich und erfindungsgemäß behandelbar. Diese Sorten zeichnen sich zusätzlich durch erhöhte Ernteerträge aus.

Auch für Sojabohne sind Roundup®Ready Sorten oder Sorten mit einer Resistenz gegen das Herbizid Liberty Link® erhältlich und erfindungsgemäß behandelbar. Bei Reis sind eine Vielzahl von Linien des so genannten "Golden Rice" erhältlich, die sich gleichermaßen dadurch auszeichnen, dass sie durch eine transgene Modifikation einen erhöhten Gehalt an Provitamin A aufweisen. Auch hierbei handelt es sch um Beispiele für Pflanzen, die nach dem erfindungsgemäßen Verfahren mit den geschilderten Vorteilen behandelt werden können.

Das erfindungsgemäße Verfahren eignet sich zur Bekämpfung einer Vielzahl von Schadorganismen, die insbesondere in Gemüse, Mais, Soja, Baumwolle, Reis, Tabak, Raps, Kartoffeln, Zuckerrüben und Sonnenblumen auftreten, vorzugsweise Arthropoden und Nematoden, insbesondere Insekten und Spinnentiere. Zu den erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spp..

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Acheta domesticus, Gryllotalpa spp., Locusta migratoria migratorioides, Melanoplus spp., Schistocerca gregaria.

Aus der Ordnung der Blattaria z.B. Blatta orientalis, Periplaneta americana, Leucophaea maderae, Blattella germanica.

Aus der Ordnung der Dermaptera z.B. Forficula auricularia.

Aus der Ordnung der Isoptera z.B. Reticulitermes spp..

Aus der Ordnung der Phthiraptera z.B. Pediculus humanus corporis, Haematopinus spp., Linognathus spp., Trichodectes spp., Damalinia spp..

Aus der Ordnung der Thysanoptera z.B. Hercinothrips femoralis, Thrips tabaci, Thrips palmi, Frankliniella accidentalis.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp., Oulema oryzae.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp., Liriomyza spp..

Aus der Ordnung der Siphonaptera z.B. Xenopsylla cheopis, Ceratophyllus spp..

Aus der Klasse der Arachnida z.B. Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Hemitarsonemus spp., Brevipalpus spp..

Zu den pflanzenparasitären Nematoden gehören z.B. Pratylenchus spp., Radopholus similis, Ditylenchus dipsaci, Tylenchulus semipenetrans, Heterodera spp., Globodera spp., Meloidogyne spp., Aphelenchoides spp., Longidorus spp., Xiphinema spp., Trichodorus spp., Bursaphelenchus spp..

Insbesondere ist das erfindungsgemäße Verfahren zur Behandlung von Zuckerrüben oder Bt-Gemüse, Bt-Mais, Bt-Baumwolle, Bt-Soja, Bt-Tabak, sowie auch Bt-Reis, Bt-Kartoffeln, Bt-Raps oder Bt-Sonnenblumen geeignet zur Bekämpfung von Insekten aus der Ordnung Isoptera z.B. Reticulitermes spp., aus der Ordnung Thysanoptera, z.B. Thrips tabaci, Thrips palmi, Frankliniella occidentalis, aus der Ordnung der Heteroptera z.B. Eurygaster spp., Dysdercus intermedius, Piesma quadrata, aus der Ordnung Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Phylloxera vastatrix, Pemphigus spp., Macrosiphum avenae, Myzus spp., Phorodon humuli, Rhopalosiphum padi, Empoasca spp., Nephotettix cincticeps, Lecanium corni, Saissetia oleae, Laodelphax striatellus, Nilaparvata lugens, Aonidiella aurantii, Pseudococcus spp., Psylla spp., aus der Ordnung Lepidoptera, z.B. Pectinophora gossypiella, Cheimatobia brumata, Lithocolletis blancardella, Hyponomeuta padella, Plutella xylostella, Euproctis chrysorrhoea, Lymantria spp., Phyllocnistis citrella, Agrotis spp., Earias insulana, Heliothis spp., Mamestra brassicae, Spodoptera spp., Trichoplusia ni, Carpocapsa pomonella, Pieris spp., Chilo spp., Pyrausta nubilalis, Ephestia kuehniella, Capua reticulana, Clysia ambiguella, Tortrix viridana, Cnaphalocerus spp., Oulema oryzae, aus der Ordnung Coleoptera, z.B. Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Meligethes aeneus, Tribolium spp., Tenebrio molitor, Agriotes spp., Lissorhoptrus oryzophilus, aus der Ordnung Hymenoptera, z.B. Diprion spp., Hoplocampa spp. oder aus der Ordnung Diptera, z.B. Oscinella frit, Phorbia spp., Pegomyia hyoscyami, Ceratitis capitata, Dacus oleae, Hylemyia spp., Liriomyza spp.

Die Wirkstoffkombinationen können in die üblichen Formulierungen überführt werden, wie Lösungen, Emulsionen, Spritzpulver, wasser- und ölbasierte Suspensionen, Pulver, Stäubemittel, Pasten, lösliche Pulver, lösliche Granulate, Streugranulate, Suspensions-Emulsions-Konzentrate, Wirkstoff-imprägnierte Naturstoffe, Wirkstoff-imprägnierte synthetische Stoffe, Düngemittel sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Die Herstellung der Formulierungen erfolgt entweder in geeigneten Anlagen oder auch vor oder während der Anwendung.

Spritzpulver sind in Wasser gleichmäßig dispergierbare Präparate, die neben den Wirkstoffen außer einem Verdünnungs- oder Inertstoff noch Netzmittel, z.B. polyoxethylierte Alkylphenole, polyoxethylierte Fettalkohole, Alkyl- oder Alkylphenol-sulfonate und Dispergiermittel, z.B. ligninsulfonsaures Natrium, 2,2'-dinaphthylmethan-6,6'-disulfonsaures Natrium enthalten.

Stäubemittel erhält man durch Vermahlen der Wirkstoffe mit fein verteilten festen Stoffen, z.B. Talkum, natürlichen Tonen wie Kaolin, Bentonit, Pyrophillit oder Diatomeenerde. Granulate können entweder durch Verdüsen der Wirkstoffe auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Als Hilfsstoffe können solche Stoffe Verwendung finden, die geeignet sind, dem Mittel selbst oder und/oder davon abgeleitete Zubereitungen (z.B. Spritzbrühen, Saatgutbeizen) besondere Eigenschaften zu verleihen, wie bestimmte technische Eigenschaften und/oder auch besondere biologische Eigenschaften. Als typische Hilfsmittel kommen in Frage: Streckmittel, Lösemittel und Trägerstoffe.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (poly-)Ether, der einfachen und substituierten Amine, Amide, Lactame (wie N-Alkylpyrrolidone) und Lactone, der Sulfone und Sulfoxide (wie Dimethylsysulfoxid).

Im Falle der Benutzung von Wasser als Streckmittel können z.B. auch organische Lösemittel als Hilfslösungsmittel verwendet werden. Als flüssige Lösemittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylsulfoxid, sowie Wasser.

Als feste Trägerstoffe kommen beispielsweise in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid

und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Papier, Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage nicht-ionische und/oder ionische Stoffe, z.B. aus den Klassen der Alkohol-POE- und/oder POP-Ether, Säure- und/oder POP- POE-Ester, ALkyl-Aryl- und/oder POP- POE-Ether, Fett- und/oder POP- POE-Addukte, POE- und/oder POP-Polyol Derivate, POE- und/oder POP-Sorbitan- oder-Zucker-Addukte, Alky- oder Aryl-Sulfate, Sulfonate und Phosphate oder die entsprechenden PO-Ether-Addukte. Ferner geeignete Oligo- oder Polymere, z.B. ausgehend von vinylischen Monomeren, von Acrylsäure, aus EO und/oder PO allein oder in Verbindung mit z.B. (poly-) Alkoholen oder (poly-) Aminen. Ferner können Einsatz finden Lignin und seine Sulfonsäure-Derivate, einfache und modifizierte Cellulosen, aromatische und/oder aliphatische Sulfonsäuren sowie deren Addukte mit Formaldehyd.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Weitere Additive können Duftstoffe, mineralische oder vegetabile gegebenenfalls modifizierte Öle, Wachse und Nährstoffe (auch Spurennährstoffe), wie Salze von Eisen, Mangan, Bor, Kupfer, Kobalt, Molybdän und Zink sein.

Weiterhin enthalten sein können Stabilisatoren wie Kältestabilisatoren, Konservierungsmittel, Oxidationsschutzmittel, Lichtschutzmittel oder andere die chemische und / oder physikalische Stabilität verbessernde Mittel.

Diese einzelnen Formulierungstypen sind im Prinzip bekannt und beispielsweise beschrieben in: Winnacker-Küchler, 1986, "Chemische Technologie", Band 7, 4. Aufl., C. Hauser Verlag München; van Falkenberg, 1972-73, "Pesticides Formulations", 2nd Ed., Marcel Dekker N.Y.; Martens, 1979, "Spray Drying Handbook", 3rd Ed., G. Goodwin Ltd. London.

Der Fachmann kann aufgrund seiner allgemeinen Fachkenntnisse geeignete Formulierungshilfen auswählen (siehe dazu beispielsweise Watkins, "Handbook of Insecticide Dust Diluents and Carriers", 2nd Ed., Darland Books, Caldwell N.J.; v. Olphen, "Introduction to Clay Colloid Chemistry", 2nd Ed., J. Wiley & Sons, N.Y.; Marsden, "Solvents Guide", 2nd Ed., Interscience, N.Y. 1950; McCutcheon's, "Detergents and Emulsifiers Annual", MC Publ. Corp., Ridgewood, N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1967; Winnacker-Küchler, "Chemische Technologie", Band 7, 4. Aufl., C. Hanser Verlag München 1986.

Die erfindungsgemäßen Wirkstoffkombinationen können in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Auch eine Mischung mit anderen bekannten Wirkstoffen, wie Düngemitteln ist möglich.

Die erfindungsgemäßen Wirkstoffkombinationen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Die Formulierungen enthalten im Allgemeinen zwischen 0,01 und 98 Gew.-% Wirkstoff, vorzugsweise zwischen 0,5 und 90 %. In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 5 bis 80 Gew.-% betragen. Staubförmige Formulierungen enthalten meistens 5 bis 20 Gew.-% an Wirkstoff, versprühbare Lösungen etwa 2 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Die Anwendung geschieht in einer den Anwendungsformen angepaßten üblichen Weise, vorzugsweise mittels Blatt- bzw. Drenchapplikation.

Die erfindungsgemäße Behandlung der transgenen Pflanzen mit den Wirkstoffkombinationen erfolgt direkt oder durch Einwirkung auf deren Umgebung, Lebensraum oder Lagerraum nach den üblichen Behandlungsmethoden, z.B. durch Tauchen, Sprühen, Verdampfen, Angießen, Vernebeln, Streuen, Aufstreichen und bei Vermehrungsmaterial, insbesondere bei Samen, weiterhin durch ein- oder mehrschichtiges Umhüllen.

Mit den äußeren Bedingungen wie Temperatur, Feuchtigkeit u.a. kann auch die erforderliche Aufwandmenge

variieren. Sie kann innerhalb weiter Grenzen schwanken, z.B. zwischen 0,1 g/ha und 5,0 kg/ha oder mehr Aktivsubstanz. Aufgrund der synergistischen Effekte zwischen Bt-Gemüse und den erfindungsgemäßen Wirkstoffkombinationen sind Aufwandmengen von 0,1 bis 500 g/ha bevorzugt. Aufwandmengen von 10 bis 500 g/ha sind besonders bevorzugt, insbesondere bevorzugt sind 10 bis 200 g/ha.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Tabelle 1: Pflanze: Mais

| Betroffene Struktur bzw. Exprimiertes Prinzip | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäure, Cyclohexandion |
| Hydroxyphenylpyruvat-Dioxygenase (HPPD) | Isooxazole wie Isoxaflutol oder Isoxachlortol, Trione wie Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP- Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklisches Imid, Phenylpyrazol, Pyridinderivat, Phenopylat, Oxadiazol usw. |
| Cytochrom P450 z.B. P450 SU1 | Xenobiotika und Herbizide wie Sulfonylharnstoff |
| Dimboa-Biosynthese (Bx1-Gen) | Helminthosporium turcicum, Rhopalosiphum maydis, Diplodia maydis, Ostrinia nubilalis, lepidoptera sp. |
| CMIII (kleiner grundlegender Peptidbaustein aus dem Maiskorn) | Pflanzenpathogene z.B. Fusarium, Alternaria, Sclerotina |
| Com- SAFP (Zeamatin) | Pflanzenpathogene, z.B. Fusarium, Alternaria, Sclerotina, Rhizoctonia, Chaetomium, Phycomycen |
| Hm1-Gen | Cochliobulus |
| Chitinasen | Pflanzenpathogene |
| Glucanasen | Pflanzenpathogene |
| Hüllproteine | Viren wie das Maisverzwergungsvirus (MDMV) |
| Toxine von Bacillus thuringiensis, VIP 3, Bacillus-cereus-Toxin, Photorabdus und Toxine von Xenorhabdus | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |
| 3- Hydroxysteroidoxidase | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |
| Peroxidase | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |
| Aminopeptidase-Inhibitoren z.B. Leucin | Lepidoptera, Coleoptera, Diptera, |

(fortgesetzt)

| Betroffene Struktur bzw. Exprimiertes Prinzip | Merkmal der Pflanze / Toleranz gegenüber |
|---|---|
| Aminopeptidase-Inhibitoren (LAPI) | Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |
| Limonensynthase | Maiswurzelbohrer |
| Lektin | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |
| Protease-Inhibitoren z.B. Cystatin, Patatin, Virgiferin, CPTI | Rüsselkäfer, Maiswurzelbohrer |
| Ribosomeninaktivierendes Protein | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Mais zünsler, Rüsselkäfer |
| 5C9-Maispolypeptid | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Mais zünsler, Rüsselkäfer |
| HMG-CoA-Reductase | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Mais zünsler, Rüsselkäfer |

Pflanze: Weizen

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Betroffene Struktur/ Exprimiertes Protein | Merkmal der Pflanze / Toleranz gegenüber |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 | Xenobiotika und Herbizide wie etwa Sulfonylharnstoffverbindungen |
| Pilzbekämpfendes Polypeptid AlyAFP | Pflanzenpathogene, z.B. Septoria und Fusarium |
| Glucoseoxidase | Pflanzenpathogene, z.B. Fusarium, Septoria |
| Pyrrolnitrinsynthese-Gene | Pflanzenpathogene, z.B. Fusarium, Septoria |
| Serin/Threonin-Kinasen | Pflanzenpathogene, z.B. Fusarium, Septoria und andere Krankheiten |
| Polypeptid mit der Wirkung, eine Überempfindlichkeitsreaktion auszulösen | Pflanzenpathogene, z.B. Fusarium, Septoria und andere Krankheiten |

(fortgesetzt)

| Betroffene Struktur/ Exprimiertes Protein | Merkmal der Pflanze / Toleranz gegenüber |
|---|---|
| Gene der systemischen erworbenen Widerstandskraft (SAR) | Virale, bakterielle Pilz- und Nematoden-Pathogene |
| Chitinasen | Pflanzenpathogene |
| Glucanasen | Pflanzenpathogene |
| Doppelstrang-Ribonuclease | Viren wie etwa BYDV und MSMV |
| Hüllproteine | Viren wie etwa BYDV und MSMV |
| Toxine von Bacillus thuringiensis, VIP 3, Bacillus-cereus-Toxine, Photorabdus und Toxine von Xenorhabdus | Lepidoptera, Coleoptera, Diptera, Nematoden |
| 3- Hydroxysteroidoxidase | Lepidoptera, Coleoptera, Diptera, Nematoden |
| Peroxidase | Lepidoptera, Coleoptera, Diptera, Nematoden |
| Aminopeptidase-Inhibitoren, z.B. Leucin | Lepidoptera, Coleoptera, Diptera, |
| Aminopeptidase-Inhibitor | Nematoden |
| Lektine | Lepidoptera, Coleoptera, Diptera, Nematoden, Blattläuse |
| Protease-Inhibitoren, z.B. Cystatin, Patatin, Virgiferin, CPTI | Lepidoptera, Coleoptera, Diptera, Nematoden, Blattläuse |
| Ribosomeninaktivierendes Protein | Lepidoptera, Coleoptera, Diptera, Nematoden, Blattläuse |
| HMG-CoA-Reductase | Lepidoptera, Coleoptera, Diptera, |
| | Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |

Pflanze: Gerste

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 | Xenobiotika und Herbizide wie etwa |

| Betroffene Struktur/ Exprimiertes Protein | Merkmal der Pflanze / Toleranz gegenüber |
|---|---|
| | Sulfonylharnstoffverbindungen |
| Pilzbekämpfendes Polypeptid AlyAFP | Pflanzenpathogene, z.B. Septoria und Fusarium |
| Glucoseoxidase | Pflanzenpathogene, z.B. Fusarium, Septoria |
| Pyrrolnitrinsynthese-Gene | Pflanzenpathogene, z.B. Fusarium, Septoria |
| Serin/Threonin-Kinasen | Pflanzenpathogene, z.B. Fusarium, Septoria und andere Krankheiten |
| Polypeptid mit der Wirkung, eine Überempfindlichkeitsreaktion auszulösen | Pflanzenpathogene, z.B. Fusarium, Septoria und andere Krankheiten |

(fortgesetzt)

| Betroffene Struktur/ Exprimiertes Protein | Merkmal der Pflanze / Toleranz gegenüber |
|---|---|
| Gene der systemischen erworbenen Widerstandskraft (SAR) | Virale, bakterielle Pilz- und Nematoden-Pathogene |
| Chitinasen | Pflanzenpathogene |
| Glucanasen | Pflanzenpathogene |
| Doppelstrang-Ribonuclease | Viren wie etwa BYDV und MSMV |
| Hüllproteine | Viren wie etwa BYDV und MSMV |
| Toxine von Bacillus thuringiensis, VIP 3, Bacillus-cereus-Toxine, Photorabdus und Toxine von Xenorhabdus | Lepidoptera, Coleoptera, Diptera, Nematoden |
| 3- Hydroxysteroidoxidase | Lepidoptera, Coleoptera, Diptera, Nematoden |
| Peroxidase | Lepidoptera, Coleoptera, Diptera, Nematoden |
| Aminopeptidase-Inhibitoren, z.B. Leucin Aminopeptidase-Inhibitor | Lepidoptera, Coleoptera, Diptera, Nematoden |
| Lektine | Lepidoptera, Coleoptera, Diptera, Nematoden, Blattläuse |
| Protease-Inhibitoren, z.B. Cystatin, Patatin, Virgiferin, CPTI | Lepidoptera, Coleoptera, Diptera, Nematoden, Blattläuse |
| Ribosomeninaktivierendes Protein | Lepidoptera, Coleoptera, Diptera, Nematoden, Blattläuse |
| HMG-CoA-Reductase | Lepidoptera, Coleoptera, Diptera, Nematoden, Blattläuse |

Pflanze: Reis

| Betroffene Struktur/ Exprimiertes Prinzip | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie |
| Betroffene Struktur/ Exprimiertes Prinzip | Merkmal der Pflanze / Toleranz gegenüber |
| | Bromoxynil und Loxinyl |
| 5-Enolpyruvyl-3-phosphoshikimat Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 | Xenobiotika und Herbizide wie etwa Sulfonylharnstoffverbindungen |
| Pilzbekämpfendes Polypeptid AlyAFP | Pflanzenpathogene |
| Glucoseoxidase | Pflanzenpathogene |
| Pyrrolnitrinsynthese-Gene | Pflanzenpathogene |
| Serin/Threonin-Kinasen | Pflanzenpathogene |
| Phenylalanin-Ammoniak-Lyase (PAL) | Pflanzenpathogene, z.B. bakterieller Blattmehltau und induzierbare Reisbräune |
| Phytoalexine | Pflanzenpathogene, z.B. bakterieller Blattmehltau und Reisbräune |
| B-1,3-Glucanase (Antisense) | Pflanzenpathogene, z.B. bakterieller Blattmehltau und Reisbräune |
| Rezeptorkinase | Pflanzenpathogene, z.B. bakterieller Blattmehltau und Reisbräune |

(fortgesetzt)

| Betroffene Struktur/ Exprimiertes Prinzip | Merkmal der Pflanze / Toleranz gegenüber |
|---|---|
| Polypeptid mit der Wirkung, eine Überempfindlichkeitsreaktion auszulösen | Pflanzenpathogene |
| Gene der systemischen erworbenen Widerstandskraft (SAR) | Virale, bakterielle Pilz- und Nematoden-Pathogene |
| Chitinasen | Pflanzenpathogene, z.B. bakterieller Blattmehltau und Reisbräune |
| Glucanasen | Pflanzenpathogene |
| Doppelstrang-Ribonuclease | Viren wie etwa BYDV und MSMV |
| Hüllproteine | Viren wie etwa BYDV und MSMV |
| Toxine von Bacillus thuringiensis, VIP 3, Bacillus-cereus-Toxine, Photorabdus und | Lepidoptera, z.B. Stengelbohrer, Coleoptera, z.B. Rüsselkäfer wie Lissorhoptrus oryzophilus, |
| Toxine von Xenorhabdus | Diptera, Reiszikaden, z.B. braunrückige Reiszikade |
| 3- Hydroxysteroidoxidase | Lepidoptera, z.B. Stengelbohrer, Coleoptera, z.B. Rüsselkäfer wie Lissorhoptrus oryzophilus, Diptera, Reiszikaden, z.B. braunrückige Reiszikade |
| Peroxidase | Lepidoptera, z.B. Stengelbohrer, Coleoptera, z.B. Rüsselkäfer wie Lissorhoptrus oryzophilus, Diptera, Reiszikaden, z.B. braunrückige Reiszikade |
| Aminopeptidase-Inhibitoren, z.B. Leucin Aminopeptidase-Inhibitor | Lepidoptera, z.B. Stengelbohrer, Coleoptera, z.B. Rüsselkäfer wie Lissorhoptrus oryzophilus, Diptera, Reiszikaden, z.B. braunrückige Reiszikade |
| Lektine | Lepidoptera, z.B. Stengelbohrer, Coleoptera, z.B. Rüsselkäfer wie Lissorhoptrus oryzophilus, Diptera, Reiszikaden, z.B. braunrückige Reiszikade |
| Protease-Inhibitoren, | Lepidoptera, z.B. Stengelbohrer, Coleoptera, z.B. Rüsselkäfer wie Lissorhoptrus oryzophilus, Diptera, Reiszikaden z.B. braunrückige Reiszikade |
| Ribosomeninaktivierendes Protein | Lepidoptera, z.B. Stengelbohrer, Coleoptera, z.B. Rüsselkäfer wie Lissorhoptrus oryzophilus, Diptera, Reiszikaden, z.B. braunrückige Reiszikade |
| HMG-CoA-Reductase | Lepidoptera, z.B. Stengelbohrer, Coleoptera, z.B. Rüsselkäfer wie Lissorhoptrus oryzophilus, Diptera, Reiszikaden z.B. braunrückige Reiszikade |

Pflanze: Sojabohne

| Betroffene Struktur/ Exprimiertes Prinzip | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Betroffene Struktur/ Exprimiertes Prinzip | Merkmal der Pflanze / Toleranz gegenüber |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |

(fortgesetzt)

| Betroffene Struktur/ Exprimiertes Prinzip | Merkmal der Pflanze / Toleranz gegenüber |
|---|---|
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Pilzbekämpfendes Polypeptid AlyAFP | Bakterielle und Pilz-Pathogene wie etwa Fusarium, Sklerotinia, Weißstängeligkeit |
| Oxalatoxidase | Bakterielle und Pilz-Pathogene wie etwa Fusarium, Sklerotinia, Weißstängeligkeit |
| Glucoseoxidase | Bakterielle und Pilz-Pathogene wie etwa Fusarium, Sklerotinia, Weißstängeligkeit |
| Pyrrolnitrinsynthese-Gene | Bakterielle und Pilz-Pathogene wie etwa Fusarium, Sklerotinia, Weißstängeligkeit |
| Serin/Threonin-Kinasen | Bakterielle und Pilz-Pathogene wie etwa Fusarium, Sklerotinia, Weißstängeligkeit |
| Phenylalanin-Amnoniak-Lyase (PAL) | Bakterielle und Pilz-Pathogene wie etwa Fusarium, Sklerotinia, Weißstängeligkeit |
| Phytoalexine | Pflanzenpathogene, z.B. bakterieller Blattmehltau und Reisbräune |
| B-1,3-glucanase (Antisense) | Pflanzenpathogene, z.B. bakterieller Blattmehltau und Reisbräune |
| Rezeptorkinase | Bakterielle und Pilz-Pathogene wie etwa Fusarium, Sklerotinia, Weißstängeligkeit |
| Polypeptid mit der Wirkung, eine ÜberEmpfindlichkeitsreaktion auszulösen | Pflanzenpathogene |
| Gene der systemischen erworbenen Widerstandskraft (SAR) | Virale, bakterielle Pilz- und Nematoden-Pathogene |
| Chitinasen | Bakterielle und Pilz-Pathogene wie etwa Fusarium, Sklerotinia, Weißstängeligkeit |
| Glucanasen | Bakterielle und Pilz-Pathogene wie etwa Fusarium, Sklerotinia, Weißstängeligkeit |
| Doppelstrang-Ribonuclease | Viren wie etwa BPMV und SbMV |
| Hüllproteine | Viren wie etwa BYDV und MSMV |
| Toxine von Bacillus thuringiensis, VIP 3, Bacillus-cereus-Toxine, Photorabdus und Toxine von Xenorhabdus | Lepidoptera, Coleoptera, Blattläuse |
| 3- Hydroxysteroidoxidase | Lepidoptera, Coleoptera, Blattläuse |
| Peroxidase | Lepidoptera, Coleoptera, Blattläuse |
| Aminopeptidase-Inhibitoren, z.B. Leucin Aminopeptidase-Inhibitor | Lepidoptera, Coleoptera, Blattläuse |
| Lektine | Lepidoptera, Coleoptera, Blattläuse |
| Protease-Inhibitoren, z.B. Virgiferin | Lepidoptera, Coleoptera, Blattläuse |
| Ribosomeninaktivierendes Protein | Lepidoptera, Coleoptera, Blattläuse |
| HMG-CoA-Reductase | Lepidoptera, Coleoptera, Blattläuse |
| Barnase | Nematoden, z.B. Wurzelknotennematoden und Zystennematoden |
| Schlüpfauslösefaktor für Zystennematoden | Zystennematoden |
| Prinzipien zur Verhinderung der Nahrungsaufnahme | Nematoden, z.B. Wurzelknoten-Nematoden und Zystennematoden |

Pflanze: Kartoffel

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |

(fortgesetzt)

Pflanze: Kartoffel

| Betroffene Struktur/ Exprimiertes Protein | Merkmal der Pflanze / Toleranz gegenüber |
|---|---|
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Betroffene Struktur/ Exprimiertes Protein | Merkmal der Pflanze / Toleranz gegenüber |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosat-Oxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Schwarzfleckigkeit |
| Metallothionein | Bakterielle und Pilz-Pathogene wie etwa Phytophtora |
| Ribonuclease | Phytophtora, Verticillium, Rhizoctonia |
| Pilzbekämpfendes Polypeptid AlyAFP | Bakterielle und Pilz-Pathogene wie etwa Phytophtora |
| Oxalatoxidase | Bakterielle und Pilz-Pathogene wie etwa Phytophtora, Verticillium, Rhizoctonia |
| Glucoseoxidase | Bakterielle und Pilz-Pathogene wie etwa Phytophtora, Verticillium, Rhizoctonia |
| Pyrrolnitrinsynthese-Gene | Bakterielle und Pilz-Pathogene wie etwa Phytophtora, Verticillium, Rhizoctonia |
| Serin/Threonin-Kinasen | Bakterielle und Pilz-Pathogene wie etwa Phytophtora, Verticillium, Rhizoctonia |
| Cecropin B | Bakterien wie etwa Corynebacterium sepedonicum, Erwinia carotovora |
| Phenylalanin-Ammoniak-Lyase (PAL) | Bakterielle und Pilz-Pathogene wie etwa Phytophtora, Verticillium, Rhizoctonia |
| Phytoalexine | Bakterielle und Pilz-Pathogene wie etwa Phytophtora, Verticillium, Rhizoctonia |
| B-1,3-glucanase (Antisense) | Bakterielle und Pilz-Pathogene wie etwa Phytophtora, Verticillium, Rhizoctonia |
| Rezeptorkinase | Bakterielle und Pilz-Pathogene wie etwa Phytophtora, Verticillium, Rhizoctonia |
| Polypeptid mit der Wirkung, eine Überempfindlichkeitsreaktion auszulösen | Bakterielle und Pilz-Pathogene wie etwa Phytophtora, Verticillium, Rhizoctonia |
| Gene der systemischen erworbenen Widerstandskraft (SAR) | Virale, bakterielle Pilz- und Nematoden-Pathogene |
| Chitinasen | Bakterielle und Pilz-Pathogene wie etwa Phytophtora, Verticillium, Rhizoctonia |
| Barnase | Bakterielle und Pilz- Pathogene wie etwa Phytophtora, Verticillium, Rhizoctonia |
| Gen 49 zur Steuerung des Widerstandes gegen | Bakterielle und Pilz-Pathogene wie etwa |
| Krankheiten | Phytophtora, Verticillium, Rhizoctonia |

(fortgesetzt)

| Betroffene Struktur/ Exprimiertes Protein | Merkmal der Pflanze / Toleranz gegenüber |
|---|---|
| Trans-Aldolase (Antisense) | Schwarzfleckigkeit |
| Glucanasen | Bakterielle und Pilz-Pathogene wie etwa Phytophtora, Verticillium, Rhizoctonia |
| Doppelstrang-Ribonuclease | Viren wie etwa PLRV, PVY und TRV |
| Hüllproteine | Viren wie etwa PLRV, PVY und TRV |
| 17kDa oder 60 kDa Protein | Viren wie etwa PLRV, PVY und TRV |
| Einschlussproteine des Kerns z.B. a oder b | Viren wie etwa PLRV, PVY und TRV |
| Pseudoubiquitin | Viren wie etwa PLRV, PVY und TRV |
| Replicase | Viren wie etwa PLRV, PVY und TRV |
| Toxine von Bacillus thuringiensis, VIP 3, Bacillus-cereus-Toxine, Photorabdus und Toxine von Xenorhabdus | Coleoptera, z.B. Kartoffelkäfer, Blattläuse |
| 3- Hydroxysteroidoxidase | Coleoptera, z.B. Kartoffelkäfer, Blattläuse |
| Peroxidase | Coleoptera, z.B. Kartoffelkäfer, Blattläuse |
| Aminopeptidase-Inhibitoren, z.B. Leucin Aminopeptidase-Inhibitor | Coleoptera, z.B. Kartoffelkäfer, Blattläuse |
| Stilbensynthase | Coleoptera, z.B. Kartoffelkäfer, Blattläuse |
| Lektine | Coleoptera, z.B. Kartoffelkäfer, Blattläuse |
| Protease-Inhibitoren, z.B. Cystatin, Patatin | Coleoptera, z.B. Kartoffelkäfer, Blattläuse |
| Ribosomeninaktivierendes Protein | Coleoptera, z.B. Kartoffelkäfer, Blattläuse |
| HMG-CoA-Reductase | Coleoptera, z.B. Kartoffelkäfer, Blattläuse |
| Schlüpfauslösefaktor für Zystennematoden | Zystennematoden |
| Barnase | Nematoden, z.B. Wurzelknoten-Nematoden und Zystennematoden |
| Prinzipien zur Verhinderung der Nahrungsaufnahme | Nematoden, z.B. Wurzelknoten-Nematoden und Zystennematoden |

Pflanze: Tomate

| Betroffene Struktur/ Exprimiertes Prinzip | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa |
| Betroffene Struktur/ Exprimiertes Prinzip | Merkmal der Pflanze / Toleranz gegenüber Sulfonylharnstoffverbindungen |
| Polyphenoloxidase oder Polyphenol-Oxidase (Antisense) | Schwarzfleckigkeit |
| Metallothionein | Bakterielle und Pilz-Pathogene wie etwa Phytophtora |
| Ribonuclease | Phytophtora, Verticillium, Rhizoctonia |

(fortgesetzt)

| Betroffene Struktur/ Exprimiertes Protein | Merkmal der Pflanze / Toleranz gegenüber |
|---|---|
| Pilzbekämpfendes Polypeptid AlyAFP | Bakterielle und Pilz-Pathogene wie etwa die bakterielle Fleckenkrankheit, Fusarium, Weichfäule, echter Mehltau, Krautfäule, Samtfleckenkrankheit etc. |
| Oxalatoxidase | Bakterielle und Pilz-Pathogene wie etwa die bakterielle Fleckenkrankheit, Fusarium, Weichfäule, echter Mehltau, Krautfäule, Samtfleckenkrankheit etc. |
| Glucoseoxidase | Bakterielle und Pilz-Pathogene wie etwa die bakterielle Fleckenkrankheit, Fusarium, Weichfäule, echter Mehltau, Krautfäule, Samtfleckenkrankheit etc. |
| Pyrrolnitrinsynthese-Gene | Bakterielle und Pilz-Pathogene wie etwa die bakterielle Fleckenkrankheit, Fusarium, Weichfäule, echter Mehltau, Krautfäule, Samtfleckenkrankheit etc. |
| Serin/Threonin-Kinasen | Bakterielle und Pilz-Pathogene wie etwa die bakterielle Fleckenkrankheit, Fusarium, Weichfäule, echter Mehltau, Krautfäule, |
| Betroffene Struktur/ Exprimiertes Prinzip | Merkmal der Pflanze / Toleranz gegenüber Samtfleckenkrankheit etc. |
| Cecropin B | Bakterielle und Pilz-Pathogene wie etwa die bakterielle Fleckenkrankheit, Fusarium, Weichfäule, echter Mehltau, Krautfäule, Samtfleckenkrankheit etc. |
| Phenylalanin-Ammoniak-Lyase (PAL) | Bakterielle und Pilz-Pathogene wie etwa die bakterielle Fleckenkrankheit, Fusarium, Weichfäule, echter Mehltau, Krautfäule, Samtfleckenkrankheit etc. |
| Cf-Gene, z.B. Cf 9 Cf5 Cf4 Cf2 | Samtfleckenkrankheit |
| Osmotin | Dürrfleckenkrankheit |
| Alpha Hordothionin | Bakterien |
| Systemin | Bakterielle und Pilz-Pathogene wie etwa die bakterielle Fleckenkrankheit, Fusarium, Weichfäule, echter Mehltau, Krautfäule, Samtfleckenkrankheit etc. |
| Polygalacturonase-Inhibitoren | Bakterielle und Pilz-Pathogene wie etwa die bakterielle Fleckenkrankheit, Fusarium, Weichfäule, echter Mehltau, Krautfäule, Samtfleckenkrankheit etc. |
| Prf-Steuerungsgen | Bakterielle und Pilz-Pathogene wie etwa die bakterielle Fleckenkrankheit, Fusarium, Weichfäule, echter Mehltau, Krautfäule, Samtfleckenkrankheit etc. |
| 12 Fusariumresistenz-Stelle | Fusarium |
| Betroffene Struktur/ Exprimiertes Prinzip | Merkmal der Pflanze / Toleranz gegenüber |
| Phytoalexine | Bakterielle und Pilz-Pathogene wie etwa die bakterielle Fleckenkrankheit, Fusarium, Weichfäule, echter Mehltau, Krautfäule, Samtfleckenkrankheit etc. |
| B-1,3-glucanase (Antisense) | Bakterielle und Pilz-Pathogene wie etwa die bakterielle Fleckenkrankheit, Fusarium, Weichfäule, echter Mehltau, Krautfäule, Samtfleckenkrankheit etc. |
| Rezeptorkinase | Bakterielle und Pilz-Pathogene wie etwa die bakterielle Fleckenkrankheit, Fusarium, Weichfäule, echter Mehltau, Krautfäule, Samtfleckenkrankheit etc. |
| Polypeptid mit der Wirkung, eine Überempfindlichkeitsreaktion auszulösen | Bakterielle und Pilz-Pathogene wie etwa die bakterielle Fleckenkrankheit, Fusarium, Weichfäule, echter Mehltau, Krautfäule, Samtfleckenkrankheit etc. |
| Gene der systemischen erworbenen Widerstandskraft (SAR) | Virale, bakterielle Pilz- und Nematoden-Pathogene |

(fortgesetzt)

| Betroffene Struktur/ Exprimiertes Protein | Merkmal der Pflanze / Toleranz gegenüber |
|---|---|
| Chitinasen | Bakterielle und Pilz-Pathogene wie etwa die bakterielle Fleckenkrankheit, Fusarium, Weichfäule, echter Mehltau, Krautfäule, Samtfleckenkrankheit etc. |
| Barnase | Bakterielle und Pilz-Pathogene wie etwa die bakterielle Fleckenkrankheit, Fusarium, Weichfäule, echter Mehltau, Krautfäule, |
| Betroffene Struktur/ Exprimiertes Prinzip | Merkmal der Pflanze / Toleranz gegenüber Samtfleckenkrankheit etc. |
| Glucanasen | Bakterielle und Pilz-Pathogene wie etwa die bakterielle Fleckenkrankheit, Fusarium, Weichfäule, echter Mehltau, Krautfäule, Samtfleckenkrankheit etc. |
| Doppelstrang-Ribonuclease | Viren wie etwa PLRV, PVY und ToMoV |
| Hüllproteine | Viren wie etwa PLRV, PVY und ToMoV |
| 17kDa oder 60 kDa Protein | Viren wie etwa PLRV, PVY und ToMoV |
| Einschlussproteine des Kerns z.B. a oder b oder Nucleoprotein | Viren wie etwa PLRV, PVY und ToMoV TRV |
| Pseudoubiquitin | Viren wie etwa PLRV, PVY und ToMoV |
| Replicase | Viren wie etwa PLRV, PVY und ToMoV |
| Toxine von Bacillus thuringiensis, VIP 3, Bacillus-cereus-Toxine, Photorabdus und Toxine von Xenorhabdus | Lepidoptera z.B. Heliothis, weiße Fliege Blattläuse |
| 3- Hydroxysteroidoxidase | Lepidoptera z.B. Heliothis, weiße Fliege, Blattläuse |
| Peroxidase | Lepidoptera z.B. Heliothis, weiße Fliege, Blattläuse |
| Aminopeptidase-Inhibitoren, z.B. Leucin Aminopeptidase-Inhibitor | Lepidoptera z.B. Heliothis, weiße Fliege, Blattläuse |
| Lektine | Lepidoptera z.B. Heliothis, weiße Fliege, Blattläuse |
| Protease-Inhibitoren, z.B. Cystatin, Patatin | Lepidoptera z.B. Heliothis, weiße Fliege, |
| Betroffene Struktur/ Exprimiertes Prinzip | Merkmal der Pflanze / Toleranz gegenüber Blattläuse |
| Ribosomeninaktivierendes Protein | Lepidoptera z.B. Heliothis, weiße Fliege, Blattläuse |
| Stilbensynthase | Lepidoptera z.B. Heliothis, weiße Fliege, Blattläuse |
| HMG-CoA-Reductase | Lepidoptera z.B. Heliothis, weiße Fliege, Blattläuse |
| Schlüpfauslösefaktor für Zystennematoden | Zystennematoden |
| Barnase | Nematoden, z.B. Wurzelknoten-Nematoden und Zystennematoden |
| Prinzipien zur Verhinderung der Nahrungsaufnahme | Nematoden, z.B. Wurzelknoten-Nematoden und Zystennematoden |

Pflanze: Paprika

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Betroffene Struktur/ Exprimiertes Protein | Merkmal der Pflanze / Toleranz gegenüber |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |

(fortgesetzt)

| Betroffene Struktur/ Exprimiertes Protein | Merkmal der Pflanze / Toleranz gegenüber |
|---|---|
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle und Pilz-Pathogene |
| Metallothionein | Bakterielle und Pilz-Pathogene |
| Ribonuclease | Bakterielle und Pilz-Pathogene |
| Pilzbekämpfendes Polypeptid AlyAFP | Bakterielle und Pilz-Pathogene |
| Oxalatoxidase | Bakterielle und Pilz-Pathogene |
| Glucoseoxidase | Bakterielle und Pilz-Pathogene |
| Pyrrolnitrinsynthese-Gene | Bakterielle und Pilz-Pathogene |
| Serin/Threonin-Kinasen | Bakterielle und Pilz-Pathogene |
| Cecropin B | Bakterielle und Pilz-Pathogene, Fäule, Samtfleckenkrankheit, etc |
| Phenylalanin-Ammoniak-Lyase (PAL) | Bakterielle und Pilz-Pathogene |
| Cf-Gene, z.B. Cf 9 Ct5 Cf4 Cf2 | Bakterielle und Pilz-Pathogene |
| Osmotin | Bakterielle und Pilz-Pathogene |
| Alpha Hordothionin | Bakterielle und Pilz-Pathogene |
| Systemin | Bakterielle und Pilz-Pathogene |
| Polygalacturonase-Inhibitoren | Bakterielle und Pilz-Pathogene |
| Prf-Steuerungsgen | Bakterielle und Pilz-Pathogene |
| 12 Fusariumresistenz-Stelle | Fusarium |
| Phytoalexine | Bakterielle und Pilz-Pathogene |
| B-1,3-glucanase (Antisense) | Bakterielle und Pilz-Pathogene |
| Rezeptorkinase | Bakterielle und Pilz-Pathogene |
| Polypeptid mit der Wirkung, eine Überempfindlichkeitsreaktion auszulösen | Bakterielle und Pilz-Pathogene |
| Gene der systemischen erworbenen Widerstandskraft (SAR) | Virale, bakterielle Pilz- und Nematoden-Pathogene |
| Chitinasen | Bakterielle und Pilz-Pathogene |
| Barnase | Bakterielle und Pilz-Pathogene |
| Glucanasen | Bakterielle und Pilz-Pathogene |
| Doppelstrang-Ribonuclease | Viren wie etwa CMV, TEV |
| Hüllproteine | Viren wie etwa CMV, TEV |
| 17kDa oder 60 kDa Protein | Viren wie etwa CMV, TEV |
| Einschlussproteine des Kerns z.B. a oder b oder Nucleoprotein | Viren wie etwa CMV, TEV |
| Pseudoubiquitin | Viren wie etwa CMV, TEV |
| Replicase | Viren wie etwa CMV, TEV |
| Toxine von Bacillus thuringiensis, VIP 3, Bacillus-cereus-Toxine, Photorabdus und Toxine von Xenorhabdus | Lepidoptera, weiße Fliege, Blattläuse |
| 3- Hydroxysteroidoxidase | Lepidoptera, weiße Fliege, Blattläuse |
| Peroxidase | Lepidoptera, weiße Fliege, Blattläuse |
| Aminopeptidase-Inhibitoren, z.B. Leucin Aminopeptidase-Inhibitor | Lepidoptera, weiße Fliege, Blattläuse |

(fortgesetzt)

| Betroffene Struktur/ Exprimiertes Protein | Merkmal der Pflanze / Toleranz gegenüber |
|---|---|
| Lektine | Lepidoptera, weiße Fliege, Blattläuse |
| Protease-Inhibitoren, z.B. Cystatin, Patatin | Lepidoptera, weiße Fliege, Blattläuse |
| Ribosomeninaktivierendes Protein | Lepidoptera, weiße Fliege, Blattläuse |
| Stilbensynthase | Lepidoptera, weiße Fliege, Blattläuse |
| HMG-CoA-Reductase | Lepidoptera, weiße Fliege, Blattläuse |
| Schlüpfauslösefaktor für Zystennematoden | Zystennematoden |
| Barnase | Nematoden, z.B. Wurzelknoten-Nematoden und Zystennematoden |
| Prinzipien zur Verhinderung der Nahrungsaufnahme | Nematoden, z.B. Wurzelknoten-Nematoden und Zystennematoden |

Pflanze: Wein

| Betroffene Struktur/ Exprimiertes Prinzip | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, |
| Betroffene Struktur/ Exprimiertes Prinzip | Merkmal der Pflanze / Toleranz gegenüber |
| | Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle und Pilz-Pathogene wie Botrytis und echter Mehltau |
| Metallothionein | Bakterielle und Pilz-Pathogene wie Botrytis und echter Mehltau |
| Ribonuclease | Bakterielle und Pilz-Pathogene wie Botrytis und echter Mehltau |
| Pilzbekämpfendes Polypeptid AlyAFP | Bakterielle und Pilz-Pathogene wie Botrytis und echter Mehltau |
| Oxalatoxidase | Bakterielle und Pilz-Pathogene wie Botrytis und echter Mehltau |
| Glucoseoxidase | Bakterielle und Pilz-Pathogene wie Botrytis und echter Mehltau |
| Pyrrolnitrinsynthese-Gene | Bakterielle und Pilz-Pathogene wie Botrytis und echter Mehltau |
| Serin/Threonin-Kinasen | Bakterielle und Pilz-Pathogene wie Botrytis und echter Mehltau |
| Cecropin B | Bakterielle und Pilz-Pathogene wie Botrytis und echter Mehltau |
| Phenylalanin-Ammoniak-Lyase (PAL) | Bakterielle und Pilz-Pathogene wie Botrytis und echter Mehltau |
| Cf-Gene, z.B. Cf 9 Cf5 Cf4 Cf2 | Bakterielle und Pilz-Pathogene wie Botrytis und echter Mehltau |
| Osmotin | Bakterielle und Pilz-Pathogene wie Botrytis und echter Mehltau |
| Alpha Hordothionin | Bakterielle und Pilz-Pathogene wie Botrytis und echter Mehltau |
| Systemin | Bakterielle und Pilz-Pathogene wie Botrytis und echter Mehltau |
| Polygalacturonase-Inhibitoren | Bakterielle und Pilz-Pathogene wie Botrytis und echter Mehltau |

(fortgesetzt)

| Betroffene Struktur/ Exprimiertes Prinzip | Merkmal der Pflanze / Toleranz gegenüber |
|---|---|
| Prf-Steuerungsgen | Bakterielle und Pilz-Pathogene wie Botrytis und echter Mehltau |
| Phytoalexine | Bakterielle und Pilz-Pathogene wie Botrytis und echter Mehltau |
| B-1,3-glucanase (Antisense) | Bakterielle und Pilz-Pathogene wie Botrytis und echter Mehltau |
| Rezeptorkinase | Bakterielle und Pilz-Pathogene wie Botrytis und echter Mehltau |
| Polypeptid mit der Wirkung, eine Überempfindlichkeitsreaktion auszulösen | Bakterielle und Pilz-Pathogene wie Botrytis und echter Mehltau |
| Gene der systemischen erworbenen Widerstandskraft (SAR) | Virale, bakterielle Pilz- und Nematoden-Pathogene |
| Chitinasen | Bakterielle und Pilz-Pathogene wie Botrytis und echter Mehltau |
| Barnase | Bakterielle und Pilz-Pathogene wie Botrytis und echter Mehltau |
| Glucanasen | Bakterielle und Pilz-Pathogene wie Botrytis und echter Mehltau |
| Doppelstrang-Ribonuclease | Viren |
| Hüllproteine | Viren |
| 17kDa oder 60 kDa Protein | Viren |
| Einschlussproteine des Kerns z.B. a oder b oder Nucleoprotein | Viren |
| Pseudoubiquitin | Viren |
| Replicase | Viren |
| Toxine von Bacillus thuringiensis, VIP 3, Bacillus-cereus-Toxine, Photorabdus und Toxine von Xenorhabdus | Lepidoptera, Blattläuse |
| 3- Hydroxysteroidoxidase | Lepidoptera, Blattläuse |
| Peroxidase | Lepidoptera, Blattläuse |
| Aminopeptidase-Inhibitoren, z.B. Leucin Aminopeptidase-Inhibitor | Lepidoptera, Blattläuse |
| Lektine | Lepidoptera, Blattläuse |
| Protease-Inhibitoren, z.B. Cystatin, Patatin | Lepidoptera, Blattläuse |
| Ribosomeninaktivierendes Protein | Lepidoptera, Blattläuse |
| Stilbensynthase | Lepidoptera, Blattläuse, Krankheiten |
| HMG-CoA-Reductase | Lepidoptera, Blattläuse |
| Schlüpfauslösefaktor für Zystennematoden | Zystennematoden |
| Barnase | Nematoden, z.B. Wurzelknoten-Nematoden und Zystennematoden oder allgemeine Krankheiten |
| CBI | Wurzelknotennematoden |
| Prinzipien zur Verhinderung der Nahrungsaufnahme | Nematoden, z.B. Wurzelknoten-Nematoden oder Wurzelzystennematoden |

Pflanze: Ölraps

| Betroffene Struktur/ Exprimiertes Protein | Merkmal der Pflanze / Toleranz gegenüber |
|---|---|
| Acetolactatsynthase (ALS) | Sulfonythamstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |

(fortgesetzt)

Pflanze: Ölraps

| Betroffene Struktur/ Exprimiertes Protein | Merkmal der Pflanze / Toleranz gegenüber |
|---|---|
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa |
| Betroffene Struktur/ Exprimiertes Protein | Merkmal der Pflanze / Toleranz gegenüber |
| | Sulfonylharnstoffverbindungen |
| Polyphenoloxidase oder Polyphenol-Oxidase (Antisense) | Bakterielle und Pilz-Pathogene wie Cylindrosporium, Phoma, Sklerotinia |
| Metallothionein | Bakterielle und Pilz-Pathogene wie Cylindrosporium, Phoma, Sklerotinia |
| Ribonuclease | Bakterielle und Pilz-Pathogene wie Cylindrosporium, Phoma, Sklerotinia |
| Pilzbekämpfendes Polypeptid AlyAFP | Bakterielle und Pilz-Pathogene wie Cylindrosporium, Phoma, Sklerotinia |
| Oxalatoxidase | Bakterielle und Pilz-Pathogene wie Cylindrosporium, Phoma, Sklerotinia |
| Glucoseoxidase | Bakterielle und Pilz-Pathogene wie Cylindrosporium, Phoma, Sklerotinia |
| Pyrrolnitrinsynthese-Gene | Bakterielle und Pilz-Pathogene wie Cylindrosporium, Phoma, Sklerotinia |
| Serin/Threonin-Kinasen | Bakterielle und Pilz-Pathogene wie Cylindrosporium, Phoma, Sklerotinia |
| Cecropin B | Bakterielle und Pilz-Pathogene wie Cylindrosporium, Phoma, Sklerotinia |
| Phenylalanin-Ammoniak-Lyase (PAL) | Bakterielle und Pilz-Pathogene wie Cylindrosporium, Phoma, Sklerotinia |
| Cf-Gene, z.B. Cf 9 Cf5 Cf4 Cf2 | Bakterielle und Pilz-Pathogene wie Cylindrosporium, Phoma, Sklerotinia |
| Osmotin | Bakterielle und Pilz-Pathogene wie Cylindrosporium, Phoma, Sklerotinia |
| Alpha Hordothionin | Bakterielle und Pilz-Pathogene wie Cylindrosporium, Phoma, Sklerotinia |
| Systemin | Bakterielle und Pilz-Pathogene wie Cylindrosporium, Phoma, Sklerotinia |
| Polygalacturonase-Inhibitoren | Bakterielle und Pilz-Pathogene wie Cylindrosporium, Phoma, Sklerotinia |
| Prf-Steuerungsgen | Bakterielle und Pilz-Pathogene wie Cylindrosporium, Phoma, Sklerotinia |
| Phytoalexine | Bakterielle und Pilz-Pathogene wie Cylindrosporium, Phoma, Sklerotinia |
| B-1,3-glucanase (Antisense) | Bakterielle und Pilz-Pathogene wie Cylindrosporium, Phoma, Sklerotinia |
| Rezeptorkinase | Bakterielle und Pilz-Pathogene wie Cylindrosporium, Phoma, Sklerotinia |
| Polypeptid mit der Wirkung, eine Überempfindlichkeitsreaktion auszulösen | Bakterielle und Pilz-Pathogene wie Cylindrosporium, Phoma, Sklerotinia |
| Gene der systemischen erworbenen Widerstandskraft (SAR) | Virale, bakterielle Pilz- und Nematoden-Pathogene |

(fortgesetzt)

| Betroffene Struktur/ Exprimiertes Protein | Merkmal der Pflanze / Toleranz gegenüber |
|---|---|
| Chitinasen | Bakterielle und Pilz-Pathogene wie Cylindrosporium, Phoma, Sklerotinia |
| Barnase | Bakterielle und Pilz-Pathogene wie Cylindrosporium, Phoma, Sklerotinia, Nematoden |
| Glucanasen | Bakterielle und Pilz-Pathogene wie Cylindrosporium, Phoma, Sklerotinia |
| Doppelstrang-Ribonuclease | Viren |
| Hüllproteine | Viren |
| 17kDa oder 60 kDa Protein | Viren |
| Einschlussproteine des Kerns z.B. a oder b oder Nucleoprotein | Viren |
| Pseudoubiquitin | Viren |
| Replicase | Viren |
| Toxine von Bacillus thuringiensis, VIP 3, Bacillus-cereus-Toxine, Photorabdus und Toxine von Xenorhabdus | Lepidoptera, Blattläuse |
| 3- Hydroxysteroidoxidase | Lepidoptera, Blattläuse |
| Peroxidase | Lepidoptera, Blattläuse |
| Aminopeptidase-Inhibitoren, z.B. Leucin Aminopeptidase-Inhibitor | Lepidoptera, Blattläuse |
| Lektine | Lepidoptera, Blattläuse |
| Protease-Inhibitoren, z.B. Cystatin, Patatin, CPTI | Lepidoptera, Blattläuse |
| Ribosomeninaktivierendes Protein | Lepidoptera, Blattläuse |
| Stilbensynthase | Lepidoptera, Blattläuse, Krankheiten |
| HMG-CoA-Reductase | Lepidoptera, Blattläuse |
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungsaufnahmen, die an Nematoden-Nährstellen induziert werden | Nematoden, z.B. Wurzelknoten-Nematoden und Wurzel-Zystennematoden |

Pflanze: Brassica-Gemüse (Kohl, Kohlsprossen etc..)

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |

(fortgesetzt)

| Betroffene Struktur/ Exprimiertes Protein | Merkmal der Pflanze / Toleranz gegenüber |
|---|---|
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol- Oxidase (Antisense) | Bakterielle und Pilz-Pathogene |
| Metallothionein | Bakterielle und Pilz-Pathogene |
| Ribonuclease | Bakterielle und Pilz-Pathogene |
| Pilzbekämpfendes Polypeptid AlyAFP | Bakterielle und Pilz-Pathogene |
| Oxalatoxidase | Bakterielle und Pilz-Pathogene |
| Glucoseoxidase | Bakterielle und Pilz-Pathogene |
| Pyrrolnitrinsynthese-Gene | Bakterielle und Pilz-Pathogene |
| Serin/Threonin-Kinasen | Bakterielle und Pilz-Pathogene |
| Cecropin B | Bakterielle und Pilz-Pathogene |
| Phenylalanin-Ammoniak-Lyase (PAL) | Bakterielle und Pilz-Pathogene |
| Cf-Gene, z.B. Cf 9 Cf5 Cf4 Cf2 | Bakterielle und Pilz-Pathogene |
| Osmotin | Bakterielle und Pilz-Pathogene |
| Alpha Hordothionin | Bakterielle und Pilz-Pathogene |
| Systemin | Bakterielle und Pilz-Pathogene |
| Polygalacturonase-Inhibitoren | Bakterielle und Pilz-Pathogene |
| Prf-Steuerungsgen | Bakterielle und Pilz-Pathogene |
| Phytoalexine | Bakterielle und Pilz-Pathogene |
| B-1,3-glucanase (Antisense) | Bakterielle und Pilz-Pathogene |
| Rezeptorkinase | Bakterielle und Pilz-Pathogene |
| Polypeptid mit der Wirkung, eine Überempfindlichkeitsreaktion auszulösen | Bakterielle und Pilz-Pathogene |
| Gene der systemischen erworbenen Widerstandskraft (SAR) | Virale, bakterielle Pilz- und Nematoden-Pathogene |
| Chitinasen | Bakterielle und Pilz-Pathogene |
| Barnase | Bakterielle und Pilz-Pathogene |
| Glucanasen | Bakterielle und Pilz-Pathogene |
| Doppelstrang-Ribonuclease | Viren |
| Hüllproteine | Viren |
| 17kDa oder 60 kDa Protein | Viren |
| Einschlussproteine des Kerns z.B. a oder b oder Nucleoprotein | Viren |
| Pseudoubiquitin | Viren |
| Replicase | Viren |
| Toxine von Bacillus thuringiensis, VIP 3, Bacillus-cereus-Toxine, Photorabdus und Toxine von Xenorhabdus | Lepidoptera, Blattläuse |
| 3- Hydroxysteroidoxidase | Lepidoptera, Blattläuse |
| Peroxidase | Lepidoptera, Blattläuse |
| Aminopeptidase-Inhibitoren, z.B. Leucin Aminopeptidase-Inhibitor | Lepidoptera, Blattläuse |
| Lektine | Lepidoptera, Blattläuse |
| Protease-Inhibitoren, z.B. Cystatin, Patatin, CPTI | Lepidoptera, Blattläuse |
| Ribosomeninaktivierendes Protein | Lepidoptera, Blattläuse |
| Stilbensynthase | Lepidoptera, Blattläuse, Krankheiten |
| HMG-CoA-Reductase | Lepidoptera, Blattläuse |

(fortgesetzt)

| Betroffene Struktur/ Exprimiertes Protein | Merkmal der Pflanze / Toleranz gegenüber |
|---|---|
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungsaufnahmen, die an Nematoden-Nährstellen | Nematoden, z.B. Wurzelknoten-Nematoden und Wurzel-Zystennematoden |
| induziert werden | Zystennematoden |

Pflanzen: Kernobst z.B. Äpfel, Birnen

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |

| Betroffene Struktur/ Exprimiertes Protein | Merkmal der Pflanze / Toleranz gegenüber |
|---|---|
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle und Pilz-Pathogene wie Lagerschorf an Äpfeln oder Feuerbrand |
| Metallothionein | Bakterielle und Pilz-Pathogene wie Lagerschorf an Äpfeln oder Feuerbrand |
| Ribonuclease | Bakterielle und Pilz-Pathogene wie Lagerschorf an Äpfeln oder Feuerbrand |
| Pilzbekämpfendes Polypeptid AlyAFP | Bakterielle und Pilz-Pathogene wie Lagerschorf an Äpfeln oder Feuerbrand |
| Oxalatoxidase | Bakterielle und Pilz-Pathogene wie Lagerschorf an Äpfeln oder Feuerbrand |
| Glucoseoxidase | Bakterielle und Pilz-Pathogene wie Lagerschorf an Äpfeln oder Feuerbrand |
| Pyrrolnitrinsynthese-Gene | Bakterielle und Pilz-Pathogene wie Lagerschorf an Äpfeln oder Feuerbrand |
| Serin/Threonin-Kinasen | Bakterielle und Pilz-Pathogene wie Lagerschorf an Äpfeln oder Feuerbrand |
| Cecropin B | Bakterielle und Pilz-Pathogene wie Lagerschorf an Äpfeln oder Feuerbrand |
| Phenylalanin-Ammoniak-Lyase (PAL) | Bakterielle und Pilz-Pathogene wie Lagerschorf an Äpfeln oder Feuerbrand |
| Cf-Gene, z.B. Cf 9 Cf5 Cf4 Cf2 | Bakterielle und Pilz-Pathogene wie Lagerschorf an Äpfeln oder Feuerbrand |

(fortgesetzt)

| Betroffene Struktur/ Exprimiertes Protein | Merkmal der Pflanze / Toleranz gegenüber |
|---|---|
| Osmotin | Bakterielle und Pilz-Pathogene wie Lagerschorf an Äpfeln oder Feuerbrand |
| Alpha Hordothionin | Bakterielle und Pilz-Pathogene wie Lagerschorf an Äpfeln oder Feuerbrand |
| Systemin | Bakterielle und Pilz-Pathogene wie Lagerschorf an Äpfeln oder Feuerbrand |
| Polygalacturonase-Inhibitoren | Bakterielle und Pilz-Pathogene wie Lagerschorf an Äpfeln oder Feuerbrand |
| Prf-Steuerungsgen | Bakterielle und Pilz-Pathogene wie Lagerschorf an Äpfeln oder Feuerbrand |
| Phytoalexine | Bakterielle und Pilz-Pathogene wie Lagerschorf an Äpfeln oder Feuerbrand |
| B-1,3-glucanase (Antisense) | Bakterielle und Pilz-Pathogene wie Lagerschorf an Äpfeln oder Feuerbrand |
| Rezeptorkinase | Bakterielle und Pilz-Pathogene wie Lagerschorf an Äpfeln oder Feuerbrand |
| Polypeptid mit der Wirkung, eine Überempfindlichkeitsreaktion auszulösen | Bakterielle und Pilz-Pathogene wie Lagerschorf an Äpfeln oder Feuerbrand |
| Gene der systemischen erworbenen Widerstandskraft (SAR) | Virale, bakterielle Pilz- und Nematoden-Pathogene |
| lytisch wirkendes Protein | Bakterielle und Pilz-Pathogene wie Lagerschorf an Äpfeln oder Feuerbrand |
| Lysozym | Bakterielle und Pilz-Pathogene wie Lagerschorf an Äpfeln oder Feuerbrand |
| Chitinasen | Bakterielle und Pilz-Pathogene wie Lagerschorf an Äpfeln oder Feuerbrand |
| Barnase | Bakterielle und Pilz-Pathogene wie Lagerschorf an Äpfeln oder Feuerbrand |
| Glucanasen | Bakterielle und Pilz-Pathogene wie Lagerschorf an Äpfeln oder Feuerbrand |
| Doppelstrang-Ribonuclease | Viren |
| Hüllproteine | Viren |
| 17kDa oder 60 kDa Protein | Viren |
| Einschlussproteine des Kerns z.B. a oder b oder Nucleoprotein | Viren |
| Pseudoubiquitin | Viren |
| Replicase | Viren |
| Toxine von Bacillus thuringiensis, VIP 3, Bacillus-cereus-Toxine, Photorabdus und Toxine von Xenorhabdus | Lepidoptera, Blattläuse, Milben |
| 3- Hydroxysteroidoxidase | Lepidoptera, Blattläuse, Milben |
| Peroxidase | Lepidoptera, Blattläuse, Milben |
| Aminopeptidase-Inhibitoren, z.B. Leucin Aminopeptidase-Inhibitor | Lepidoptera, Blattläuse, Milben |
| Lektine | Lepidoptera, Blattläuse, Milben |
| Protease-Inhibitoren, z.B. Cystatin, Patatin, CPTI | Lepidoptera, Blattläuse, Milben |
| Ribosomeninaktivierendes Protein | Lepidoptera, Blattläuse, Milben |
| Stilbensynthase | Lepidoptera, Blattläuse, Krankheiten, Milben |
| HMG-CoA-Reductase | Lepidoptera, Blattläuse, Milben |

(fortgesetzt)

| Betroffene Struktur/ Exprimiertes Protein | Merkmal der Pflanze / Toleranz gegenüber |
|---|---|
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungsaufnahmen, die an Nematoden-Nährstellen induziert werden | Nematoden, z.B. Wurzelknoten-Nematoden und Wurzel-Zystennematoden |

Pflanze: Melone

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder |
| Betroffene Struktur/ Exprimiertes Protein | Merkmal der Pflanze / Toleranz gegenüber |
| | Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat- Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle oder Pilz-Pathogene wie Phytophtora |
| Metallothionein | Bakterielle oder Pilz-Pathogene wie Phytophtora |
| Ribonuclease | Bakterielle oder Pilz-Pathogene wie Phytophtora |
| Pilzbekämpfendes Polypeptid AlyAFP | Bakterielle oder Pilz-Pathogene wie Phytophtora |
| Oxalatoxidase | Bakterielle oder Pilz-Pathogene wie Phytophtora |
| Glucoseoxidase | Bakterielle oder Pilz-Pathogene wie Phytophtora |
| Pyrrolnitrinsynthesegene | Bakterielle oder Pilz-Pathogene wie Phytophtora |
| Serin/Threonin-Kinasen | Bakterielle oder Pilz-Pathogene wie Phytophtora |
| Cecropin B | Bakterielle oder Pilz-Pathogene wie Phytophtora |
| Phenylalanin-Ammoniak-Lyase (PAL) | Bakterielle oder Pilz-Pathogene wie Phytophtora |
| Cf-Gene, z.B. Cf 9 Cf5 Cf4 Cf2 | Bakterielle oder Pilz-Pathogene wie Phytophtora |
| Osmotin | Bakterielle oder Pilz-Pathogene wie Phytophtora |
| Alpha Hordothionin | Bakterielle oder Pilz-Pathogene wie Phytophtora |
| Systemin | Bakterielle oder Pilz-Pathogene wie Phytophtora |
| Polygalacturonase-Inhibitoren | Bakterielle oder Pilz-Pathogene wie Phytophtora |
| Prf-Steuerungsgen | Bakterielle oder Pilz-Pathogene wie Phytophtora |
| Phytoalexine | Bakterielle oder Pilz-Pathogene wie Phytophtora |
| B-1,3-glucanase (Antisense) | Bakterielle oder Pilz-Pathogene wie Phytophtora |

(fortgesetzt)

| Betroffene Struktur/ Exprimiertes Protein | Merkmal der Pflanze / Toleranz gegenüber |
|---|---|
| Rezeptorkinase | Bakterielle oder Pilz-Pathogene wie Phytophtora |
| Polypeptid mit der Wirkung, eine Überempfindlichkeitsreaktion auszulösen | Bakterielle oder Pilz-Pathogene wie Phytophtora |
| Gene der systemischen erworbenen Widerstandskraft (SAR) | Virale, bakterielle Pilz- und Nematoden-Pathogene |
| Lytisch wirkendes Protein | Bakterielle oder Pilz-Pathogene wie Phytophtora |
| Lysozym | Bakterielle oder Pilz-Pathogene wie Phytophtora |
| Chitinasen | Bakterielle oder Pilz-Pathogene wie Phytophtora |
| Barnase | Bakterielle oder Pilz-Pathogene wie Phytophtora |
| Glucanasen | Bakterielle oder Pilz-Pathogene wie Phytophtora |
| Doppelstrang-Ribonuclease | Viren wie CMV, PRSV, WMV2, SMV, ZYMV |
| Hüllproteine | Viren wie CMV, PRSV, WMV2, SMV, ZYMV |
| 17kDa oder 60 kDa Protein | Viren wie CMV, PRSV, WMV2, SMV, ZYMV |
| Einschlussproteine des Kerns z.B. a oder b oder | Viren wie CMV, PRSV, WMV2, SMV, |
| Nucleoprotein | ZYMV |
| Pseudoubiquitin | Viren wie CMV, PRSV, WMV2, SMV, ZYMV |
| Replicase | Viren wie CMV, PRSV, WMV2, SMV, ZYMV |
| Toxine von Bacillus thuringiensis, VIP 3, Bacillus-cereus-Toxine, Photorabdus und Toxine von Xenorhabdus | Lepidoptera, Blattläuse, Milben |
| 3- Hydroxysteroidoxidase | Lepidoptera, Blattläuse, Milben, weiße Fliege |
| Peroxidase | Lepidoptera, Blattläuse, Milben, weiße Fliege |
| Aminopeptidase-Inhibitoren, z.B. Leucin Aminopeptidase-Inhibitor | Lepidoptera, Blattläuse, Milben, weiße Fliege |
| Lektine | Lepidoptera, Blattläuse, Milben, weiße Fliege |
| Protease-Inhibitoren, z.B. Cystatin, Patatin, CPTI, Virgiferin | Lepidoptera, Blattläuse, Milben, weiße Fliege |
| Ribosomeninaktivierendes Protein | Lepidoptera, Blattläuse, Milben, weiße Fliege |
| Stilbensynthase | Lepidoptera, Blattläuse, Milben, weiße Fliege |
| HMG-CoA-Reductase | Lepidoptera, Blattläuse, Milben, weiße Fliege |
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungsaufnahmen, die an Nematoden-Nährstellen induziert werden | Nematoden, z.B. Wurzelknoten-Nematoden und Wurzel-Zystennematoden |

Pflanze: Banane

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |

(fortgesetzt)

Pflanze: Banane

| Betroffene Struktur/ Exprimiertes Protein | Merkmal der Pflanze / Toleranz gegenüber |
|---|---|
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Betroffene Struktur/ Exprimiertes Protein | Merkmal der Pflanze / Toleranz gegenüber |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle oder Pilz-Pathogene |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Rezeptorkinase | Bakterielle oder Pilz-Pathogene |
| Polypeptid mit der Wirkung, eine Überempfindlichkeitsreaktion auszulösen | Bakterielle oder Pilz-Pathogene |
| Gene der systemischen erworbenen Widerstandskraft (SAR) | Virale, bakterielle Pilz- und Nematoden-Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie das Banana Bunchy Top Virus (BBTV) |
| Hüllproteine | Viren wie das Banana Bunchy Top Virus (BBTV) |
| 17kDa oder 60 kDa Protein | Viren wie das Banana Bunchy Top Virus (BBTV) |
| Einschlussproteine des Kerns z.B. a oder b oder Nucleoprotein | Viren wie das Banana Bunchy Top Virus (BBTV) |
| Pseudoubiquitin | Viren wie das Banana Bunchy Top Virus (BBTV) |
| Replicase | Viren wie das Banana Bunchy Top Virus (BBTV) |
| Toxine von Bacillus thuringiensis, VIP 3, Bacillus-cereus-Toxine, Photorabdus und Toxine von Xenorhabdus | Lepidoptera, Blattläuse, Milben, Nematoden |
| 3- Hydroxysteroidoxidase | Lepidoptera, Blattläuse, Milben, Nematoden |

(fortgesetzt)

| Betroffene Struktur/ Exprimiertes Protein | Merkmal der Pflanze / Toleranz gegenüber |
|---|---|
| Peroxidase | Lepidoptera, Blattläuse, Milben, Nematoden |
| Aminopeptidase-Inhibitoren, z.B. Leucin Aminopeptidase-Inhibitor | Lepidoptera, Blattläuse, Milben, Nematoden |
| Lektine | Lepidoptera, Blattläuse, Milben, Nematoden |
| Protease-Inhibitoren, z.B. Cystatin, Patatin, CPTI, Virgiferin | Lepidoptera, Blattläuse, Milben, Nematoden |
| Ribosomeninaktivierendes Protein | Lepidoptera, Blattläuse, Milben, Nematoden |
| Stilbensynthase | Lepidoptera, Blattläuse, Milben, Nematoden |
| HMG-CoA-Reductase | Lepidoptera, Blattläuse, Milben, Nematoden |
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungsaufnahmen, die an Nematoden-Nährstellen induziert werden | Nematoden, z.B. Wurzelknoten-Nematoden und Wurzel-Zystennematoden |

Pflanze: Baumwolle

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Arykoxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle oder Pilz-Pathogene |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |

(fortgesetzt)

Pflanze: Baumwolle

| Betroffene Struktur/ Exprimiertes Protein | Merkmal der Pflanze / Toleranz gegenüber |
|---|---|
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Rezeptorkinase | Bakterielle oder Pilz-Pathogene |
| Polypeptid mit der Wirkung, eine Überempfindlichkeitsreaktion auszulösen | Bakterielle oder Pilz-Pathogene |
| Gene der systemischen erworbenen Widerstandskraft (SAR) | Virale, bakterielle Pilz- und Nematoden-Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie das Wundtumorvirus (WTV) |
| Hüllproteine | Viren wie das Wundtumorvirus (WTV) |
| 17kDa oder 60 kDa Protein | Viren wie das Wundtumorvirus (WTV) |
| Einschlussproteine des Kerns z.B. a oder b oder Nucleoprotein | Viren wie das Wundtumorvirus (WTV) |
| Pseudoubiquitin | Viren wie das Wundtumorvirus (WTV) |
| Replicase | Viren wie das Wundtumorvirus (WTV) |
| Toxine von Bacillus thuringiensis, VIP 3, Bacillus-cereus-Toxine, Photorabdus und Toxine von Xenorhabdus | Lepidoptera, Blattläuse, Milben, Nematoden, weiße Fliege |
| 3- Hydroxysteroidoxidase | Lepidoptera, Blattläuse, Milben, Nematoden, weiße Fliege |
| Peroxidase | Lepidoptera, Blattläuse, Milben, Nematoden, weiße Fliege |
| Aminopeptidase-Inhibitoren, z.B. Leucin Aminopeptidase-Inhibitor | Lepidoptera, Blattläuse, Milben, Nematoden, weiße Fliege |
| Lektine | Lepidoptera, Blattläuse, Milben, Nematoden, weiße Fliege |
| Protease-Inhibitoren, z.B. Cystatin, Patatin, CPTI, Virgiferin | Lepidoptera, Blattläuse, Milben, Nematoden, weiße Fliege |
| Ribosomeninaktivierendes Protein | Lepidoptera, Blattläuse, Milben, Nematoden, weiße Fliege |
| Stilbensynthase | Lepidoptera, Blattläuse, Milben, Nematoden, weiße Fliege |
| HMG-CoA-Reductase | Lepidoptera, Blattläuse, Milben, Nematoden, weiße Fliege |
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungsaufnahmen, die an Nematoden-Nährstellen induziert werden | Nematoden, z.B. Wurzelknoten-Nematoden und Wurzel-Zystennematoden |

Pflanze: Zuckerrohr

| Betroffene Merkmal/ Exprimiertes Protein | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |

(fortgesetzt)

Pflanze: Zuckerrohr

| Betroffene Merkmal/ Exprimiertes Protein | Merkmal der Pflanze / Toleranz gegenüber |
|---|---|
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Betroffene Merkmal/ Exprimiertes Protein | Merkmal der Pflanze / Toleranz gegenüber |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle oder Pilz-Pathogene |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Betroffene Merkmal Exprimiertes Protein | Merkmal der Pflanze / Toleranz gegenüber |
| Rezeptorkinase | Bakterielle oder Pilz-Pathogene |
| Polypeptid mit der Wirkung, eine Überempfindlichkeitsreaktion auszulösen | Bakterielle oder Pilz-Pathogene |
| Gene der systemischen erworbenen Widerstandskraft (SAR) | Virale, bakterielle Pilz- und Nematoden-Pathogene |
| Lytisch wirkendes Protein | Bakterielle oder Pilz-Pathogene |
| Lysozym | Bakterielle oder Pilz-Pathogene, z.B. Clavibacter |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie SCMV, SrMV |
| Hüllproteine | Viren wie SCMV, SrMV |
| 17kDa oder 60 kDa Protein | Viren wie SCMV, SrMV |
| Einschlussproteine des Kerns z.B. a oder b oder Nucleoprotein | Viren wie SCMV, SrMV |

(fortgesetzt)

| Betroffene Merkmal Exprimiertes Protein | Merkmal der Pflanze / Toleranz gegenüber |
|---|---|
| Pseudoubiquitin | Viren wie SCMV, SrMV |
| Replicase | Viren wie SCMV, SrMV |
| Toxine von Bacillus thuringiensis, VIP 3, Bacillus-cereus-Toxine, Photorabdus und Toxine von Xenorhabdus | Lepidoptera, Blattläuse, Milben, Nematoden, weiße Fliege, Käfer wie z.B. der mexikanische Reisbohrer |
| 3- Hydroxysteroidoxidase | Lepidoptera, Blattläuse, Milben, Nematoden, weiße Fliege, Käfer wie z.B. der mexikanische Reisbohrer |
| Peroxidase | Lepidoptera, Blattläuse, Milben, Nematoden, |
| Betroffene Merkmal/ Exprimiertes Protein | Merkmal der Pflanze / Toleranz gegenüber |
| | weiße Fliege, Käfer wie z.B. der mexikanische Reisbohrer |
| Aminopeptidase-Inhibitoren, z.B. Leucin Aminopeptidase-Inhibitor | Lepidoptera, Blattläuse, Milben, Nematoden, weiße Fliege, Käfer wie z.B. der mexikanische Reisbohrer |
| Lektine | Lepidoptera, Blattläuse, Milben, Nematoden, weiße Fliege, Käfer wie z.B. der mexikanische Reisbohrer |
| Protease-Inhibitoren, z.B. Cystatin, Patatin, CPTI, Virgiferin | Lepidoptera, Blattläuse, Milben, Nematoden, weiße Fliege, Käfer wie z.B. der mexikanische Reisbohrer |
| Ribosomeninaktivierendes Protein | Lepidoptera, Blattläuse, Milben, Nematoden, weiße Fliege, Käfer wie z.B. der mexikanische Reisbohrer |
| Stilbensynthase | Lepidoptera, Blattläuse, Milben, Nematoden, weiße Fliege, Käfer wie z.B. der mexikanische Reisbohrer |
| HMG-CoA-Reductase | Lepidoptera, Blattläuse, Milben, Nematoden, weiße Fliege, Käfer wie z.B. der mexikanische Reisbohrer |
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungsaufnahmen, die an Nematoden-Nährstellen induziert werden | Nematoden, z.B. Wurzelknoten-Nematoden und Wurzel-Zystennematoden |

Pflanze: Sonnenblume

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Betroffene Struktur/ Exprimiertes Protein | Merkmal der Pflanze / Toleranz gegenüber |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |

(fortgesetzt)

| Betroffene Struktur/ Exprimiertes Protein | Merkmal der Pflanze / Toleranz gegenüber |
|---|---|
| Polyphenoloxidase oder Polyphenol-Oxidase (Antisense) | Bakterielle oder Pilz-Pathogene |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene, z.B. Sklerotinia |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Rezeptorkinase | Bakterielle oder Pilz-Pathogene |
| Polypeptid mit der Wirkung, eine Überempfindlichkeitsreaktion auszulösen | Bakterielle oder Pilz-Pathogene |
| Gene der systemischen erworbenen Widerstandskraft (SAR) | Virale, bakterielle Pilz- und Nematoden-Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie CMV, TMV |
| Hüllproteine | Viren wie CMV, TMV |
| 17kDa oder 60 kDa Protein | Viren wie CMV, TMV |
| Einschlussproteine des Kerns z.B. a oder b oder Nucleoprotein | Viren wie CMV, TMV |
| Pseudoubiquitin | Viren wie CMV, TMV |
| Replicase | Viren wie CMV, TMV |
| Toxine von Bacillus thuringiensis, VIP 3, Bacillus-cereus-Toxine, Photorabdus und Toxine von Xenorhabdus | Lepidoptera, Blattläuse, Milben, Nematoden, weiße Fliege, Käfer |
| 3- Hydroxysteroidoxidase | Lepidoptera, Blattläuse, Milben, Nematoden, weiße Fliege, Käfer |
| Peroxidase | Lepidoptera, Blattläuse, Milben, Nematoden, weiße Fliege, Käfer |
| Aminopeptidase-Inhibitoren, z.B. Leucin Aminopeptidase-Inhibitor | Lepidoptera, Blattläuse, Milben, Nematoden, weiße Fliege, Käfer |
| Lektine | Lepidoptera, Blattläuse, Milben, Nematoden, weiße Fliege, Käfer |
| Protease-Inhibitoren, z.B. Cystatin, Patatin, CPTI, Virgiferin | Lepidoptera, Blattläuse, Milben, Nematoden, weiße Fliege, Käfer |
| Ribosomeninaktivierendes Protein | Lepidoptera, Blattläuse, Milben, Nematoden, weiße Fliege, Käfer |
| Stilbensynthase | Lepidoptera, Blattläuse, Milben, Nematoden, weiße Fliege, Käfer |
| HMG-CoA-Reductase | Lepidoptera, Blattläuse, Milben, Nematoden, weiße Fliege, Käfer |
| Schlüpfauslösefaktor für Zystennematoden | Zystennematoden |

(fortgesetzt)

| Betroffene Struktur/ Exprimiertes Protein | Merkmal der Pflanze / Toleranz gegenüber |
|---|---|
| Barnase | Nematoden, z.B. Wurzelknoten-Nematoden und Zystennematoden |
| CBI | Wurzelknotennematoden |
| Prinzipien zur Verhinderung der Nahrungsaufnahmen, die an Nematoden-Nährstellen induziert werden | Nematoden, z.B. Wurzelknoten-Nematoden und Wurzel-Zystennematoden |

Pflanzen: Zuckerrübe, Rüben

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, |
| Betroffene Struktur/ Exprimiertes Protein | Merkmal der Pflanze / Toleranz gegenüber |
| Hydroxyphenylpyruvat-Dioxygenase (HPPD) | Cyclohexandione Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle oder Pilz-Pathogene |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene, z.B. Sklerotinia |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Betroffene Struktur / exprimiertes Prinzip | Merkmal der Pflanze / Toleranz gegenüber |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz_Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| AX + WIN-Proteine | Bakterielle und Pilz-Pathogene wie Cercospora beticola |
| Rezeptorkinase | Bakterielle oder Pilz-Pathogene |

(fortgesetzt)

| Betroffene Struktur/ Exprimiertes Protein | Merkmal der Pflanze / Toleranz gegenüber |
|---|---|
| Polypeptid mit der Wirkung, eine Überempfindlichkeitsreaktion auszulösen | Bakterielle oder Pilz-Pathogene |
| Gene der systemischen erworbenen Widerstandskraft (SAR) | Virale, bakterielle Pilz- und Nematoden-Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie etwa BNYVV |
| Hüllproteine | Viren wie etwa BNYVV |
| 17kDa oder 60 kDa Protein | Viren wie etwa BNYVV |
| Einschlussproteine des Kerns z.B. a oder b oder Nucleoprotein | Viren wie etwa BNYVV |
| Pseudoubiquitin | Viren wie etwa BNYVV |
| Replicase | Viren wie etwa BNYVV |
| Toxine von Bacillus thuringiensis, VIP 3, Bacillus-cereus-Toxine, Photorabdus und Toxine von Xenorhabdus | Lepidoptera, Blattläuse, Milben, Nematoden, weiße Fliege, Käfer, Wurzelfliegen |
| 3- Hydroxysteroidoxidase | Lepidoptera, Blattläuse, Milben, Nematoden, weiße Fliege, Käfer, Wurzelfliegen |
| Peroxidase | Lepidoptera, Blattläuse, Milben, Nematoden, weiße Fliege, Käfer, Wurzelfliegen |
| Aminopeptidase-Inhibitoren, z.B. Leucin Aminopeptidase-Inhibitor | Lepidoptera, Blattläuse, Milben, Nematoden, weiße Fliege, Käfer, Wurzelfliegen |
| Lektine | Lepidoptera, Blattläuse, Milben, Nematoden, weiße Fliege, Käfer, Wurzelfliegen |
| Protease-Inhibitoren, z.B. Cystatin, Patatin, CPTI, Virgiferin | Lepidoptera, Blattläuse, Milben, Nematoden, weiße Fliege, Käfer, Wurzelfliegen |
| Ribosomeninaktivierendes Protein | Lepidoptera, Blattläuse, Milben, Nematoden, weiße Fliege, Käfer, Wurzelfliegen |
| Stilbensynthase | Lepidoptera, Blattläuse, Milben, Nematoden, weiße Fliege, Käfer, Wurzelfliegen |
| HMG-CoA-Reductase | Lepidoptera, Blattläuse, Milben, Nematoden, weiße Fliege, Käfer, Wurzelfliegen |
| Schlüpfauslösefaktor für Zystennematoden | Zystennematoden |
| Barnase | Nematoden, z.B. Wurzelknoten-Nematoden und Zystennematoden |
| Resistenz-Stelle für Zystennematoden der Rüben | Zystennematoden |
| CBI | Wurzelknotennematoden |
| Prinzipien zur Verhinderung der Nahrungsaufnahmen, die Nahrungsaufnahmen, die induziert werden | Nematoden, z.B. Wurzelknoten-Nematoden und Wurzel-Zystennematoden |

Tabelle 2

| |
|---|
| Die folgenden Abkürzungen wurden in der Tabelle benutzt: |
| Aktives Prinzip der transgenen Pflanze: AP |
| Photorhabdus luminescens: PL |
| Xenorhabdus nematophilus: XN |
| Proteinase-Inhibitoren: Plnh. |

(fortgesetzt)

| Pflanzenlektine PLec.<br>Agglutinine: Aggl.<br>3-Hydroxysteroidoxidase: HO<br>Cholesterinoxidase: CO<br>Chitinase: CH<br>Glucanase: GL<br>Stilbensynthase SS | |
|---|---|
| AP | Kontrolle von |
| CryIA(a) | Adoxophyes spp. |
| CryIA(a) | Agrotis spp. |
| CryIA(a) | Alabama argiliaceae |
| CryIA(a) | Anticarsia gemmatalis |
| CryIA(a) | Chilo spp. |
| CryIA(a) | Clysia ambiguella |
| CryIA(a) | Crocidolomia binotalis |
| CryIA(a) | Cydia spp. |
| CryIA(a) | Diparopsis castanea |
| CryIA(a) | Earias spp. |
| CryIA(a) | Ephestia spp. |
| CryIA(a) | Heliothis spp. |
| CryIA(a) | Heliula undalis |
| CryIA(a) | Keiferia lycopersicella |
| CryIA(a) | Leucoptera scitella |
| CryIA(a) | Lithocollethis spp. |
| CryIA(a) | Lobesia botrana |
| CryIA(a) | Ostrinia nubilalis |
| CryIA(a) | Pandemis spp. |
| CryIA(a) | Pectinophora gossyp. |
| CryIA(a) | Phyllocnistis citrella |
| CryIA(a) | Pieris spp. |
| CryIA(a) | Plutella xylostella |
| CryIA(a) | Scirpophaga spp. |
| CryIA(a) | Sesamia spp. |
| CryIA(a) | Sparganothis spp. |
| CryIA(a) | Spodoptera spp. |
| CryIA(a) | Tortrix spp. |
| CryIA(a) | Trichoplusia ni |
| CryIA(a) | Agriotes spp. |
| CryIA(a) | Anthonomus grandis |
| CryIA(a) | Curculio spp. |

(fortgesetzt)

| AP | Kontrolle von |
|---|---|
| CryIA(a) | Diabrotica balteata |
| CryIA(a) | Leptinotarsa spp. |
| CryIA(a) | Lissorhoptrus spp. |
| CryIA(a) | Otiorhynchus spp. |
| CryIA(a) | Aleurothrixus spp. |
| CryIA(a) | Aleyrodes spp. |
| CryIA(a) | Aonidiella spp. |
| CryIA(a) | Aphididea spp. |
| CryIA(a) | Aphis spp. |
| CryIA(a) | Bemisia tabaci |
| CryIA(a) | Empoasca spp. |
| CryIA(a) | Mycus spp. |
| CryIA(a) | Nephotettix spp. |
| CryIA(a) | Nilaparvata spp. |
| CryIA(a) | Pseudococcus spp. |
| CryIA(a) | Psylla spp. |
| CryIA(a) | Quadraspidiotus spp. |
| CryIA(a) | Schizaphis spp. |
| CryIA(a) | Trialeurodes spp. |
| CryIA(a) | Lyriomyza spp. |
| CryIA(a) | Oscinella spp. |
| CryIA(a) | Phorbia spp. |
| CryIA(a) | Frankliniella spp. |
| CryIA(a) | Thrips spp. |
| CryIA(a) | Scirtothrips aurantii |
| CryIA(a) | Aceria spp. |
| CryIA(a) | Aculus spp. |
| CryIA(a) | Brevipaipus spp. |
| CryIA(a) | Panonychus spp. |
| CryIA(a) | Phyllocoptruta spp. |
| CryIA(a) | Tetranychus spp. |
| CryIA(a) | Heterodera spp. |
| CryIA(a) | Meloidogyne spp. |
| CryIA(b) | Adoxophyes spp |
| CryIA(b) | Agrotis spp |
| CryIA(b) | Alabama argillaceae |
| CryIA(b) | Anticarsia genunatalis |
| CryIA(b) | Chilo spp. |

(fortgesetzt)

| AP | Kontrolle von |
|---|---|
| CrylA(b) | Ciysia ambiguella |
| CrylA(b) | Crocidolomia binotaiis |
| CrylA(b) | Cydia spp. |
| CrylA(b) | Diparopsis castanea |
| CrylA(b) | Earias spp. |
| CrylA(b) | Ephestia spp. |
| CrylA(b) | Heliothis spp. |
| CrylA(b) | Hellula undalis |
| CrylA(b) | Keiferia lycopersicella |
| CrylA(b) | Leucoptera scitella |
| CrylA(b) | Lithocollethis spp. |
| CrylA(b) | Lobesia botrana |
| CrylA(b) | Ostrinia nubilalis |
| CrylA(b) | Pandemis spp. |
| CrylA(b) | Pectinophora gossyp. |
| CrylA(b) | Phyllocnistis citrella |
| CrylA(b) | Pieris spp. |
| CrylA(b) | Plutelia xyiostella |
| CrylA(b) | Scirpophaga spp. |
| CrylA(b) | Sesamia spp. |
| CrylA(b) | Sparganothis spp. |
| CrylA(b) | Spodoptera spp. |
| CrylA(b) | Tortrix spp. |
| CrylA(b) | Trichoplusia ni |
| CrylA(b) | Agriotes spp. |
| CrylA(b) | Anthonomus grandis |
| CrylA(b) | Curculio spp. |
| CrylA(b) | Diabrotica balteata |
| CrylA(b) | Leptinotarsa spp. |
| CrylA(b) | Lissorhoptrus spp. |
| CrylA(b) | Otiorhynchus spp. |
| CrylA(b) | Aleurothrixus spp. |
| CrylA(b) | Aleyrodes spp. |
| CrylA(b) | Aonidiella spp. |
| CrylA(b) | Aphididae spp. |
| CrylA(b) | Aphis spp. |
| CrylA(b) | Bemisia tabaci |
| CrylA(b) | Empoasca spp. |

(fortgesetzt)

| AP | Kontrolle von |
|---|---|
| CryIA(b) | Mycus spp. |
| CryIA(b) | Nephotettix spp. |
| CryIA(b) | Nilaparvata spp. |
| CryIA(b) | Pseudococcus spp. |
| CryIA(b) | Psylla spp. |
| CryIA(b) | Quadraspidiotus spp. |
| CryIA(b) | Schizaphis spp. |
| CryIA(b) | Trialeurodes spp. |
| CryIA(b) | Lyriomyza spp. |
| CryIA(b) | Oscinella spp. |
| CryIA(b) | Phorbia spp. |
| CryIA(b) | Frankliniella spp. |
| CryIA(b) | Thrips spp. |
| CryIA(b) | Scirtothrips aurantii |
| CryIA(b) | Aceria spp. |
| CryIA(b) | Aculus spp. |
| CryIA(b) | Brevipalpus spp. |
| CryIA(b) | Panonychus spp. |
| CryIA(b) | Phyllocoptruta spp. |
| CryIA(b) | Tetranychus spp. |
| CryIA(b) | Heterodera spp. |
| CryIA(b) | Meloidogyne spp. |
| CryIA(c) | Adoxophyes spp. |
| CryIA(c) | Agrotis spp. |
| CryIA(c) | Alabama argillaceae |
| CryIA(c) | Anticarsia gemmatalis |
| CryIA(c) | Chilo spp. |
| CryIA(c) | Ciysia ambiguella |
| CryIA(c) | Crocidolomia binotalis |
| CryIA(c) | Cydia spp. |
| CryIA(c) | Diparopsis castanea |
| CryIA(c) | Earias spp. |
| CryIA(c) | Ephestia spp. |
| CryIA(c) | Heliothis spp. |
| CryIA(c) | Hellula undalis |
| CryIA(c) | Keiferia lycopersicella |
| CryIA(c) | Leucoptera scitella |
| CryIA(c) | Lithocollethis spp. |

(fortgesetzt)

| AP | Kontrolle von |
|---|---|
| CrylA(c) | Lobesia botrana |
| CrylA(c) | Ostrinia nubilalis |
| CrylA(c) | Pandemis spp. |
| CrylA(c) | Pectinophora gossypielia. |
| CrylA(c) | Phyllocnistis citrella |
| CrylA(c) | Pieris spp. |
| CrylA(c) | Plutella xyiostella |
| CrylA(c) | Scirpophaga spp. |
| CrylA(c) | Sesamia spp. |
| CrylA(c) | Sparganothis spp. |
| CrylA(c) | Spodoptera spp. |
| CrylA(c) | Tortrix spp. |
| CrylA(c) | Trichoplusia ni |
| CrylA(c) | Agriotes spp. |
| CrylA(c) | Anthonomus grandis |
| CrylA(c) | Curculio spp. |
| CrylA(c) | Diabrotica baiteata |
| CrylA(c) | Leptinotarsa spp. |
| CrylA(c) | Lissorhoptrus spp. |
| CrylA(c) | Otiorhynchus spp. |
| CrylA(c) | Aleurothrixus spp. |
| CrylA(c) | Aleyrodes spp. |
| CrylA(c) | Aonidiella spp. |
| CrylA(c) | Aphididae spp. |
| CrylA(c) | Aphis spp. |
| CrylA(c) | Bemisia tabaci |
| CrylA(c) | Empoasca spp. |
| CrylA(c) | Mycus spp. |
| CrylA(c) | Nephotettix spp. |
| CrylA(c) | Nilaparvata spp. |
| CrylA(c) | Pseudococcus spp. |
| CrylA(c) | Psylla spp. |
| CrylA(c) | Quadraspidiotus spp. |
| CrylA(c) | Schizaphis spp. |
| CrylA(c) | Trialeurodes spp. |
| CrylA(c) | Lyriomyza spp. |
| CrylA(c) | Oscinelia spp. |
| CrylA(c) | Phorbia spp. |

(fortgesetzt)

| AP | Kontrolle von |
|---|---|
| CryIA(c) | Frankiiniella spp. |
| CryIA(c) | Thrips spp. |
| CryIA(c) | Scirtothrips aurantii |
| CryIA(c) | Aceria spp. |
| CryIA(c) | Aculus spp. |
| CryIA(c) | Brevipalpus spp. |
| CryIA(c) | Panonychus spp. |
| CryIA(c) | Phyllocoptruta spp. |
| CryIA(c) | Tetranychus spp. |
| CryIA(c) | Heterodera spp. |
| CryIA(c) | Meloidogyne spp. |
| CryIIA | Adoxophyes spp. |
| CryIIA | Agrotis spp. |
| CryIIA | Alabama argillaceae |
| CryIIA | Anticarsia gemmatalis |
| CryIIA | Chilo spp. |
| CryIIA | Clysia ambiguella |
| CryIIA | Crocidolomia binotalis |
| CryIIA | Cydia spp. |
| CryIIA | Diparopsis castanea |
| CryIIA | Earias spp. |
| CryIIA | Ephestia spp. |
| CryIIA | Heliothis spp. |
| CryIIA | Hellula undalis |
| CryIIA | Keiferia lycopersicella |
| CryIIA | Leucoptera scitella |
| CryIIA | Lithocoliethis spp. |
| CryIIA | Lobesia botrana |
| CryIIA | Ostrinia nubilalis |
| CryIIA | Pandenis spp. |
| CryIIA | Pectinophora gossyp. |
| CryIIA | Phyllocnistis citrella |
| CryIIA | Pieris spp. |
| CryIIA | Plutella xylostella |
| CryIIA | Scirpophaga spp. |
| CryIIA | Sesamia spp. |
| CryIIA | Sparganothis spp. |
| CryIIA | Spodoptera spp. |

(fortgesetzt)

| AP | Kontrolle von |
|---|---|
| CryllA | Tortrix spp. |
| CryllA | Trichoplusia ni |
| CryllA | Agriotes spp. |
| CryllA | Anthonomus grandis |
| CryllA | Curculio spp. |
| CryllA | Diabrotica balteata |
| CryllA | Leptinotarsa spp. |
| CryllA | Lissorhoptrus spp. |
| CryllA | Otiorhynchus spp. |
| CryllA | Aleurothrixus spp. |
| CryllA | Aleyrodes spp. |
| CryllA | Aonidiella spp. |
| CryllA | Aphididae spp. |
| CryllA | Aphis spp. |
| CryllA | Bemisia tabaci |
| CryllA | Empoasca spp. |
| CryllA | Mycus spp. |
| CryllA | Nephotettix spp. |
| CryllA | Nilaparvata spp. |
| CryllA | Pseudococcus spp. |
| CryllA | Psyila spp. |
| CryllA | Quadraspidiotus spp. |
| CryllA | Schizaphis spp. |
| CryllA | Trialeurodes spp. |
| CryllA | Lyriomyza spp. |
| CryllA | Oscinella spp. |
| CryllA | Phorbia spp. |
| CryllA | Frankliniella spp. |
| CryllA | Thrips spp. |
| CryllA | Scirtothrips aurantii |
| CryllA | Aceria spp. |
| CryllA | Acutus spp. |
| CryllA | Brevipalpus spp. |
| CryllA | Panonychus spp. |
| CryllA | Phyllocoptruta spp. |
| CryllA | Tetranychus spp. |
| CryllA | Heterodera spp. |
| CryllA | Meloidogyne spp. |

(fortgesetzt)

| AP | Kontrolle von |
|---|---|
| CryIIIA | Adoxophyes spp. |
| CryIIIA | Agrotis spp. |
| CryIIIA | Alabama argiiiaceae |
| CryIIIA | Anticarsia gemmataiis |
| CryIIIA | Chilo spp. |
| CryIIIA | Ciysia ambiguelia |
| CryIIIA | Crocodolomia binotalis |
| CryIIIA | Cydia spp. |
| CryIIIA | Diparopsis castanea |
| CryIIIA | Earias spp. |
| CryIIIA | Ephestia spp. |
| CryIIIA | Heliothis spp. |
| CryIIIA | Hellula undalis |
| CryIIIA | Keiferia lycopersicella |
| CryIIIA | Leucoptera scitella |
| CryIIIA | Lithocollethis spp. |
| CryIIIA | Lobesia botrana |
| CryIIIA | Ostrinia nubilalis |
| CryIIIA | Pandemis spp. |
| CryIIIA | Pectinophora gossyp. |
| CryIIIA | Phyllocnistis citrella |
| CryIIIA | Pieris spp. |
| CryIIIA | Plutella xylostella |
| CryIIIA | Scirpophaga spp. |
| CryIIIA | Sesamia spp. |
| CryIIIA | Sparganothis spp. |
| CryIIIA | Spodoptera spp. |
| CryIIIA | Tortrix spp. |
| CryIIIA | Trichoplusia ni |
| CryIIIA | Agriotes spp. |
| CryIIIA | Anthonomus grandis |
| CryIIIA | Curculio spp. |
| CryIIIA | Diabrotica balteata |
| CryIIIA | Leptinotarsa spp. |
| CryIIIA | Lissorhoptrus spp. |
| CryIIIA | Otiorhynchus spp. |
| CryIIIA | Aleurothrixus spp. |
| CryIIIA | Aleyrodes spp. |

(fortgesetzt)

| AP | Kontrolle von |
|---|---|
| CryIIIA | Aonidiella spp. |
| CryIIIA | Aphididae spp. |
| CryIIIA | Aphis spp. |
| CryIIIA | Bemisia tabaci |
| CryIIIA | Empoasca spp. |
| CryIIIA | Mycus spp. |
| CryIIIA | Nephotettix spp. |
| CryIIIA | Nilaparvata spp. |
| CryIIIA | Pseudococcus spp. |
| CryIIIA | Psylla spp. |
| CryIIIA | Quadraspidiotus spp. |
| CryIIIA | Schizaphis spp. |
| CryIIIA | Trialeurodes spp. |
| CryIIIA | Lyriomyza spp. |
| CryIIIA | Oscinella spp. |
| CryIIIA | Phorbia spp. |
| CryIIIA | Frankliniella spp. |
| CryIIIA | Thrips spp. |
| CryIIIA | Scirtothrips aurantii |
| CryIIIA | Aceria spp. |
| CryIIIA | Aculus spp. |
| CryIIIA | Brevipalpus spp. |
| CryIIIA | Panonychus spp. |
| CryIIIA | Phyllocoptruta spp. |
| CryIIIA | Tetranychus spp. |
| CryIIIA | Heterodera spp. |
| CryIIIA | Meloidogyne spp. |
| CryIIIB2 | Adoxophyes spp. |
| CryIIIB2 | Agrotis spp. |
| CryIIIB2 | Alabama argiilaceae |
| CryIIIB2 | Anticarsia gemmatalis |
| CryIIIB2 | Chilo spp. |
| CryIIIB2 | Clysia ambiguella |
| CryIIIB2 | Crocidolomia binotaiis |
| CryIIIB2 | Cydia spp. |
| CryIIIB2 | Diparopsis castanea |
| CryIIIB2 | Earias spp. |
| CryIIIB2 | Ephestia spp. |

(fortgesetzt)

| AP | Kontrolle von |
|---|---|
| CryIIIB2 | Heliothis spp. |
| CryIIIB2 | Hellula undalis |
| CryIIIB2 | Keiferia lycopersicella |
| CryIIIB2 | Leucoptera sectelia |
| CryIIIB2 | Lithocollethis spp. |
| CryIIIB2 | Lobesia botrana |
| CryIIIB2 | Ostrinia nubilalis |
| CryIIIB2 | Pandemis spp. |
| CryIIIB2 | Pectinophora gossyp. |
| CryIIIB2 | Phyllocnistis citrella |
| CryIIIB2 | Pieris spp. |
| CryIIIB2 | Plutella xylostella |
| CryIIIB2 | Scirpophaga spp. |
| CryIIIB2 | Sesamia spp. |
| CryIIIB2 | Sparganothis spp. |
| CryIIIB2 | Spodoptera spp. |
| CryIIIB2 | Tortrix spp. |
| CryIIIB2 | Trichoplusia ni |
| CryIIIB2 | Agriotes spp. |
| CryIIIB2 | Anthonomus grandis |
| CryIIIB2 | Curculio spp. |
| CryIIIB2 | Diabrotica balteata |
| CryIIIB2 | Leptinotarsa spp. |
| CryIIIB2 | Lissorhoptrus spp. |
| CryIIIB2 | Otiorhynchus spp. |
| CryIIIB2 | Aleurothrixus spp. |
| CryIIIB2 | Aleyrodes spp. |
| CryIIIB2 | Aonidiella spp. |
| CryIIIB2 | Aphididae spp. |
| CryIIIB2 | Aphis spp. |
| CryIIIB2 | Bemisia tabaci |
| CryIIIB2 | Empoasca spp. |
| CryIIIB2 | Mycus spp. |
| CryIIIB2 | Nephotettix spp. |
| CryIIIB2 | Nilaparvata spp. |
| CryIIIB2 | Pseudococcus spp. |
| CryIIIB2 | Psylla spp. |
| CryIIIB2 | Quadraspidiotus spp. |

(fortgesetzt)

| AP | Kontrolle von |
|---|---|
| CryIIIB2 | Schizaphis spp. |
| CryIIIB2 | Trialeurodes spp. |
| CryIIIB2 | Lyriornyza spp. |
| CryIIIB2 | Oscinella spp. |
| CryIIIB2 | Phorbia spp. |
| CryIIIB2 | Frankliniella spp. |
| CryIIIB2 | Thrips spp. |
| CryIIIB2 | Scirtothrips aurantii |
| CryIIIB2 | Aceria spp. |
| CryIIIB2 | Acutus spp. |
| CryIIIB2 | Brevipalpus spp. |
| CryIIIB2 | Panonychus spp. |
| CryIIIB2 | Phyllocoptruta spp. |
| CryIIIA2 | Tetranychus spp. |
| CryIIIA2 | Heterodera spp. |
| CryIIIA2 | Meloidogyne spp. |
| CytA | Adoxophyes spp. |
| CytA | Agrotis spp. |
| CytA | Alabama argiilaceae |
| CytA | Anticarsia gemmatalis |
| CytA | Chilo spp. |
| CytA | Clysia ambiguella |
| CytA | Crocidolomia binotaiis |
| CytA | Cydia spp. |
| CytA | Diparopsis castanea |
| CytA | Earias spp. |
| CytA | Ephestia spp. |
| CytA | Heliothis spp. |
| CytA | Hellula undalis |
| CytA | Keiferia lycopersicella |
| CytA | Leucoptera scitelia |
| CytA | Lithocollethis spp. |
| CytA | Lobesia botrana |
| CytA | Ostrinia nubilalis |
| CytA | Pandemis spp. |
| CytA | Pectinophora gossyp. |
| CytA | Phyllocnistis citrella |
| CytA | Pieris spp. |

(fortgesetzt)

| AP | Kontrolle von |
|---|---|
| CytA | Plutella xylostella |
| CytA | Scirpophaga spp. |
| CytA | Sesamia spp. |
| CytA | Sparganothis spp. |
| CytA | Spodoptera spp. |
| CytA | Tortrix spp. |
| CytA | Trichoplusia ni |
| CytA | Agriotes spp. |
| CytA | Anthonomus grandis |
| CytA | Curculio spp. |
| CytA | Diabrotica balteata |
| CytA | Leptinotarsa spp. |
| CytA | Lissorhoptrus spp. |
| CytA | Otiorhynchus spp. |
| CytA | Aleurothrixus spp. |
| CytA | Aleyrodes spp. |
| CytA | Aonidielia spp. |
| CytA | Aphididae spp. |
| CytA | Aphis spp. |
| CytA | Bemisia tabaci |
| CytA | Empoasca spp. |
| CytA | Mycus spp. |
| CytA | Nephotettix spp. |
| CytA | Nilaparvata spp. |
| CytA | Pseudococcus spp. |
| CytA | Psylla spp. |
| CytA | Quadraspidiotus spp. |
| CytA | Schizaphis spp. |
| CytA | Trialeurodes spp. |
| CytA | Lyriomyza spp. |
| CytA | Oscinella spp. |
| CytA | Phorbia spp. |
| CytA | Frankliniella spp. |
| CytA | Thrips spp. |
| CytA | Scirtothrips aurantii |
| CytA | Aceria spp. |
| CytA | Acutus spp. |
| CytA | Brevipalpus spp. |

(fortgesetzt)

| AP | Kontrolle von |
|---|---|
| CytA | Panonychus spp. |
| CytA | Phyllocoptruta spp. |
| CytA | Tetranychus spp. |
| CytA | Heterodera spp. |
| CytA | Meloidogyne spp. |
| VIP3 | Adoxophyes spp. |
| VIP3 | Agrotis spp. |
| VIP3 | Alabama argillaceae |
| VIP3 | Anticarsia gemmatalis |
| VIP3 | Chilo spp. |
| VIP3 | Clysia ambiguella |
| VIP3 | Crocidolomia binotalis |
| VIP3 | Cydia spp. |
| VIP3 | Diparopsis castanea |
| VIP3 | Earias spp. |
| VIP3 | Ephestia spp. |
| VIP3 | Heliothis spp. |
| VIP3 | Hellula undalis |
| VIP3 | Keiferia lycopersicella |
| VIP3 | Leucoptera scitella |
| VIP3 | Lithocollethis spp. |
| VIP3 | Lobesia botrana |
| VIP3 | Ostrinia nubilalis |
| VIP3 | Pandemis spp. |
| VIP3 | Pectinophora gossyp. |
| VIP3 | Phyllocnistis citrella |
| VIP3 | Pieris spp. |
| VIP3 | Piutella xylostella |
| VIP3 | Scirpophaga spp. |
| VIP3 | Sesamia spp. |
| VIP3 | Sparganothis spp. |
| VIP3 | Spodoptera spp. |
| VIP3 | Tortrix spp. |
| VIP3 | Trichoplusia ni |
| VIP3 | Agriotes spp. |
| VIP3 | Anthonomus grandis |
| VIP3 | Curculio spp. |

(fortgesetzt)

| AP | Kontrolle von |
|---|---|
| VIP3 | Diabrotica balteata |
| VIP3 | Leptinotarsa spp. |
| VIP3 | Lissorhoptrus spp. |
| VIP3 | Otiorhynchus spp. |
| VIP3 | Aleurothrixus spp. |
| VIP3 | Aleyrodes spp. |
| VIP3 | Aonidiella spp. |
| VIP3 | Aphididae spp. |
| VIP3 | Aphis spp. |
| VIP3 | Bemisia tabaci |
| VIP3 | Empoasca spp. |
| VIP3 | Mycus spp. |
| VIP3 | Nephotettix spp. |
| VIP3 | Niiaparvata spp. |
| VIP3 | Pseudococcus spp. |
| VIP3 | Psylla spp. |
| VIP3 | Quadraspidiotus spp. |
| VIP3 | Schizaphis spp. |
| VIP3 | Trialeurodes spp. |
| VIP3 | Lyriomyza spp. |
| VIP3 | Oscinella spp. |
| VIP3 | Phorbia spp. |
| VIP3 | Frankliniella spp. |
| VIP3 | Thrips spp. |
| VIP3 | Scirtothrips aurantii |
| VIP3 | Aceria spp. |
| VIP3 | Acutus spp. |
| VIP3 | Brevipalpus spp. |
| VIP3 | Panonychus spp. |
| VIP3 | Phyllocoptruta spp. |
| VIP3 | Tetranychus spp. |
| VIP3 | Heterodera spp. |
| VIP3 | Meloidogyne spp. |
| GL | Adoxophyes spp. |
| GL | Agrotis spp. |
| GL | Alabama argillaceae |
| GL | Anticarsia gemmatalis |
| GL | Chilo spp. |

(fortgesetzt)

| AP | Kontrolle von |
|---|---|
| GL | Clysia ambiguella |
| GL | Crocidolomia binotalis |
| GL | Cydia spp. |
| GL | Diparopsis castanea |
| GL | Earias spp. |
| GL | Ephestia spp. |
| GL | Heliothis spp. |
| GL | Hellula undalis |
| GL | Keiferia lycopersicella |
| GL | Leucoptera scitella |
| GL | Lithocollethis spp. |
| GL | Lobesia botrana |
| GL | Ostrinia nubilalis |
| GL | Pandemis spp. |
| GL | Pectinophora gossyp. |
| GL | Phyliocnistis citrella |
| GL | Pieris spp. |
| GL | Plutella xylostella |
| GL | Scirpophaga spp. |
| GL | Sesamia spp. |
| GL | Sparganothis spp. |
| GL | Spodoptera spp. |
| GL | Tortrix spp. |
| GL | Trichoplusia ni |
| GL | Agriotes spp. |
| GL | Anthonomus grandis |
| GL | Curculio spp. |
| GL | Diabrotica balteata |
| GL | Leptinotarsa spp. |
| GL | Lissorhoptrus spp. |
| GL | Otiorhynchus spp. |
| GL | Aleurothrixus spp. |
| GL | Aleyrodes spp. |
| GL | Aonidiella spp. |
| GL | Aphididae spp. |
| GL | Aphis spp. |
| GL | Bemisia tabaci |
| GL | Empoasca spp. |

(fortgesetzt)

| AP | Kontrolle von |
|---|---|
| GL | Mycus spp. |
| GL | Nephotettix spp. |
| GL | Nilaparvata spp. |
| GL | Pseudococcus spp. |
| GL | Psylia spp. |
| GL | Quadraspidiotus spp. |
| GL | Schizaphis spp. |
| GL | Trialeurodes spp. |
| GL | Lyriomyza spp. |
| GL | Oscinella spp. |
| GL | Phorbia spp. |
| GL | Frankliniella spp. |
| GL | Thrips spp. |
| GL | Scirtothrips aurantii |
| GL | Aceria spp. |
| GL | Aculus spp. |
| GL | Brevipalpus spp. |
| GL | Panonychus spp. |
| GL | Phyliocoptruta spp. |
| GL | Tetranychus spp. |
| GL | Heterodera spp. |
| GL | Meioidogyne spp. |
| PL | Adoxophyesspp. |
| PL | Agrotis spp. |
| PL | Alabama argillaceae |
| PL | Anticarsia gemmatalis |
| PL | Chilo spp. |
| PL | Clysia ambiguella |
| PL | Crocidolomia binotalis |
| PL | Cydia spp. |
| PL | Diparopsis castanea |
| PL | Earias spp. |
| PL | Ephestia spp. |
| PL | Heliothis spp. |
| PL | Hellula undaiis |
| PL | Keiferia lycopersicella |
| PL | Leucoptera scitella |
| PL | Lithocollethis spp. |

(fortgesetzt)

| AP | Kontrolle von |
|---|---|
| PL | Lobesia botrana |
| PL | Ostrinia nubilalis |
| PL | Pandemis spp. |
| PL | Pectinophora gossyp. |
| PL | Phyllocnistis citrella |
| PL | Pieris spp. |
| PL | Plutella xylostella |
| PL | Scirpophaga spp. |
| PL | Sesamia spp. |
| PL | Sparganothis spp. |
| PL | Spodoptera spp. |
| PL | Tortrix spp. |
| PL | Trichoplusia ni |
| PL | Agriotes spp. |
| PL | Anthonomus grandis |
| PL | Curculio spp. |
| PL | Diabrotica balteata |
| PL | Leptinotarsa spp. |
| PL | Lissorhoptrus spp. |
| PL | Otiorhynchus spp. |
| PL | Aleurothrixus spp. |
| PL | Aleyrodes spp. |
| PL | Aonidiella spp. |
| PL | Aphididae spp. |
| PL | Aphis spp. |
| PL | Bemisia tabaci |
| PL | Empoasca spp. |
| PL | Mycus spp. |
| PL | Nephotettix spp. |
| PL | Nilaparvata spp. |
| PL | Pseudococcus spp. |
| PL | Psylla spp. |
| PL | Quadraspidiotus spp. |
| PL | Schizaphis spp. |
| PL | Trialeurodes spp. |
| PL | Lyriomyza spp. |
| PL | Oscinella spp. |
| PL | Phorbia spp. |

(fortgesetzt)

| AP | Kontrolle von |
|---|---|
| PL | Franklinieila spp. |
| PL | Thrips spp. |
| PL | Scirtothrips auranii |
| PL | Aceria spp. |
| PL | Aculus spp. |
| PL | Brevipalpus spp. |
| PL | Panonychus spp. |
| PL | Phyllocoptruta spp. |
| PL | Tetranychus spp. |
| PL | Heterodera spp. |
| PL | Meloidogyne spp. |
| XN | Adoxophyes spp. |
| XN | Agrotis spp. |
| XN | Alabama argiliaceae |
| XN | Anticarsia gemmatalis |
| XN | Chilo spp. |
| XN | Clysia ambiguella |
| XN | Crocidolomia binotalis |
| XN | Cydia spp. |
| XN | Diparopsis castanea |
| XN | Earias spp. |
| XN | Ephestia spp. |
| XN | Heliothis spp. |
| XN | Helluia undaiis |
| XN | Keiferia lycopersicella |
| XN | Leucoptera scitella |
| XN | Lithocollethis spp. |
| XN | Lobesia botrana |
| XN | Ostrinia nubilalis |
| XN | Pandemis spp. |
| XN | Pectinophora gossyp. |
| XN | Phyllocnistis citrella |
| XN | Pieris spp. |
| XN | Plutella xylostella |
| XN | Scirpophaga spp. |
| XN | Sesamia spp. |
| XN | Sparganothis spp. |
| XN | Spodoptera spp. |

(fortgesetzt)

| AP | Kontrolle von |
|---|---|
| XN | Tortrix spp. |
| XN | Trichoplusia ni |
| XN | Agriotes spp. |
| XN | Anthonomus grandis |
| XN | Curculio spp. |
| XN | Diabrotica balteata |
| XN | Leptinotarsa spp. |
| XN | Lissorhoptrus spp. |
| XN | Otiorhynchus spp. |
| XN | Aleurothrixus spp. |
| XN | Aleyrodes spp. |
| XN | Aonidiella spp. |
| XN | Aphididae spp. |
| XN | Aphis spp. |
| XN | Bemisia tabaci |
| XN | Empoasca spp. |
| XN | Mycus spp. |
| XN | Nephotettix spp. |
| XN | Nilaparvata spp. |
| XN | Pseudococcus spp. |
| XN | Psylla spp. |
| XN | Quadraspidiotus spp. |
| XN | Schizaphis spp. |
| XN | Trialeurodes spp. |
| XN | Lyriomyza spp. |
| XN | Oscinella spp. |
| XN | Phorbia spp. |
| XN | Frankliniella spp. |
| XN | Thrips spp. |
| XN | Scirtothrips aurantii |
| XN | Aceria spp. |
| XN | Aculus spp. |
| XN | Brevipalpus spp. |
| XN | Panonychus spp. |
| XN | Phyllocoptruta spp. |
| XN | Tetranychus spp. |
| XN | Heterodera spp. |
| XN | Meloidogyne spp. |

(fortgesetzt)

| AP | Kontrolle von |
|---|---|
| Plnh. | Adoxophyes spp. |
| Plnh. | Agrotis spp. |
| Plnh. | Alabama argiliaceae |
| Plnh. | Anticarsia gemmatalis |
| Plnh. | Chilo spp. |
| Plnh. | Clysia ambiguella |
| Plnh. | Crocidolomia |
| | binotalis |
| Plnh. | Cydia spp. |
| Plnh. | Diparopsis castanea |
| Plnh. | Earias spp. |
| Plnh. | Ephestia spp. |
| Plnh. | Heliothis spp. |
| Plnh. | Heliuia undalis |
| Plnh. | Keiferia lycopersicella |
| Plnh. | Leucoptera scitella |
| Plnh. | Lithocollethis spp. |
| Plnh. | Lobesia botrana |
| Plnh. | Ostrinia nubilalis |
| Plnh. | Pandemis spp. |
| Plnh. | Pectinophora gossyp. |
| Plnh. | Phyllocnistis citrelia |
| Plnh. | Pieris spp. |
| Plnh. | Plutella xylostella |
| Plnh. | Scirpophaga spp. |
| Plnh. | Sesamia spp. |
| Plnh. | Sparganothis spp. |
| Plnh. | Spodoptera spp. |
| Plnh. | Tortrix spp. |
| Plnh. | Trichoplusia ni |
| Plnh. | Agriotes spp. |
| Plnh. | Anthonomus grandis |
| Plnh. | Curculio spp. |
| Plnh. | Diabrotica balteata |
| Plnh. | Leptinotarsa spp. |
| Plnh. | Lissorhoptrus spp. |
| Plnh. | Otiorhynchus spp. |
| Plnh. | Aleurothrixus spp. |

(fortgesetzt)

| AP | Kontrolle von |
|---|---|
| PInh. | Aleyrodes spp. |
| PInh. | Aonidiella spp. |
| PInh. | Aphididae spp. |
| PInh. | Aphis spp. |
| PInh. | Bemisia tabaci |
| PInh. | Empoasca spp. |
| PInh. | Mycus spp. |
| PInh. | Nephotettix spp. |
| PInh. | Nilaparvata spp. |
| PInh. | Pseudococcus spp. |
| PInh. | Psylla spp. |
| PInh. | Quadraspidiotus spp. |
| PInh. | Schizaphis spp. |
| PInh. | Trialeurodes spp. |
| PInh. | Lyriomyza spp. |
| PInh. | Oscinella spp. |
| PInh. | Phorbia spp. |
| PInh. | Frankliniella spp. |
| PInh. | Thrips spp. |
| PInh. | Scirtothrips aurantii |
| PInh. | Aceria spp. |
| PInh. | Acutus spp. |
| PInh. | Brevipalpus spp. |
| PInh. | Panonychus spp. |
| PInh. | Phyllocoptruta spp. |
| PInh. | Tetranychus spp. |
| PInh. | Heterodera spp. |
| PInh. | Meloidogyne spp. |
| PLec. | Adoxophyes spp. |
| PLec. | Agrotis spp. |
| PLec. | Alabama argillaceae |
| PLec. | Anticarsia gemmatalis |
| PLec. | Chilo spp. |
| PLec. | Clysia ambiguella |
| PLec. | Crocidolomia binotalis |
| PLec. | Cydia spp. |
| PLec. | Diparopsis castanea |
| PLec. | Earias spp. |

(fortgesetzt)

| AP | Kontrolle von |
|---|---|
| PLec. | Ephestia spp. |
| PLec. | Heliothis spp. |
| PLec. | Hellula undalis |
| PLec. | Keiferia lycopersicella |
| PLec. | Leucoptera scitella |
| PLec. | Lithocollethis spp. |
| PLec. | Lobesia botrana |
| PLec. | Ostrinia nubilalis |
| PLec. | Pandemis spp. |
| PLec. | Pectinophora gossyp. |
| PLec. | Phyllocnistis citrella |
| PLec. | Pieris spp. |
| PLec. | Plutella xylostella |
| PLec. | Scirpophaga spp. |
| PLec. | Sesamia spp. |
| PLec. | Sparganothis spp. |
| PLec. | Spodoptera spp. |
| PLec. | Tortrix spp. |
| PLec. | Trichoplusia ni |
| PLec. | Agriotes spp. |
| PLec. | Anthonomus grandis |
| PLec. | Curculio spp. |
| PLec. | Diabrotica balteata |
| PLec. | Leptinotarsa spp. |
| PLec. | Lissorhoptrus spp. |
| PLec. | Otiorhynchus spp. |
| PLec. | Aleurothrixus spp. |
| PLec. | Aleyrodes spp. |
| PLec. | Aonidiella spp. |
| PLec. | Aphididae spp. |
| PLec. | Aphis spp. |
| PLec. | Bemisia tabaci |
| PLec. | Empoasca spp. |
| PLec. | Mycus spp. |
| PLec. | Nephotettix spp. |
| PLec. | Nilaparvata spp. |
| PLec. | Pseudococcus spp. |
| PLec. | Psylia spp. |

(fortgesetzt)

| AP | Kontrolle von |
|---|---|
| PLec. | Quadraspidiotus spp. |
| PLec. | Schizaphis spp. |
| PLec. | Trialeurodes spp. |
| PLec. | Lyriomyza spp. |
| PLec. | Oscinella spp. |
| PLec. | Phorbia spp. |
| PLec. | Frankliniella spp. |
| PLec. | Thrips spp. |
| PLec. | Scirtothnps aurantii |
| PLec. | Aceria spp. |
| PLec. | Aculus spp. |
| PLec. | Brevipalpus spp. |
| PLec. | Panonychus spp. |
| PLec. | Phyllocoptruta spp. |
| PLec. | Tetranychus spp. |
| PLec. | Heterodera spp. |
| PLec. | Meloidogyne spp. |
| Aggl. | Adoxophyes spp. |
| Aggl. | Agrotis spp. |
| Aggl. | Alabama |
| | argillaceae |
| Aggl. | Anticarsia gemmatalis |
| Aggl. | Chilo spp. |
| Aggl. | Clysia ambiguella |
| Aggl. | Crocidolomia |
| | binotalis |
| Aggl. | Cydia spp. |
| Aggl. | Diparopsis |
| | castanea |
| Aggl. | Earias spp. |
| Aggl. | Ephestia spp. |
| Aggl. | Heliothis spp. |
| Aggl. | Hellula undalis |
| Aggl. | Keiferia |
| | lycopersicella |
| Aggl. | Leucoptera scitella |
| Aggl. | Lithocollethis spp. |
| Aggl. | Lobesia botrana |

(fortgesetzt)

| AP | Kontrolle von |
|---|---|
| Aggl. | Ostrinia nubilalis |
| Aggl. | Pandemis spp. |
| Aggl. | Pectinophora |
| | gossyp. |
| Aggl. | Phyllocnistis citrella |
| Aggl. | Pieris spp. |
| Aggl. | Plutiia xylostella |
| Aggl. | Scirpophaga spp. |
| Aggl. | Sesamia spp. |
| Aggl. | Sparganothis spp. |
| Aggl. | Spodoptera spp. |
| Aggl. | Tortrix spp. |
| Aggl. | Trichoplusia ni |
| Aggl. | Agriotes spp. |
| Aggl. | Anthonomus grandis |
| Aggl. | Curculio spp. |
| Aggl. | Diabrotica balteata |
| Aggl. | Leptinotarsa spp. |
| Aggl. | Lissorhoptrus spp. |
| Aggl. | Otiorhynchus spp. |
| Aggl. | Aleurothrixus spp. |
| Aggl. | Aleyrodes spp. |
| Aggl. | Aonidiella spp. |
| Aggl. | Aphididae spp. |
| Aggl. | Aphis spp. |
| Aggl. | Bemisia tabaci |
| Aggl. | Empoasca spp. |
| Aggl. | Mycus spp. |
| Aggl. | Nephotettix spp. |
| Aggl. | Nilaparvata spp. |
| Aggl. | Pseudococcus spp. |
| Aggl. | Psylla spp. |
| Aggl. | Quadraspidiotus spp. |
| Aggl. | Schizaphis spp. |
| Aggl. | Trialeurodes spp. |
| Aggl. | Lyriomyza spp. |
| Aggl. | Oscinella spp. |
| Aggl. | Phorbia spp. |

(fortgesetzt)

| AP | Kontrolle von |
|---|---|
| Aggl. | Frankliniella spp. |
| Aggl. | Thrips spp. |
| Aggl. | Scirtothrips auranti |
| Aggl. | Aceria spp. |
| Aggl. | Aculus spp. |
| Aggl. | Brevipalpus spp. |
| Aggl. | Panonychus spp. |
| Aggl. | Phyllocoptruta spp |
| Aggl. | Tetranychus spp. |
| Aggl. | Heterodera spp. |
| Aggl. | Meloidogyne spp. |
| CO | Adoxophyes spp. |
| CO | Agrotis spp. |
| CO | Alabama argiliaceae |
| CO | Anticarsia gemmatalis |
| CO | Chilo spp. |
| CO | Ciysia ambiguella |
| CO | Crocidolomia binotalis |
| CO | Cydia spp. |
| CO | Diparopsis castanea |
| CO | Earias spp. |
| CO | Ephestia spp. |
| CO | Heliothis spp. |
| CO | Hellula undalis |
| CO | Keiferia lycopersicella |
| CO | Leucoptera scitella |
| CO | Lithocollethis spp. |
| CO | Lobesia botrana |
| CO | Ostrinia nubilalis |
| CO | Pandemis spp. |
| CO | Pectinophora gossyp. |
| CO | Phyllocnistis citrella |
| CO | Pieris spp. |
| CO | Plutella xylostella |
| CO | Scirpophaga spp. |
| CO | Sesamia spp. |
| CO | Sparganothis spp. |
| CO | Spodoptera spp. |

(fortgesetzt)

| AP | Kontrolle von |
|---|---|
| CO | Tortrix spp. |
| CO | Trichoplusia ni |
| CO | Agriotes spp. |
| CO | Anthonomus grandis |
| CO | Curculio spp. |
| CO | Diabrotica balteata |
| CO | Leptinotarsa spp. |
| CO | Lissorhoptrus spp. |
| CO | Otiorhynchus spp. |
| CO | Aleurothrixus spp. |
| CO | Aleyrodes spp. |
| CO | Aonidielia spp. |
| CO | Aphididae spp. |
| CO | Aphis spp. |
| CO | Bemisia tabaci |
| CO | Empoasca spp. |
| CO | Mycus spp. |
| CO | Nephotettix spp. |
| CO | Nilaparvata spp. |
| CO | Pseudococcus spp. |
| CO | Psylla spp. |
| CO | Quadraspidiotus spp. |
| CO | Schizaphis spp. |
| CO | Trialeurodes spp. |
| CO | Lyriomyza spp. |
| CO | Oscinella spp. |
| CO | Phorbia spp. |
| CO | Frankliniella spp. |
| CO | Thrips spp. |
| CO | Scirtothrips aurantii |
| CO | Aceria spp. |
| CO | Acutus spp. |
| CO | Brevipalpus spp. |
| CO | Panonychus spp. |
| CO | Phyllocoptruta spp. |
| CO | Tetranychus spp. |
| CO | Heterodera spp. |
| CO | Meloidogyne spp. |

(fortgesetzt)

| AP | Kontrolle von |
|---|---|
| CH | Adoxophyes spp. |
| CH | Agrotis spp. |
| CH | Alabama argillaceae |
| CH | Anticarsia |
| | gemmatalis |
| CH | Chilo spp. |
| CH | Clysia ambiguella |
| CH | Crocidolomia binotalis |
| CH | Cydia spp. |
| CH | Diparopsis castanea |
| CH | Earias spp. |
| CH | Ephestia spp. |
| CH | Heliothis spp. |
| CH | Hellula undalis |
| CH | Keiferia lycopersicella |
| CH | Leucoptera scitella |
| CH | Lithocollethis spp. |
| CH | Lobesia botrana |
| CH | Ostrinia nubilalis |
| CH | Pandemis spp. |
| CH | Pectinophora gossyp. |
| CH | Phyllocnistis citrella |
| CH | Pieris spp. |
| CH | Plutella xylostella |
| CH | Scirpophaga spp. |
| CH | Sesamia spp. |
| CH | Sparganothis spp. |
| CH | Spodoptera spp. |
| CH | Tortrix spp. |
| CH | Trichoplusia ni |
| CH | Agriotes spp. |
| CH | Anthonomus |
| | grandis |
| CH | Curculio spp. |
| CH | Diabrotica balteata |
| CH | Leptinotarsa spp. |
| CH | Lissorhoptrus spp. |
| CH | Otiorhynohus spp. |

(fortgesetzt)

| AP | Kontrolle von |
|---|---|
| CH | Aleurothrixus spp. |
| CH | Aleyrodes spp. |
| CH | Aonidiella spp. |
| CH | Aphididae spp. |
| CH | Aphis spp. |
| CH | Bemisia tabaci |
| CH | Empoasca spp. |
| CH | Mycus spp. |
| CH | Nephotettix spp. |
| CH | Nilaparvata spp. |
| CH | Pseudococcus spp. |
| CH | Psylla spp. |
| CH | Quadraspidiotus spp. |
| CH | Schizaphis spp. |
| CH | Trialeurodes spp. |
| CH | Lyriomyza spp. |
| CH | Oscinella spp. |
| CH | Phorbia spp. |
| CH | Frankliniella spp. |
| CH | Thrips spp. |
| CH | Scirtothrips aurantii |
| CH | Aceria spp. |
| CH | Aculus spp. |
| CH | Brevipalpus spp. |
| CH | Panonychus spp. |
| CH | Phyllocoptruta spp. |
| CH | Tetranychus spp. |
| CH | Heterodera spp. |
| CH | Meloidogyne spp. |
| SS | Adoxophyes spp. |
| SS | Agrotis spp. |
| SS | Alabama argillaceae |
| SS | Anticarsia gemmatalis |
| SS | Chilo spp. |
| SS | Clysia ambiguella |
| SS | Crocidolomia binotalis |
| SS | Cydia spp. |
| SS | Diparopsis castanea |

(fortgesetzt)

| AP | Kontrolle von |
|---|---|
| SS | Earias spp. |
| SS | Ephestia spp. |
| SS | Heliothis spp. |
| SS | Hellula undalis |
| SS | Keiferia lycopersicella |
| SS | Leucoptera scitella |
| SS | Lithocollethis spp. |
| SS | Lobesia botrana |
| SS | Ostrinia nubilalis |
| SS | Pandemis spp. |
| SS | Pectinophora gossyp. |
| SS | Phyllocnistis citrella |
| SS | Pieris spp. |
| SS | Plutella xylostella |
| SS | Scirpophaga spp. |
| SS | Sesamia spp. |
| SS | Sparganothis spp. |
| SS | Spodoptera spp. |
| SS | Tortrix spp. |
| SS | Trichopiusia ni |
| SS | Agriotes spp. |
| SS | Anthonomus grandis |
| SS | Curculio spp. |
| SS | Diabrotica balteata |
| SS | Leptinotarsa spp. |
| SS | Lissorhoptrus spp. |
| SS | Otiorhynchus spp. |
| SS | Aleurothrixus spp. |
| SS | Aleyrodes spp. |
| SS | Aonidielia spp. |
| SS | Aphididae spp. |
| SS | Aphis spp. |
| SS | Bemisia tabaci |
| SS | Empoasca spp. |
| SS | Mycus spp. |
| SS | Nephotettix spp. |
| SS | Nilaparvata spp. |
| SS | Pseudococcus spp. |

(fortgesetzt)

| AP | Kontrolle von |
|---|---|
| SS | Psylla spp. |
| SS | Quadraspidiotus spp. |
| SS | Schizaphis spp. |
| SS | Trialeurodes spp. |
| SS | Lyriomyza spp. |
| SS | Oscinella spp. |
| SS | Phorbia spp. |
| SS | Frankliniella spp. |
| SS | Thrips spp. |
| SS | Scirtothrips aurantii |
| SS | Aceria spp. |
| SS | Aculus spp. |
| SS | Brevipalpus spp. |
| SS | Panonychus spp. |
| SS | Phyllocoptruta spp. |
| SS | Tetranychus spp. |
| SS | Heterodera spp. |
| SS | Meloidogyne spp. |
| HO | Adoxophyes spp. |
| HO | Agrotis spp. |
| HO | Alabama argillaceae |
| HO | Anticarsia gemmatalis |
| HO | Chilo spp. |
| HO | Clysia ambiguella |
| HO | Crocidolomia binotalis |
| HO | Cydia spp. |
| HO | Diparopsis castanea |
| HO | Earias spp. |
| HO | Ephestia spp. |
| HO | Heliothis spp. |
| HO | Hellula undalis |
| HO | Keiferia lycopersicella |
| HO | Leucoptera scitella |
| HO | Lithocollethis spp. |
| HO | Lobesia botrana |
| HO | Ostrinia nubilalis |
| HO | Pandemis spp. |
| HO | Pectinophora gossypiella |

(fortgesetzt)

| AP | Kontrolle von |
|---|---|
| HO | Phyllocnistis citrella |
| HO | Pieris spp. |
| HO | Plutella xylostella |
| HO | Scirpophaga spp. |
| HO | Sesamia spp. |
| HO | Sparganothis spp. |
| HO | Spodoptera spp. |
| HO | Tortrix spp. |
| HO | Trichoplusia ni |
| HO | Agriotes spp. |
| HO | Anthonomus grandis |
| HO | Curculio spp. |
| HO | Diabrotica balteata |
| HO | Leptinotarsa spp. |
| HO | Lissorhoptrus spp. |
| HO | Otiorhynchus spp. |
| HO | Aleurothrixus spp. |
| HO | Aleyrodes spp. |
| HO | Aonidiella spp. |
| HO | Aphididae spp. |
| HO | Aphis spp. |
| HO | Bemisia tabaci |
| HO | Empoasca spp. |
| HO | Mycus spp. |
| HO | Nephotettix spp. |
| HO | Nilaparvata spp. |
| HO | Pseudococcus spp. |
| HO | Psylla spp. |
| HO | Quadraspidiotus spp. |
| HO | Schizaphis spp. |
| HO | Trialeurodes spp. |
| HO | Lyriomyza spp. |
| HO | Oscinella spp. |
| HO | Phorbia spp. |
| HO | Frankliniella spp. |
| HO | Thrips spp. |
| HO | Scirtothrips aurantii |
| HO | Aceria spp. |

(fortgesetzt)

| AP | Kontrolle von |
|---|---|
| HO | Acutus spp. |
| HO | Brevipalpus spp. |
| HO | Panonychus spp. |
| HO | Phyllocoptruta spp. |
| HO | Tetranychus spp. |
| HO | Heterodera spp. |
| HO | Meloidogyne spp. |

Tabelle 3:

| Abkürzungen:<br>Acetyl-CoA-Carboxylase: ACCase<br>Acetolactatsynthase: ALS<br>Hydroxyphenylpyruvat-Dioxygenase: HPPD<br>Hemmung der Proteinsynthese: IPS<br>Hormonimitation: HO<br>Glutaminsynthetase: GS<br>Protoporphyrinogenoxidase: PROTOX<br>5-Enolpyruvyl-3-Phosphoshikimat-Synthase: EPSPS | | |
|---|---|---|
| Prinzip | Toleranz gegenüber | Pflanze |
| ALS | Sulfonylharnstoffverbin-dungen usw.*** | Baumwolle |
| ALS | Sulfonylharnstoffverbin-dungen usw. *** | Reis |
| ALS | Sulfonylharnstoffverbin-dungen usw. *** | Brassica |
| ALS | Sulfonylharnstoffverbin-dungen usw. *** | Kartoffeln |
| ALS | Sulfonylharnstoffverbin-dungen usw. *** | Tomaten |
| ALS | Sulfonylharnstoffverbin-dungen usw. *** | Kürbis |
| ALS | Sulfonylharnstoffverbin-dungen usw. *** | Sojabohnen |
| ALS | Sulfonylharnstoffverbin-dungen usw. *** | Mais |
| ALS | Sulfonylharnstoffverbin-dungen usw. *** | Weizen |
| ALS | Sulfonylharnstoffver-bindungen usw. *** | Kernobst |
| ALS | Sulfonylharnstoffver-bindungen usw. *** | Steinobst |
| ALS | Sulfonylharnstoffver-bindungen usw. *** | Zitrus |
| ACCase | +++ | Baumwolle |
| ACCase | +++ | Reis |
| ACCase | +++ | Brassica |
| ACCase | +++ | Kartoffel |
| ACCase | +++ | Tomaten |
| ACCase | +++ | Kürbis |
| ACCase | +++ | Sojabohnen |
| ACCase | +++ | Mais |

(fortgesetzt)

| Prinzip | Toleranz gegenüber | Pflanze |
|---|---|---|
| ACCase | +++ | Weizen |
| ACCase | +++ | Kernobst |
| ACCase | +++ | Steinobst |
| ACCase | +++ | Zitrus |
| HPPD | Isoxaflutol, Isoxachlotol, Sulcotrion, Mesotrion | Baumwolle |
| HPPD | Isoxaflutol, Isoxachlotol, Sulcotrion, Mesotrion | Reis |
| HPPD | Isoxaflutol, Isoxachlotol, Sulcotrion, Mesotrion | Brassica |
| HPPD | Isoxaflutol, Isoxachlotol, Sulcotrion, Mesotrion | Kartoffeln |
| HPPD | Isoxaflutol, Isoxachlotol, Sulcotrion, Mesotrion | Tomaten |
| HPPD | Isoxaflutol, Isoxachlotol, Sulcotrion, Mesotrion | Kürbis |
| HPPD | Isoxaflutol, Isoxachlotol, Sulcotrion, Mesotrion | Sojabohnen |
| HPPD | Isoxaflutol, Isoxachlotol, Sulcotrion, Mesotrion | Mais |
| HPPD | Isoxaflutol, Isoxachlotol, Sulcotrion, Mesotrion | Weizen |
| HPPD | Isoxaflutol, Isoxachlotol, Sulcotrion, Mesotrion | Kernobst |
| HPPD | Isoxaflutol, Isoxachlotol, Sulcotrion, Mesotrion | Steinobst |
| HPPD | Isoxaflutol, Isoxachlotol, Sulcotrion, Mesotrion | Zitrus |
| Nitrilase | Bromoxynil, Loxynil | Baumwolle |
| Nitrilase | Bromoxynil, Loxynil | Reis |
| Nitrilase | Bromoxynil, Loxynil | Brassica |
| Nitrilase | Bromoxynil, Loxynil | Kartoffeln |
| Nitrilase | Bromoxynil, Loxynil | Tomaten |
| Nitrilase | Bromoxynil, Loxynil | Kürbis |
| Nitrilase | Bromoxynil, Loxynil | Sojabohnen |
| Nitrilase | Bromoxynil, Loxynil | Mais |
| Nitrilase | Bromoxynil, Loxynil | Weizen |
| Nitrilase | Bromoxynil, Loxynil | Kernobst |
| Nitrilase | Bromoxynil, Loxynil | Steinobst |
| Nitrilase | Bromoxynil, Loxynil | Zitrus |
| IPS | Chloroactanilide &&& | Baumwolle |
| IPS | Chloroactanilide &&& | Reis |
| IPS | Chloroactanilid &&& | Brassica |
| IPS | Chloroactanilide &&& | Kartoffeln |
| IPS | Chloroactanilide &&& | Tomaten |
| IPS | Chloroactanilide &&& | Kürbis |
| IPS | Chloroactanilide &&& | Sojabohnen |
| IPS | Chloroactanilide &&& | Mais |
| IPS | Chloroactanilide &&& | Weizen |
| IPS | Chloroactanilide &&& | Kernobst |

(fortgesetzt)

| Prinzip | Toleranz gegenüber | Pflanze |
|---|---|---|
| IPS | Chloroactanilide &&& | Steinobst |
| IPS | Chloroactanilide &&& | Zitrus |
| HOM | 2,4-D, Mecoprop-P | Baumwolle |
| HOM | 2,4-D, Mecoprop-P | Reis |
| HOM | 2,4-D, Mecoprop-P | Brassica |
| HOM | 2,4-D, Mecoprop-P | Kartoffeln |
| HOM | 2,4-D, Mecoprop-P | Tomaten |
| HOM | 2,4-D, Mecoprop-P | Kürbis |
| HOM | 2,4-D, Mecoprop-P | Sojabohnen |
| HOM | 2,4-D, Mecoprop-P | Mais |
| HOM | 2,4-D, Mecoprop-P | Weizen |
| HOM | 2,4-D, Mecoprop-P | Kernobst |
| HOM | 2,4-D, Mecoprop-P | Steinobst |
| HOM | 2,4-D, Mecoprop-P | Zitrus |
| PROTOX | Protox-Inhibitoren /// | Baumwolle |
| PROTOX | Protox-Inhibitoren /// | Reis |
| PROTOX | Protox-Inhibitoren /// | Brassica |
| PROTOX | Protox-Inhibitoren /// | Kartoffeln |
| PROTOX | Protox-Inhibitoren /// | Tomaten |
| PROTOX | Protox-Inhibitoren /// | Kürbis |
| PROTOX | Protox-Inhibitoren /// | Sojabohnen |
| PROTOX | Protox-Inhibitoren /// | Mais |
| PROTOX | Protox-Inhibitoren /// | Weizen |
| PROTOX | Protox-Inhibitoren /// | Kernobst |
| PROTOX | Protox-Inhibitoren /// | Steinobst |
| PROTOX | Protox-Inhibitoren /// | Zitrus |
| EPSPS | Glyphosat und/oder Sulphosat | Baumwolle |
| EPSPS | Glyphosat und/oder Sulphosat | Reis |
| EPSPS | Glyphosat und/oder Sulphosat | Brassica |
| EPSPS | Glyphosat und/oder Sulphosat | Kartoffeln |
| EPSPS | Glyphosat und/oder Sulphosat | Tomaten |
| EPSPS | Glyphosat und/oder Sulphosat | Kürbis |
| EPSPS | Glyphosat und/oder Sulphosat | Sojabohnen |
| EPSPS | Glyphosat und/oder Sulphosat | Mais |
| EPSPS | Glyphosat und/oder Sulphosat | Weizen |
| EPSPS | Glyphosat und/oder Sulphosat | Kernobst |
| EPSPS | Glyphosat und/oder Sulphosat | Steinobst |
| EPSPS | Glyphosat und/oder Sulphosat | Zitrus |

(fortgesetzt)

| Prinzip | Toleranz gegenüber | Pflanze |
|---|---|---|
| GS | Gluphosinat und/oder Bialaphos | Baumwolle |
| GS | Gluphosinat und/oder Bialaphos | Reis |
| GS | Gluphosinat und/oder Bialaphos | Brassica |
| GS | Gluphosinat und/oder Bialaphos | Kartoffeln |
| GS | Gluphosinat und/oder Bialaphos | Tomaten |
| GS | Gluphosinat und/oder Bialaphos | Kürbis |
| GS | Gluphosinat und/oder Bialaphos | Sojabohnen |
| GS | Gluphosinat und/oder Bialaphos | Mais |
| GS | Gluphosinat und/oder Bialaphos | Weizen |
| GS | Gluphosinat und/oder Bialaphos | Kernobst |
| GS | Gluphosinat und/oder Bialaphos | Stein-obst |
| GS | Gluphosinat und/oder Bialaphos | Zitrus |
| *** einbezogen sind Sulfonylharnstoffverbindungen, Imidazolinone, Triazolpyrimidine, Dimethoxypyrimidine und N-Acylsulfonamide:<br>Sulfonylharnstoffverbindungen wie Chlorsulfuron, Chlorimuron, Ethamethsulfuron, Metsulfuron, Primisulfuron, Prosulfuron, Triasulfuron, Cinosulfuron, Trifusulfuron, Oxasulfuron, Bensulfuron, Tribenuron, ACC 322140, Fluzasulfuron, Ethoxysulfuron, Fluzasdulfuron, Nicosulfuron, Rimsulfuron, Thifensulfuron, Pyrazosulfuron, Clopyrasulfuron, NC 330, Azimsulfuron, Imazosulfuron, Sulfosulfuron, Amidosulfuron, Flupyrsulfuron, CGA 362622<br>Imidazolinone wie Imazamethabenz, Imazaquin, Imazamethypyr, Imazethapyr, Imazapyr und Imazamox;<br>Triazolpyrimidine wie DE 511, Flumetsulam und Chloransulam;<br>Dimethoxypyrimidine wie etwa Pyrithiobac, Pyriminobac, Bispyribac und Pyribenzoxim.<br>+++ Tolerant gegenüber Diclofop-methyl, Fluazifop-P-butyl, Haloxyfop-P-methyl, Haloxyfop-P-ethyl, Quizalafop-P-ethyl, Clodinafop-propargyl, Fenoxaprop-ethyl, Tepraloxydim, Alloxydim, Sethoxydim, Cycloxydim, Cloproxydim, Trallcoxydim, Butoxydim, Caloxydim, Clefoxydim, Clethodim.<br>&&& Chloroacetanilide wie etwa Alachlor, Acetochlor, Dimethenamid<br>/// Protox-Inhibitoren: Zum Beispiel Diphenyether wie etwa Acifluorfen, Aclonifen, Bifenox, Chlornitrofen, Ethoxyfen, Fluoroglycofen, Fomesafen, Lactofen, Oxyfluorfen; Imide wie etwa Azafenidin, Carfentrazone-ethyl, Cinidon-ethyl, Flumiclorac-pentyl, Flumioxazin, Fluthiacetmethyl, Oxadiargyl, Oxadiazon, Pentoxazone, Sulfentrazone, Imide und andere Verbindungen wie etwa Flumipropyn, Flupropacil, Nipyraclofen and Thidiazimin; sowie Fluazola und Pyraflufenethyl. | | |

**Tabelle 4**

| Liste von Beispielen transgener Pflanzen mit modifizierten Eigenschaften: | |
|---|---|
| Transgene Pflanzen | Transgen modifizierte Eigenschaften |
| Dianthus caryophyllus (Nelke)<br>Linie 66<br>[Florigene Pty. Ltd.] | Verlängerte Haltbarkeit durch reduzierte Ethylen-Akkumulation aufgrund der Expression der ACC Synthase; Sulfonylharnstoff-Herbizid Toleranz |
| Dianthus caryophyllus (Nelke)<br>Linien 4, 11, 15, 16<br>[Florigene Pty. Ltd.] | Modifizierte Blütenfarbe; Sulfonylharnstoff-Herbizid Toleranz |
| Dianthus caryophyllus (Nelke)<br>Linien 959A, 988A, 1226A, 1351A, 1363A, 1400A<br>[Florigene Pty. Ltd.] | Modifizierte Blütenfarbe; Sulfonylharnstoff-Herbizid Toleranz |

(fortgesetzt)

| Liste von Beispielen transgener Pflanzen mit modifizierten Eigenschaften: | |
|---|---|
| Transgene Pflanzen | Transgen modifizierte Eigenschaften |
| Brassica napus (Argentinischer Raps)<br>Linien 23-18-17, 23-198<br>[Monsanto Company] | Modifizierter Fettsäuregehalt im Samen |
| Zea mays L. (Mais)<br>Linien REN-ØØØ38-3 (LY038)<br>[Monsanto Company] | Erhöhter Lysingehalt |
| Transgene Pflanzen | Transgen modifizierte Eigenschaften |
| Zea mays L. (Mais)<br>Linien REN-ØØØ38-3, MON-ØØ81Ø-6 (MON-ØØ81Ø-6 x LY038)<br>[Monsanto Company] | Erhöhter Lysingehalt, Resistenz gegen den Maiszünsler; |
| Cucumis melo (Melone)<br>Linien A, B<br>[Agritope Inc.] | Verzögerte Reife durch Expression der S-Adenosylmethionin Hydrolase |
| Carica papaya (Papaya)<br>Linien 55-1/63-1<br>[Cornell University] | Resistenz gegen den Papaya Ringspot Virus (PRSV) |
| Solanum tuberosum L. (Kartoffel)<br>Linien RBMT21-129, RBMT21-350, RBMT22-082<br>[Monsanto Company] | Resistenz gegen den Colorado Kartoffelkäfer und den Kartoffelblattrollvirus (PLRV) |
| Solanum tuberosum L. (Kartoffel)<br>Linien RBMT15-101, SEMT15-02, SEMT15-15<br>[Monsanto Company] | Resistenz gegen den Colorado Kartoffelkäfer und den Kartoffelvirus Y (PVY) |
| Glycine max L. (Sojabohne)<br>Linien DD-Ø26ØØ5-3 (G94-1, G94-19, G168<br>[DuPont Canada Agricultural Products] | Modifizierter Fettsäuregehalt im Samen, insbesondere erhöhter Ölsäuregehalt |
| Glycine max L. (Sojabohne)<br>Linien OT96-15<br>[Agriculture & Agri-Food Canada] | Modifizierter Fettsäuregehalt im Samen, insbesondere reduzierter Linolensäuregehalt |
| Cucurbita pepo (Kürbis)<br>Linie ZW20<br>[Upjohn (USA); Seminis Vegetable Inc. (Canada)] | Resistenz gegen virale Infektionen, Wassermelonen Mosaik Virus (WMV) 2 und Zucchini Gelbmosaik Virus (ZYMV) |
| Cucurbita pepo (Kürbis)<br>Linie CZW-3<br>[Asgrow (USA); Seminis Vegetable Inc. (Canada)] | Resistenz gegen virale Infektionen, Gurken Mosaik Virus (CMV), Wassermelonen Mosaik Virus (WMV) 2 und Zucchini Gelbmosaik Virus (ZYMV) |
| Nicotiana tabacum L. (Tabak)<br>Linie Vector 21-41<br>[Vector Tobacco] | Reduzierter Nikotingehalt |

(fortgesetzt)

| Transgene Pflanzen | Transgen modifizierte Eigenschaften |
|---|---|
| Lycopersicon esculentum (Tomate) Linie 1345-4 [DNA Plant Technology] | Verlängerte Haltbarkeit durch reduzierte Ethylen-Akkumulation aufgrund der Expression der ACC Synthase |
| Lycopersicon esculentum (Tomate) Linie 35 1 N [Agritope Inc.] | Verzögerte Reife durch Expression der S-Adenosylmethionin Hydrolase |
| Lycopersicon esculentum (Tomate) Linie CGN-89322-3 (8338) [Monsanto Company] | Verzögerte Reife durch Expression von ACCd |
| Lycopersicon esculentum (Tomate) Linien B, Da, F [Zeneca Seeds] | Verzögertes Weichwerden ("anti-Matsch") durch eine verminderte Expression der Polygalacturonase |
| Lycopersicon esculentum (Tomate) Linie CGN-89564-2 (FLAVR SAVR) [Calgene Inc.] | Verzögertes Weichwerden ("anti-Matsch") durch eine verminderte Expression der Polygalacturonase |

Die gute Wirkung der erfindungsgemäßen Kombinationenen von Insektiziden und transgenen Pflanzen geht aus den nachfolgenden Beispielen hervor. Dabei zeigen die Kombinationen eine Wirkung, die über eine einfache Wirkungssummierung hinausgeht.

Ein synergistischer Effekt liegt bei Insektiziden und Akariziden immer dann vor, wenn die Wirkung der erfindungsgemäßen Kombinationen größer ist als die erwartete Wirkung, die für eine gegebene Kombination nach S.R. Colby, Weeds 15 (1967), 20-22 wie folgt berechnet werden kann:

Wenn

X den Abtötungsgrad, ausgedrückt in % der unbehandelten Kontrolle, beim Einsatz des Wirkstoffes A in einer Aufwandmenge von m g/ha oder in einer Konzentration von m ppm bedeutet,

Y den Abtötungsgrad, ausgedrückt in % der unbehandelten Kontrolle, beim Einsatz des Wirkstoffes B in einer Aufwandmenge von n g/ha oder in einer Konzentration von n ppm bedeutet und

Z den Abtötungsgrad, ausgedrückt in % der unbehandelten Kontrolle, beim Einsatz des Wirkstoffes C in einer Aufwandmenge von r g/ha oder in einer Konzentration von r ppm bedeutet,

E den Wirkungsgrad beim Einsatz der Wirkstoffe A und B und C in Aufwandmengen von m und n und r g/ha bedeutet
dann ist

$$E = X + Y + Z - \frac{(X \odot Y + X \odot Z + Y \odot Z)}{100} + \frac{X \odot Y \odot Z}{10\,000}$$

Ist der tatsächliche Abtötungsgrad größer als berechnet, so ist die Kombination in ihrer Abtötung überadditiv, d.h. es liegt ein synergistischer Effekt vor. In diesem Fall muss der tatsächlich beobachtete Abtötungsgrad größer sein als der aus der oben angeführten Formel errechnete Wert für den erwarteten Abtötungsgrad (E).

Beispiele

Die Erfindung wird durch die folgenden Beispiele näher erläutert, ohne sie dadurch einzuschränken.

Beispiel 1: Blattapplikation Aphis gossypii/Baumwolle

Einzeln getopfte transgene Baumwollpflanzen mit einer Lepidopterenresistenz und einer Herbizidresistenz (Linie DP444 BG/RR) werden mit dem gewünschten Produkt gegen die Baumwollblattlaus (*Aphis gossypii*) behandelt.
Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden.
Es ist dabei eine deutliche Verbesserung der Bekämpfung der Schädlinge im Vergleich zu den nicht erfindungsgemäß behandelten Kontrollpflanzen zu erkennen.

Tabelle B1-1: **Aphis gossypii - Test (Blattapplikation)**

| **Wirkstoff** | **Konzentrationin ppm** | **Abtötung in % nach 4$^d$** | |
|---|---|---|---|
| **(I-1)** | 0,16 | 0 | |
| **Fipronil** | 4 | 25 | |
| **DP 444 BG/RR**<br>CrylAc&cp4 epsps | | 0 | |
| **(I-1) + Fipronil 1 : 25 auf DP 444 BG/RR**<br>erfindungsgemäß | **0,16+4** | **gef.***<br>**80** | **ber.****<br>**25** |
| *gef. = gefundeneWirkung<br>** ber. = nach der Colby-Formel berechnete Wirkung | | | |

Beispiel 2: Blattapplikation Heliothis armigera/Baumwolle

Einzeln getopfte transgene Baumwollpflanzen mit einer Lepidopterenresistenz und einer Herbizidresistenz (Linie DP444 BG/RR) werden mit dem gewünschten Produkt gegen den Baumwollkapselwurm (*Heliothis annigera*) behandelt.
Nach der gewünschten Zeit wird die Abtötung in % bestimmt. Dabei bedeutet 100 %, dass alle Raupen abgetötet wurden; 0 % bedeutet, dass keine Raupen abgetötet wurden.
Es ist dabei eine deutliche Verbesserung der Bekämpfung der Schädlinge im Vergleich zu den nicht erfindungsgemäß behandelten Kontrollpflanzen zu erkennen.

Tabelle B2-1: **Heliothis armigera - Test (Blattapplikation)**

| **Wirkstoff** | **Konzentration in ppm** | **Abtötung in % nach 4$^d$** | |
|---|---|---|---|
| **(I-1)** | 0,032 | 50 | |
| **Abamectin** | 0,16 | 30 | |
| **Clothianidin** | 0,16 | 0 | |
| **Spinosad** | 0,16 | 20 | |
| **DP 444 BG/RR**<br>CrylAc&cp4 epsps | | 0 | |
| **(I-1) + Abamectin 1 : 5 auf DP 444 BG/RR**<br>erfindungsgemäß | **0,032 + 0,16** | **gef.***<br>**90** | **ber.****<br>**65** |

(fortgesetzt)

| Wirkstoff | Konzentration in ppm | Abtötung in % nach 4^d | |
|---|---|---|---|
| **(I-1) + Clothianidin 1 : 5 auf DP 444 BG/RR**<br>erfindungsgemäß | **0,032 + 0,16** | **gef.*** **100** | **ber.**** **50** |
| **(I-1) + Spinosad 1 : 5 auf DP 444 BG/RR**<br>erfindungsgemäß | **0,032 + 0,16** | **gef.*** **80** | **ber.**** **60** |
| *gef. = gefundeneWirkung<br>** ber. = nach der Colby-Formel berechnete Wirkung | | | |

Beispiel 3: Blattapplikation Spodoptera frugiperda/Baumwolle

Einzeln getopfte transgene Baumwollpflanzen mit einer Lepidopterenresistenz und einer Herbizidresistenz (Linie DP444 BG/RR) werden mit dem gewünschten Produkt gegen den Heerwurm (*Spodoptera frugiperda*) behandelt.

Nach der gewünschten Zeit wird die Abtötung in % bestimmt. Dabei bedeutet 100 %, dass alle Raupen abgetötet wurden; 0 % bedeutet, dass keine Raupen abgetötet wurden.

Es ist dabei eine deutliche Verbesserung der Bekämpfung der Schädlinge im Vergleich zu den nicht erfindungsgemäß behandelten Kontrollpflanzen zu erkennen.

Tabelle B3-1: **Spodoptera frugiperda - Test (Blattapplikation)**

| Wirkstoff | Konzentration in ppm | Abtötung in % nach 4^d | |
|---|---|---|---|
| **(I-1)** | 0,032 | 70 | |
| **Clothianidin** | 0,16 | 0 | |
| **DP 444 BG/RR**<br>CrylAc&cp4 epsps | | 0 | |
| **(I-1) + Clothianidin 1 : 5 auf DP 444 BG/RR**<br>erfindungsgemäß | **0,032 + 0,16** | **gef.*** **100** | **ber.**** **70** |

Tabelle B3-2: **Spodoptera frugiperda - Test (Blattapplikation)**

| Wirkstoff | Konzentration in ppm | Abtötung in % nach 6^d | |
|---|---|---|---|
| **(I-1)** | 0,032 | 15 | |
| **Imidacloprid** | 4 | 10 | |
| **DP 444 BG/RR**<br>CrylAc&cp4 epsps | | 0 | |
| **(I-1) + Imidacloprid auf DP 444 BG/RR**<br>erfindungsgemäß | **0,032 + 4** | **gef.*** **40** | **ber.**** **23,5** |
| *gef. = gefundeneWirkung<br>** ber. = nach der Colby-Formel berechnete Wirkung | | | |

Beispiel 4: Blattapplikation Spodoptera exigua/Mais

Töpfe mit je 5 transgenen Maispflanzen mit einer Lepidopteren,- Coleopteren- und/oder Herbizidresistenz werden in 2 Replikationen gegen die Rübeneule (*Spodoptera exigua*) behandelt.

Nach der gewünschten Zeit wird die Abtötung in % bestimmt. Dabei bedeutet 100 %, dass alle Raupen abgetötet

wurden; 0 % bedeutet, dass keine Raupen abgetötet wurden.

Es ist dabei eine deutliche Verbesserung der Bekämpfung der Schädlinge im Vergleich zu den nicht erfindungsgemäß behandelten Kontrollpflanzen zu erkennen.

Tabelle B4-1: **Spodoptera exigua - Test (Blattapplikation)**

| **Wirkstoff** | **Konzentration in ppm** | **Abtötung in % nach 1^d^** | |
|---|---|---|---|
| **(I-1)** | 0,16 | 0 | |
| **Clothianidin** | 4 | 0 | |
| **Imidacloprid** | 4 | 0 | |
| **VSN-BT**<br>Bt MON 810 | | 10 | |
| **HCL201 CRW2RR2xLH324**<br>Cry3Bb1&cp4 epsps | | 0 | |
| **FR1064LLxFR 2108 (Liberty Link)** Herbizidresistenz | | 0 | |
| **Wirkstoff** | **Konzentration in ppm** | **Abtötung in % nach 1^d^** | |
| **(I-1) + Clothianidin 1 : 25 auf HCL201 CRW2RR2xLH324**<br>erfindungsgemäß | **0,16+4** | **gef.***<br>**20** | **ber.****<br>**0** |
| **(I-1) + Clothianidin 1 : 25 auf FR1064LLxFR 2108**<br>erfindungsgemäß | **0,16+4** | **gef.***<br>20 | **ber.****<br>**0** |
| **(I-1) + Imidacloprid 1 : 25 auf VSN-BT**<br>erfindungsgemäß | **0,16+4** | **gef.***<br>**30** | **ber.****<br>**10** |

Tabelle B4-2: **Spodoptera exigua - Test (Blattapplikation)**

| **Wirkstoff** | **Konzentration in ppm** | **Abtötung in % nach 4^d^** |
|---|---|---|
| **(I-1)** | 0,16<br>0,032 | 0<br>0 |
| **Abamectin** | 0,16 | 35 |
| **Fipronil** | 4 | 0 |
| **Spinosad** | 0,16 | 20 |
| **VSN-RR BT**<br>CrylAb&cp4 epsps | | 40 |
| **VSN-RR**<br>cp4 epsps | | 0 |
| **VSN-BTCRW**<br>Cry1Ab&Cry3Bb1 | | 50 |
| **VSN-BT**<br>Bt MON810 | | 55 |
| **HCL201 CRW2RR2xLH324** | | |

(fortgesetzt)

| Wirkstoff | Konzentration in ppm | Abtötung in % nach 4d | |
|---|---|---|---|
| Cry3Bb1&cp4 epsps | | 0 | |
| **FR1064LLxFR 2108 (Liberty Link)** Herbizidresistenz | | 0 | |
| **(I-1)** + **Abamectin 1 : 1 auf VSN-RR BT** erfindungsgemäß | **0,16 + 0,16** | **gef.*** **80** | **ber.**** **61** |
| **(I-1) + Abamectin 1 : 1 auf VSN-RR** erfindungsgemäß | **0,16 + 0,16** | **gef.*** **80** | **ber.**** **35** |
| **(I-1) + Abamectin 1 : 1 auf VSN-BTCRW** erfindungsgemäß | **0,16 + 0,16** | **gef.*** **90** | **ber.**** **67,5** |
| **(I-1) + Abamectin 1 : 1 auf VSN-BT** erfindungsgemäß | **0,16 + 0,16** | **gef.*** **80** | **ber.**** **70,75** |
| **(I-1) + Abamectin 1 : 1 auf HCL201CRW2RR2xLH324** erfindungsgemäß | **0,16 + 0,16** | **gef.*** **90** | **ber.**** **35** |
| **(I-1) + Abamectin 1 : 1 auf FR1064LLXFR 2108** erfindungsgemäß | **0,16 + 0,16** | **gef.*** **100** | **ber.**** **35** |
| **(I-1) + Fipronil 1 : 125 auf HCL201CRW2RR2xLH324** erfindungsgemäß | **0,032 + 4** | **gef.*** **50** | **ber.**** **0** |
| **(I-1)** + **Fipronil 1 : 125 auf FR1064LLXFR 2108** erfindungsgemäß | **0,032 + 4** | **gef.*** **50** | **ber.**** **0** |
| **(I-1) + Spinosad 1 : 5 auf VSN-RR BT erfindungsgemäß** | **0,032 + 0,16** | **gef.*** **80** | **ber.**** **52** |
| **(I-1) + Spinosad 1 : 5 auf VSN-RR erfindungsgemäß** | **0,032 + 0,16** | **gef.*** **80** | **ber.**** **20** |
| **(I-1) + Spinosad 1 : 5 auf VSN-BTCRW** erfindungsgemäß | **0,032 + 0,16** | **gef.*** **90** | **ber.**** **60** |
| **(I-1) + Spinosad 1 : 5 auf HCL201CRW2RR2xLH324** erfindungsgemäß | **0,032 + 0,16** | **gef.*** **70** | **ber.**** **20** |
| **(I-1) + Spinosad 1 : 5 auf FR1064LLXFR 2108** erfindungsgemäß | **0,032 + 0,16** | **gef.*** **90** | **ber.**** **20** |
| *gef. = gefundeneWirkung<br>** ber. = nach der Colby-Formel berechnete Wirkung | | | |

Beispiel 5: Blattapplikation Spodoptera frupiperda/Mais

Töpfe mit je 5 transgenen Maispflanzen mit einer Lepidopteren-, Coleopteren- und/oder einer Herbizidresistenz werden in 2 Replikationen gegen den Heerwurm (*Spodoptera frugiperda*) behandelt.

Nach der gewünschten Zeit wird die Abtötung in % bestimmt. Dabei bedeutet 100 %, dass alle Raupen abgetötet wurden; 0 % bedeutet, dass keine Raupen abgetötet wurden.

Es ist dabei eine deutliche Verbesserung der Bekämpfung der Schädlinge im Vergleich zu den nicht erfindungsgemäß behandelten Kontrollpflanzen zu erkennen.

Tabelle B5-1: **Spodoptera frugiperda - Test (Blattapplikation)**

| Wirkstoff | Konzentration in ppm | Abtötung in % nach 1d |
|---|---|---|
| **(I-1)** | 0,16 | 0 |

(fortgesetzt)

| Wirkstoff | Konzentration in ppm | Abtötung in % nach 1d | |
|---|---|---|---|
| **Abamectin** | 0,16 | 10 | |
| **Imidacloprid** | 4 | 0 | |
| **HCL201CRW2RR x LH 324** Cry3Bb1&CP4epsps | | 0 | |
| **FR1064LLxFR 2108 (Liberty Link)** Herbizidresistenz | | 0 | |
| **(I-1) + Abamectin 1 : 1 auf FR1064LLXFR 2108** erfindungsgemäß | **0,16 + 0,16** | **gef.*** **40** | **ber.**** **10** |
| **(I-1) + Imidacloprid 1 : 25 auf HCL201CRW2RRxLH 324** erfindungsgemäß | **0,16+4** | **gef.*** **20** | **ber.**** **0** |

Tabelle B5-2: **Spodoptera frugiperda - Test (Blattapplikation)**

| Wirkstoff | Konzentration in ppm | Abtötung in % nach 4d | |
|---|---|---|---|
| **(I-1)** | 0,0064 | 0 | |
| **Spinosad** | 0,16 | 0 | |
| **VSN-RR BT** Cry1Ab&cp4 epsps | | 0 | |
| **VSN-RR** cp4 epsps | | 0 | |
| **VSN-BT** BtMON810 | | 85 | |
| **HCL201CRW2RR2xLH324** Cry3Bb1&cp4 epsps | | 0 | |
| **FR1064LLxFR 2108 (Liberty Link)** Herbizidresistenz | | 0 | |
| **(I-1) + Spinosad 1 : 5 auf VSN-RR BT** erfindungsgemäß | **0,0064 + 0,16** | **gef.*** **100** | **ber.**** **0** |
| **(I-1) + Spinosad 1 : 5 auf VSN-RR** erfindungsgemäß | **0,0064 + 0,16** | **gef.*** **65** | **ber.**** **0** |
| **(I-1) + Spinosad 1 : 5 auf VSN-BT** erfindungsgemäß | **0,0064 + 0,16** | **gef.*** **100** | **ber.**** **85** |
| **(I-1) + Spinosad 1 : 5 auf HCL201CRW2RR2xLH324** erfindungsgemäß | **0,0064 + 0,16** | **gef.*** **85** | **ber.**** **0** |
| **(I-1) + Spinosad 1 : 5 auf FR1064LLXFR 2108** erfindungsgemäß | **0,0064 + 0,16** | **gef.*** **100** | **ber.**** **0** |
| *gef. = gefundeneWirkung<br>** ber. = nach der Colby-Formel berechnete Wirkung | | | |

Beispiel 6: Drenchapplikation Spodoptera frugiperda/Mais

Die Erde der Töpfe mit je 5 transgenen Maispflanzen mit einer Lepidopteren-, Coleopteren- und/oder einer Herbizidresistenz wird mit dem gewünschten Produkt gedrencht. Dann werden die Pflanzen mit Larven des Heerwurms (*Spodoptera frugiperda*) infiziert.

Nach der gewünschten Zeit wird die Abtötung in % bestimmt. Dabei bedeutet 100 %, dass alle Raupen abgetötet wurden; 0 % bedeutet, dass keine Raupen abgetötet wurden.

Es ist dabei eine deutliche Verbesserung der Bekämpfung der Schädlinge im Vergleich zu den nicht erfindungsgemäß behandelten Kontrollpflanzen zu erkennen.

Tabelle B6-1: **Spodoptera frugiperda - Test (Drenchapplikation)**

| **Wirkstoff** | **Konzentration in ppm** | **Abtötung in % nach 1d** | |
|---|---|---|---|
| **(I-1)** | 20 | 30 | |
| **Abamectin** | 4 | 0 | |
| **HCL201CRW2RR x LH 324** Cry3Bb1&CP4epsps | | 0 | |
| **(I-1) + Abamectin 5 : 1 auf HCL201CRW2RRxLH 324** erfindungsgemäß | **20+4** | **gef.*** **60** | **ber.**** **30** |
| *gef. = gefundeneWirkung<br>** ber. = nach der Colby-Formel berechnete Wirkung | | | |

Tabelle B6-2: **Spodoptera frugiperda - Test (Drenchapplikation)**

| **Wirkstoff** | **Konzentration in ppm** | **Abtötung in % nach 3d** | |
|---|---|---|---|
| **(I-1)** | 20 | 45 | |
| **Imidacloprid** | 4 | 0 | |
| **HCL201CRW2RR x LH 324** Cry3Bb1&CP4epsps | | 0 | |
| **(I-1) + Imidacloprid 5 : 1 auf HCL201CRW2RRxLH 324** erfindungsgemäß | **20+4** | **gef.*** **65** | **ber.**** **45** |
| *gef. = gefundeneWirkung<br>** ber. = nach der Colby-Formel berechnete Wirkung | | | |

Tabelle B6-3: **Spodoptera frugiperda - Test (Drenchapplikation)**

| **Wirkstoff** | **Konzentration in ppm** | **Abtötung in % nach 4d** |
|---|---|---|
| **(I-1)** | 20<br>4 | 50<br>0 |
| **Abamectin** | 4 | 0 |
| **Clothianidin** | 4 | 10 |
| **Fipronil** | 20 | 0 |

(fortgesetzt)

| Wirkstoff | Konzentration in ppm | Abtötung in % nach 4d | |
|---|---|---|---|
| **Spinosad** | 4 | 0 | |
| **VSN-RR BT** Cry1Ab&cp4 epsps | | 55 | |
| **VSN-RR** cp4 epsps | | 0 | |
| **VSN-BTCRW** Cry1Ab&Cry3Bb1 | | 30 | |
| **VSN-BT** Bt MON810 | | 40 | |
| **HCL201CRW2RR2xLH324** Cry3Bb1&cp4 epsps | | 0 | |
| **(I-1) + Abamectin 1 : 1 auf VSN-RR BT** erfindungsgemäß | **4+4** | **gef.*** **90** | **ber.**** **55** |
| **(I-1) + Abamectin 1 : 1 auf VSN-RR** erfindungsgemäß | **4+4** | **gef.*** **60** | **ber.**** **0** |
| **(I-1) + Abamectin 1 : 1 auf VSN-BT** erfindungsgemäß | **4+4** | **gef.*** **70** | **ber.**** **40** |
| **(I-1) + Clothianidin 1 : 1 auf VSN-BT** erfindungsgemäß | **4+4** | **gef.*** **70** | **ber.**** **46** |
| **(I-1) + Fipronil 1 : 1 auf VSN-RR** erfindungsgemäß | **20+20** | **gef.*** **90** | **ber.**** **50** |
| **(I-1) + Fipronil 1 : 1 auf HCL201 CRW2RR2xLH324** erfindungsgemäß | **20+20** | **gef.*** **80** | **ber.**** **50** |
| **(I-1) + Spinosad 1 : 1 auf VSN-RR** erfindungsgemäß | **4+4** | **gef.*** **60** | **ber.**** **0** |
| **(I-1) + Spinosad 1 : 1 auf VSN-BTCRW** erfindungsgemäß | **20+4** | **gef.*** **80** | **ber.**** **65** |
| **(I-1) + Spinosad 1 : 1 auf VSN-BT** erfindungsgemäß | **4+4** | **gef.*** **60** | **ber.**** **40** |
| **(I-1) + Spinosad 1 : 1 auf HCL201CRW2RR2xLH324** erfindungsgemäß | **4+4** | **gef.*** **70** | **ber.**** **0** |
| *gef. = gefundeneWirkung<br>** ber. = nach der Colby-Formel berechnete Wirkung | | | |

## Patentansprüche

1. Verfahren zur Verbesserung der Nutzung des Produktionspotentials einer transgenen Pflanze, **dadurch gekennzeichnet, dass** Schädlinge durch eine Kombination von Insektiziden und einer transgenen Pflanze bekämpft werden, wobei die Pflanze mit einer wirksamen Menge einer Mischung aus mindestens einer Verbindung der Formel (I)

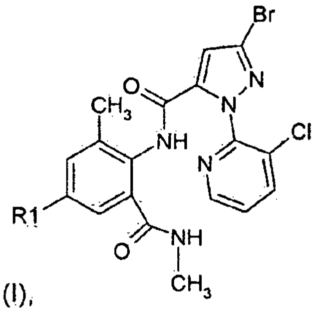

(I),

wobei $R^1$ für Chlor oder Cyano steht,
und mindestens einer Verbindung der Gruppe (II), ausgewählt aus
Abamectin, Spinosad, Beta-Cyfluthrin
mittels Blatt- oder Drenchanwendung behandelt wird, und wobei die transgene Pflanze mindestens ein Fremdgen, welches ein Bt-Toxin codiert, enthält und wobei es sich bei dem Fremdgen um ein Gen oder Genabschnitt ausgewählt aus cry1Ab oder cry1Ac handelt.

2. Verfahren gemäß Anspruch 1, **dadurch gekennzeichnet, dass** $R^1$ für Chlor steht.

3. Verfahren nach einem der Ansprüche 1 oder 2, **dadurch gekennzeichnet, dass** es sich bei der Verbindung aus der Gruppe (II) um Beta-Cyfluthrin handelt.

4. Verfahren nach einem der Ansprüche 1 bis 3, **dadurch gekennzeichnet, dass** es sich bei der transgenen Pflanze um eine Gemüse-, Mais-, Soja-, Baumwoll-, Tabak-, Reis-, Kartoffel-, Sonnenblumen-, Raps- oder Zuckerrübensorte handelt.

5. Verfahren nach einem der Ansprüche 1 bis 4, wobei die transgene Pflanze neben den Genen für ein oder mehrere Bt-Toxine Gene zur Expresssion eines Protease- bzw. Peptidase-Inhibitors, von Herbizidresistenzen gegen Glufosinate oder Glyphosate durch Expression des pat- oder bar-Gens oder zur Ausbildung von Nematoden-, Pilz, oder Virusresistenzen durch Expression einer Glucanase, Chitinase enthalten oder exprimieren.

## Claims

1. Method for improving the utilization of the production potential of a transgenic plant, **characterized in that** pests are controlled by a combination of insecticides and a transgenic plant, where the plant is treated with an effective amount of a mixture comprising at least one compound of the formula (I)

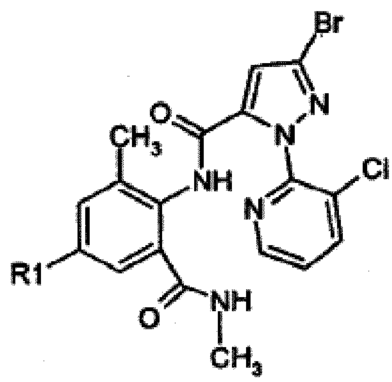

(I),

where $R^1$ represents chlorine or cyano,
and at least one compound of the group (II) selected from

abamectin, spinosad, beta-cyfluthrin,
by means of foliar or drenching application, and where the transgenic plant comprises at least one foreign gene coding for a Bt toxin, and where the foreign gene is a gene or gene section selected from cry1Ab or cry1Ac.

2. Method according to Claim 1, **characterized in that** $R^1$ represents chlorine.

3. Method according to either of claims 1 and 2, **characterized in that** the compound of group (II) is beta-cyfluthrin.

4. Method according to any of Claims 1 to 3, **characterized in that** the transgenic plant is a vegetable, maize, soya bean, cotton, tobacco, rice, potato, sunflower, rape or sugar beet variety.

5. Method according to any of Claims 1 to 4 where the transgenic plant comprises or expresses, in addition to the genes for one or more Bt toxins, genes for the expression of a protease or peptidase inhibitor, of herbicide resistances against glufosinate or glyphosate by expression of the pat or bar gene or for developing nematode, fungus or virus resistances by expression of a glucanase and/or chitinase.

## Revendications

1. Procédé pour l'amélioration de l'exploitation du potentiel de production d'une plante transgénique, **caractérisé en ce qu'**on lutte contre des ravageurs en utilisant une combinaison d'insecticides et d'une plante transgénique, la plante étant traitée par une quantité efficace d'un mélange d'au moins un composé de formule (I)

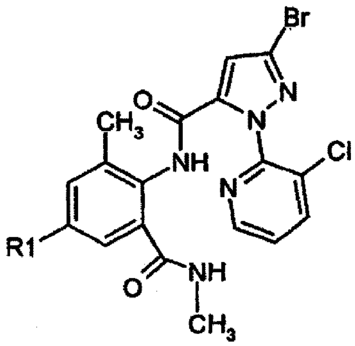

(I),

dans laquelle $R^1$ représente un atome de chlore ou le groupe cyano,
et d'au moins un composé du groupe (II), choisi parmi
l'abamectine, le spinosad, la béta-cyfluthrine,
par l'application foliaire ou l'application par pulvérisation, et la plante transgénique contenant au moins un gène étranger qui code pour une toxine de Bt, et pour ce qui est du gène étranger il s'agit d'un gène ou fragment de gène choisi parmi cry1Ab ou cry1Ac.

2. Procédé selon la revendication 1, **caractérisé en ce que** $R^1$ représente un atome de chlore.

3. Procédé selon l'une quelconque des revendications 1 ou 2, **caractérisé en ce que** pour ce qui est du composé du groupe (II) il s'agit de la béta-cyfluthrine.

4. Procédé selon l'une quelconque des revendications 1 à 3, **caractérisé en ce que** pour ce qui est de la plante transgénique il s'agit d'un type de légume, maïs, soja, coton, tabac, riz, pomme de terre, tournesol, colza ou betterave sucrière.

5. Procédé selon l'une quelconque des revendications 1 à 4, dans lequel outre des gènes codant pour une ou plusieurs toxines de Bt, la plante transgénique contient ou exprime des gènes codant pour l'expression d'un inhibiteur de protéase ou de peptidase, de résistance à des herbicides vis-à-vis du glufosinate ou du glyphosate par expression du gène pat ou bar ou pour l'élaboration de résistances à des nématodes, des champignons ou des virus par expression d'une glucanase, d'une chitinase.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03015519 A
- WO 04067528 A
- WO 05048711 A
- WO 05107468 A
- WO 06007595 A
- WO 06068669 A
- EP 0221044 A
- EP 0131624 A
- US 5723765 A
- US 5808034 A
- WO 9535031 A
- US 6072105 A
- US 5322938 A
- EP 0485506 B


### In der Beschreibung aufgeführte Nicht-Patentliteratur


- The Pesticide Manual. British Crop Protection Council, 2003
- Transgenic plants. **WILLMITZER et al.** Biotechnology, A Multivolume Comprehensive Treatise. VCH, 1993, vol. 2, 627-659
- **MCCORMICK et al.** *Plant Cell Reports,* 1986, vol. 5, 81-84
- **SAMBROOK et al.** Molecular Cloning: A Laboratory Manual. Cold Spring Harbor Laboratory Press, 1989
- **WINNACKER.** Gene und Klone. VCH, 1996
- **CHRISTOU.** *Trends in Plant Science,* 1996, vol. 1, 423-431
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J.,* 1991, vol. 1, 95-106
- **CRICKMORE et al.** *Microbiol. Mol. Biol. Rev.,* 1998, vol. 62, 807-812
- **BARTON et al.** *Plant Physiol.,* 1987, vol. 85, 1103-1109
- **VAECK et al.** *Nature,* 1987, vol. 328, 33-37
- **FISCHHOFF et al.** *Bio/Technology,* 1987, vol. 5, 807-813
- **PRIETRO-SAMSONÓR et al.** *J. Ind. Microbiol. & Biotechn.,* 1997, vol. 19, 202
- **H. AGAISSE ; D. LERECLUS.** *J. Bacteriol.,* 1996, vol. 177, 6027
- **ISHIDA, Y. ; SAITO, H. ; OHTA, S. ; HIEI, Y. ; KOMARI, T. ; KUMASHIRO, T.** High efficiency transformation of maize (Zea mayz L.) mediated by Agrobacterium tumefaciens. *Nature Biotechnology,* 1996, vol. 4, 745-750
- **WINNACKER-KÜCHLER.** Chemische Technologie. C. Hauser Verlag, 1986, vol. 7
- **VAN FALKENBERG.** Pesticides Formulations. Marcel Dekker N.Y, 1972
- **MARTENS.** Spray Drying Handbook. G. Goodwin Ltd, 1979
- **WATKINS.** Handbook of Insecticide Dust Diluents and Carriers. Darland Books
- **V. OLPHEN.** Introduction to Clay Colloid Chemistry. J. Wiley & Sons
- **MARSDEN.** Solvents Guide. Interscience, 1950
- Detergents and Emulsifiers Annual. MC Publ. Corp,
- **SISLEY ; WOOD.** Encyclopedia of Surface Active Agents. Chem. Publ. Co. Inc, 1964
- **SCHÖNFELDT.** Grenzflächenaktive Äthylenoxidaddukte. Wiss. Verlagsgesell, 1967
- **WINNACKER-KÜCHLER.** Chemische Technologie. C. Hanser Verlag, 1986, vol. 7
- **S.R. COLBY.** *Weeds,* 1967, vol. 15, 20-22